(19) **Europäisches Patentamt**

**European Patent Office**

**Office européen des brevets**

(11) **EP 1 300 999 A1**

(12) **EUROPEAN PATENT APPLICATION**

(43) Date of publication:
**09.04.2003 Bulletin 2003/15**

(51) Int Cl.[7]: **H04L 25/02**

(21) Application number: **01830632.4**

(22) Date of filing: **05.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Siemens Information and Communication Networks S.p.A.**
**20126 Milano (IT)**

(72) Inventors:
• **Maddiotto, Massimo**
**20050 Verano Brianza (IT)**

• **Spagnolini, Umberto**
**20046 Biassono (IT)**

(74) Representative: **Giustini, Delio**
**Siemens Information and Communication Networks S.p.A.,**
**Palazzo Gorky**
**Via Monfalcone, 1**
**20092 Cinisello Balsamo (IT)**

(54) **Channel estimation**

(57) The invention discloses a method for under-parameterizing the channel estimate in UMTS/GSM radiomobile Base Station Receivers exploiting $M$-antennas either in space diversity or closely-spaced. A Least Square (LS) space-time channel matrix $\mathbf{H}_{LS}$ is firstly estimated for $K$ active users and then spatially and temporally pre-whitened with a spatial noise covariance matrix $\mathbf{R}_{ns}$ and a midamble correlation matrix $\mathbf{R}_{xx}$, respectively. The whitened elements of $\mathbf{H}_{LS}$ are so describable by means of a relevant statistical distribution of the amplitudes. In time slotted GSM/CDMA systems the spatial noise covariance matrix $\mathbf{R}_{ns}$ is averaged on $NS$ successive time slots, depending on the stationariness of the channel and the permissible mobile speed. A suitable classification variable and a respective classification set are both determined either for single-slot or multislot statistical sample. A discriminating threshold $S$ which minimizes the probability of uncorrect classification is iteratively estimated, together with the statistical parameters of the useful and noise subset, staring from an arbitrary initial probability an element belong to the useful subset. Rayleigh, Exponential, Chi-squared, Erlang, and Gamma distributions are all usable. Classification generates a space-time mask matrix which is empirically adjusted to perform deep-temporal merging through the $NS$ multislot and spatial merging through the $M$ antennas. By effect of the final mask application the channel matrix $\mathbf{H}_{LS}$ assumes a band configuration $\mathbf{H}_{STB}$ by which if a predetermined percentage of the useful elements relevant to all the M antennas at the same sample-time is greater than a fixed value, i.e. 30%, depending on the distance between two adjacent antennas, all the elements relevant to said sample-time are taken as useful too while the remaining are zeroed. A suitable Base Station receiver exploits the band channel matrix $\mathbf{H}_{STB}$ to jointly ZF-BLE/MMSE detect the transmitted data (fig.39).

**BASE STATION RECEIVER**
(Reduced-complexity S-T Channel estimator and Data Detector)

**Fig.39**

**Description**

**FIELD OF THE INVENTION**

The present invention is referred to the field of the advanced cellular telephony systems and more precisely to a band masking method of space-time channel matrices in mobile communication systems.

**BACKGROUND ART**

Background art is considered in view of the aim of the present invention which is that to achieve complexity reduction in channel estimation. As known, Maximum Likelihood (ML) Channel estimation is performed by minimizing Mean Square Error (MSE) between the observed variables in correspondence of the reception of a training sequence and those calculated, under certain hypotheses on the noise statistics, by using a channel model in conjunction with said training sequence stored in the receiver. A complexity reduced receiver in comparison with a full complexity receiver shows improved channel estimation and a simplified subsequent data detection. An increase of the complexity in channel estimation is mainly due to the attempts of better exploiting the intrinsic physical behavior of the channel, specially in complex systems like the most recent proposed ones based on Code Division Multiple Access (CDMA) techniques. Mostly of the traditional GSM Base Stations (BSs) exploit tri-sectorial antennas for allocating in each sector an user at a time on a single channel characterized by Frequency Division Multiple Access (FDMA) and Time Division Multiple Access (TDMA), with Frequency Division Duplexing (FDD) for two-way communications. Due to the dispersive length $W$ of the temporal channel, $W$ samples of the user baseband response shall be considered in the estimation and the complexity is about of $W$ unknown parameters to be estimate. A net improvement in channel estimation in presence of inter-cell interferents has been obtained in uplink by supplying the Base Stations (BSs) with directive arrays able to exploit spatial other than temporal dimension (the so-called smart antennas). The improvement is mainly due to a beamforming suitable for detecting and rejecting cochannel interferents coming from the neighbouring cells. An alternative way to improve the channel estimation and data detection is that to exploits set of non-closely spaced antennas (spaced more than $\lambda/2$); this arrangements is known as space diversity reception and the improvement is due to the uncorrelated fading on the various signals which are opportunely summed up by the receiver. In comparison to the traditional GSM receivers the ones equipped with set of $M$ antennas have to estimate $MW$ unknown parameters, and the complexity increases by $M$ times consequently.

Third generation Universal Mobile Telecommunication Systems (UMTS) add up further improvement in data transmission; in this systems the maximum permissible bit-rate is increased by a trade-off between the bit-rate and the number $K$ of simultaneous users allocated on the same CDMA channel. As known, CDMA technique is implemented convolving each oversampled data bit with a pseudo-noise spread sequence, Q-chips long, temporarily assigned by the network to both a so-called Resource Unit RU (i.e. the Mobile Station MS) and the BS for transmitting and receiving packet data. Ideal spread sequences are each other orthogonal, that means a generic sequence is perfectly recovered at the output of a matched filter, while the same sequence generates noise at the output of a filter matched to another sequence. The original frequency band of data symbol is enlarged to cover the overall transmission band, and the original information scattered consequently. The orthogonal property has to be also possessed from the midambles which are not subjected to spreading code but nevertheless shall make the $K$ users each other distinguishable in uplink, as will be detailed later on. As far as concerns the channel estimation in UMTS Base Stations supplied with traditional antennas, the complexity of the estimation is about $KW$ unknown parameters to be estimated during the burst time, while for BS supplied with set of $M$ antennas the complexity increases to $MKW$ unknown parameters.

Valid background art which clarifies, if not otherwise provided for, that the increased complexity has adverse effect on channel estimation and successive data detection is constituted by the article [REF. 1] of B. Steiner, P. Jung, titled: "Optimum and Suboptimum Channel Estimation for the Uplink of CDMA Mobile Radio Systems with Joint Detection", Eur. Trans. Telecommun. Related Technol. (ETT), Special Issue on "Multiple access in radio communications networks", Vol. 5, pp. 39-50, 1994. The cited article says that as far as concerns midamble sequences and consequent channel estimation in CDMA systems, because of point-to-multipoint transmission in downlink direction (BS versus RUs) and multipoint-to-point transmission in uplink (RUs versus BS) an asymmetric scenario is recognizable at the on-air interface. More precisely, a unique midamble has to be transmitted in downlink towards the $K'$ RUs, while the $K$ RUs simultaneously transmitting in uplink (not necessarily equal to $K'$) must use $K$ different midambles, each other orthogonal, in order to be recognizable at the BS after preliminary synchronization. In that the channel estimation task is more expensive at the Base Station side and can be further complicated by introducing a set of antennas for the aforementioned reasons. The article of [REF. 1] discloses that the $K$ orthogonal midambles for uplink are obtainable through as many phase shifts of a unique periodic sequence having period $P=KW$ chips, where $W$ is the maximum significant time dispersion of the estimating channel. Obviously the longer is the midamble the shorter is payload, assuming the burst length unchanged, and spectral efficiency is poorer consequently.

Being the complexity reduction the aim of the present invention, the uplink channel estimation is only considered in the following disclosure. Complexity reduction can take advantage from powerful DSP processors included in the BS receivers. The article of [REF. 1] points out that that the ML estimation is unbiased because the channel model is full-dimensional, to say it includes all the unknown parameters which are needed to describe the channel without any a-priori hypothesis on the channel structure. The price to be paid for the unbiasedness of the estimation in comparison with the biased estimation performed by a filter matched to the channel is an S/N degradation of the estimated elements. Obviously the channel estimation is only possible when the number $U$ of unknown parameters (the channel coefficients of the FIRs modeling the channels) does not exceed the number $N$ of the chips of the midamble sequence.

A biased channel estimation algorithm shall exploit a subset only of the full-dimensional channel parameters, avoiding the redundancy of the former model and allowing a noiseless estimation under contained increasing of the error in the estimated parameters. The theoretical possibility to disclose a channel with a reduced set of useful parameters is inferable from the channel models described in the Recommendation **GSM 5.05** issued from European Telecommunication Standard Institute (ETSI). These models are nevertheless only temporal and represent the channel by means of a certain number of time discretized Channel Impulse Responses (CIRs). Most recent models which best support beamforming algorithms are referred to the COST-259 Directional Channel Model (DCM). This is a stochastic channel model for Space-Time (S-T) systems that includes both azimuthal and temporal dispersions. The aforementioned models take into account for Rayleigh flat and selective fading, shadow fading, Line Of Sight (LOS) path loss, Doppler effect, etc.

Trade-off between noisy and accuracy in the estimate has been emphasized in the European patent application EP 01830291.9 filed in the name of the same Applicant SIEMENS ICN, designating as inventors: Vincenzo DEL BELLO, Monica NICOLI, Umberto SPAGNOLINI. The content of the patent application has been subsequently disclosed in the article [REF. 2] of Monica NICOLI and Umberto SPAGNOLINI, titled "REDUCED-RANK CHANNEL ESTIMATION AND RANK ORDER SELECTION FOR CDMA SYSTEMS", Proc. IEEE International Conference on Communications (ICC'01), May 2001 which is incorporated by reference. The article of [REF. 2] states the following parsimony criterion that the channel estimation should be inspired to; "It doesn't need estimate more parameters than the strict necessary". A first particular implementation of this principle was the subject matter of the former invention, while a quite different implementation of the same principle is the subject matter of the invention disclosed in the present patent application. Basing on the parsimony criterion the accuracy to which a channel estimate can be performed using a known training sequence inversely depends (approximately) on the ratio between the number $L_{unknown}$ of parameters to be estimated and the length $L_{training}$ of the training sequence, being said parameters, for example, taps of temporal FIR filters. Recurring to training sequences very length it should be possible estimate the $L_{unknown}$ parameters near exactly, because the variance of the estimation decreases. Choosing to estimate a lower number of parameters ($L'_{unknown} < L_{unknown}$) the estimate should be run into an error, also termed biasing (polarization), due to the underparameterization of the channel. Nevertheless in this event the estimation of the remaining parameters should be made better, because the ratio $L'_{unknown}/L_{training}$ is lower than $L_{unknown}/L_{traning}$. The full-dimensional estimation of the channel matrix, named **H** or **H**$_{LS}$ indifferently in the following, requires calculation of $K \times M \times W$ parameters, whose meaning has been already introduced, while a reduced-dimensional estimation requires a lower number depending on the skill in the exploitation of the a-priori information about the space-time propagation features along the radio path.

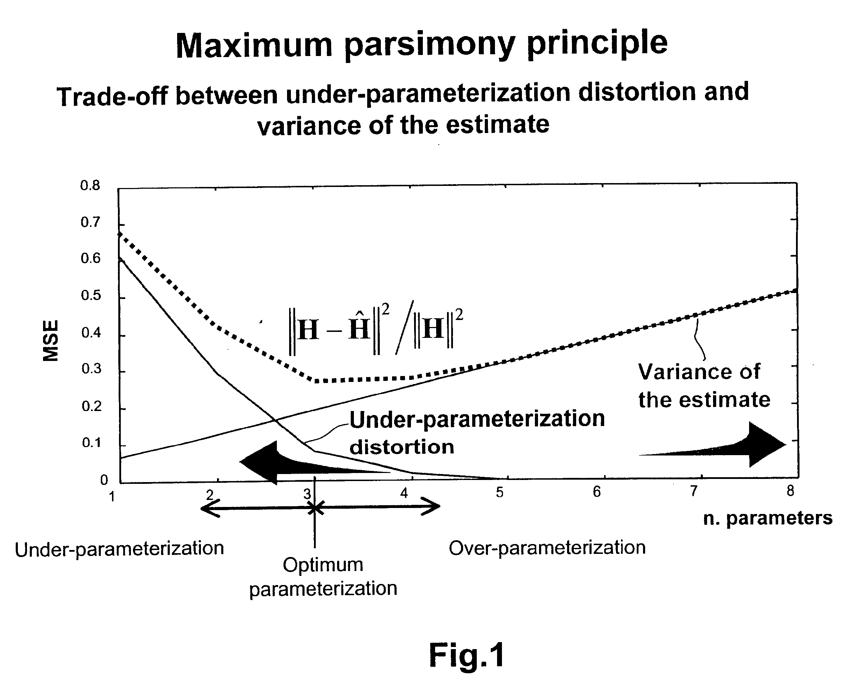

**Fig.1** graphically shows the parsimony principle relatively to a hypothetical RF scenario. The abscissa reproduces a scale proportional to the parameters to be estimated (without limitation the rank of channel matrix) and the ordinate the MSE relative error $\|\mathbf{H}\text{-}\hat{\mathbf{H}}\|^2/\|\mathbf{H}\|^2$ representing the accuracy of the estimate, being $\hat{\mathbf{H}}$ the estimated channel matrix. Considering the hypothetical RF scenario upon which the fig.1 is based, the minimum MSE is obtained in correspondence of a parsimonious estimation using 3/8 of the maximum number of parameters. The MSE on the upper curve is the sum of two terms: the distortion error, that is large for low parameterization and depends on the characteristics of the propagation channel (delay/angle spreads, number of diffusive clusters, etc.), and the noise that increases with parameterization and depends on the interference level, other than the increasing of the ratio $L_{unknown}/L_{training}$.

The parsimony criterion implementation in the design of a multi-user receiver for uplink TD-CDMA involves some practical implications that could at first-sight discourage the design of a reduced complexity receiver. In fact, the parsimonious channel estimation seems not so parsimonious like its wording indicates, that because a full-dimensional estimation of the channel matrix **H**$_{LS}$ (**H**$_{Least Squares}$) is a preliminary condition essential in any case to the successive reduction step. Nonetheless in spite of a slight increment in the computational complexity and the introduction of some grade of polarization, a considerable performance is pursued as far as concerns precision of the estimate and simplification in channel modeling. For this aim both the articles of [REF. 1] and [REF. 2] underline that an imperfect channel estimation degrades the successive data detection, specially when digital receivers adopt Joint Detection (JD) to counterfeit Multiple Access Interference (MAI) intrinsic in CDMA systems. As known, MAI during estimation and/or detection is due to many causes, i.e. intercell interferences, selective multipath fading (Rayleigh), imperfect chip synchronization, imperfect choice of coding sequences, which together concur to drive both the midamble sequences and the CDMA signatures (convolution between impulse responses of semi-burst data and orthogonal spreading sequences) no more orthogonal each other, so that each user is interfered from the other ones and in its turn acts like an interferer for the others.

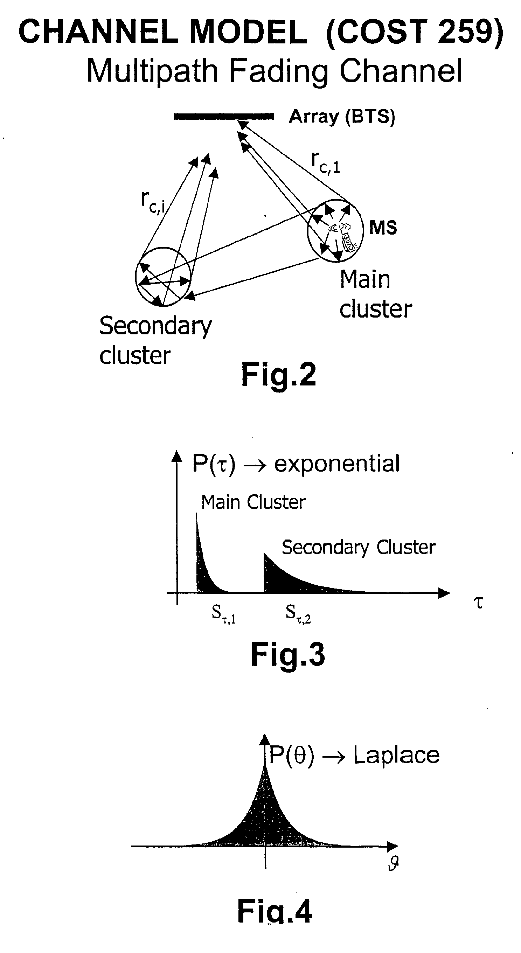

Because of the Parsimony principle is strictly connected to the channel modeling, the COST-259 modeling needs to be briefly discussed with reference to the Figures 2, 3, 4 and 5. The following four radio environments have been proposed: Generalized Typical Urban (GTU), Generalized Bad Urban (GBU), Generalized Rural Area (GRA), and Generalized Hill Terrain (GHT). GTU channel has high time dispersion and low angular dispersion. GBU channel has high both the dispersions. GRA channel has low both the dispersions. GHT channel has low the time dispersion and high the angular dispersion.

With reference to the Directional Channel Model depicted in **fig.2** it can be argued that the channel response depends on N independent local scatters (clusters), each described by multiphats with associated amplitude, delay and azimuth. All the cluster parameters are independent random variables; the probability density functions are assigned according to the outlined propagation environment. In addition to the line-of-sight cluster (i.e. the Main cluster) there are some other clusters (Secondary clusters), their numbers are Poisson distributed, although for the sake of simplicity a main and a Secondary clusters are only depicted in fig.2. Considering a directive array of antennae having a steering vector $\mathbf{a}(\theta)$, being $\theta$ the incidence angle between a planar wave and the direction of an Uniform Linear Array (ULA), under the unlimiting hypothesis that only one mobile station is transmitting, the channel impulse response estimable from a directive array is:

$$\mathbf{h}(t) = \sum_{c=1}^{Nc} \sum_{i=1}^{Nr(c)} a_{c,i} \, \mathbf{a}(\theta_{c,i}) g(t, \tau_{c,i}) \qquad \text{Eq. 1}$$

where: $c$ indicates the actual cluster; $N_c$ the number of clusters; $N_r$ the number of rays which the cluster reflects towards the BTS; $\theta_{c,i}$ is a relevant azimuthal direction; $\tau_{c,i}$ is the delay of ray $r_{c,i}$, and $g(t)$ is the transmission pulse filtered by the reception filter.

**Fig.3** shows a temporal power distribution $P(\tau)$ of the channel depicted in fig.2, $P(\tau)$ has exponential decreasing for each relevant cluster and $S\tau,1$, $S\tau,2$ represent the time dispersion of main and secondary cluster respectively.

**Fig.4** shows an azimuthal power distribution $P(\theta)$ relative to a cluster of the channel depicted in fig.2. $P(\theta)$ is a Laplace distribution decreasing with $\theta$.

**Fig.5** provides an alternative representation of the channel depicted in fig.2 relative to the GTU, GBU, GHT, and GRA channels. Depictions concern Power Delay Angle (PDA) diagrams having in abscissa the Direction Of Arrival (DOA) values in degrees and in ordinate the Time Of Arrival (TOA) values in µs. The resolution is limited both temporally from the UMTS frequency band (near 4 MHz) and spatially from the number of the directive array elements *(M* = 8).

**OUTLINED TECHNICAL PROBLEM**

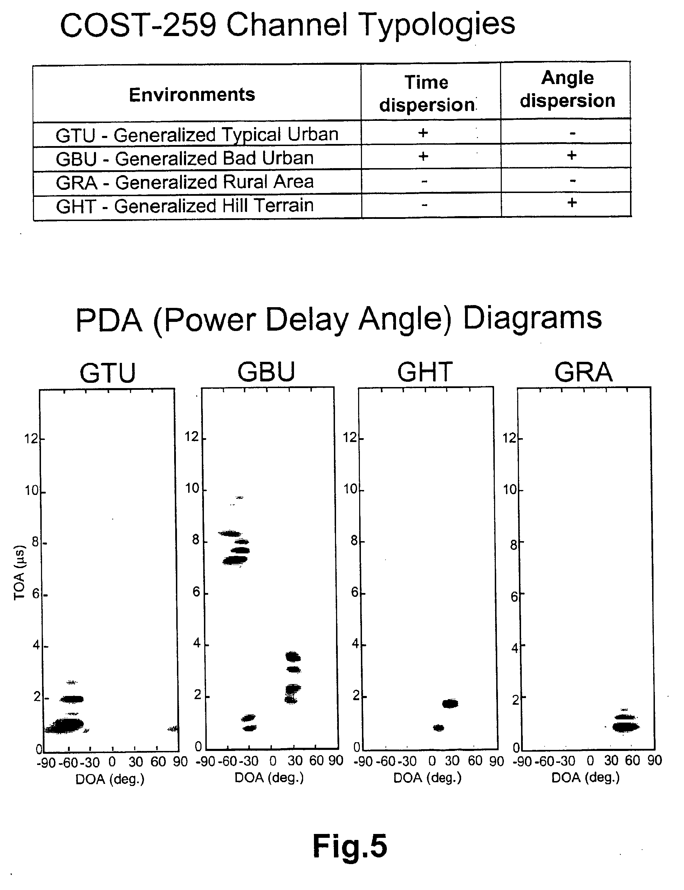

The problem of channel estimation with complexity reduction faced in the cited EP 01830291.9 patent application was prevalently addressed to the radio environment scenario depicted in fig.2 in which the contribute of the various clusters seems more immediate than PDA diagrams of fig.5. In fact, the scenario of fig.2 suggests a limitation of the full-rank channel matrix to the only most significant eigenvectors representing in some ways "to be determined" the most significant clusters. For this aim the claim 1 of the aforementioned application recites approximately as in the following:

"A Base Station receiver connected to a directional array of *M* antennas for receiving burst of data from *K* mobile stations of a cellular telephony system, the receiver having: ..... means suitable for carrying out a full-dimensional multi-channel parameters estimation of a space-time channel model affected by AWGN noise and spatial interference, and means for multi-user detection in presence of noise and interference....., *characterized in that* said multi-channel parameters estimation means further includes:

- reduction-complexity means for re-estimating said full-dimensional space-time channel model with a reduced set of re-estimated parameters in order to obtain one or more cascades, each cascade including a beamformer and a temporal FIR filter, being said cascades decoupled each other and their numbers depending on the specific user;
- reduction-complexity control means arranged for limiting the re-estimation to a number $r_k$ of said cascades for each of the *K* users, $r_k$ being chosen dynamically as the number of independent cascades that minimizes the redundancy of the full-dimensional space-time channel model according to the information theory criterion (Minimum Description Length cited in the disclosure)".

Clearly each of said cascade takes into account for spatial and temporal dispersion of a single cluster of the ones the channel of fig.2 is composed with. The approximation with realistic propagation channel model COST-259 for UTRA-TDD (UMTS Terrestrial Radio Access - TDD) holds $r_k$ values spanning half the whole range. Simulation results have proven that the adaptive RR estimate in comparison with Full-Rank estimate has a lower normalized MSE versus SNR/SIR (Signal to Noise Ratio / Signal to Interference Ratio) in the whole dB range.

Although the performances of the adaptive Reduced Rank receiver are good, the inventors were convinced that further improvements could be achieved whether some other ways were explored to face the technical problem of under-parameterizing the full-complexity channel model. That because the channel estimation means of the aforementioned RR receiver are complicated because of the particular eigenvectors decomposition of the Full-Rank channel matrix, and the MDL (Minimum Description Length) re-estimate for reducing the dimension to meet the effective spatial and temporal characteristics of the only relevant clusters. A desirable goal in the outlined technical field should be the search of news reduction-complexity means simpler than the preceding ones and equally adaptive to the change of the radiofrequency environment. **Fig.5** gives a hint in this direction clearly showing that the energy is variously spotted on the surface of the PDA diagrams and rapidly vanishes outside the spots, so that the majority of the surface is void. The spotted diagrams of fig.5 are consistent with the preceding Figures 2, 3, and 4 where it can be argued that a high temporal dispersion depends on the number of involved clusters, but as far as concerns the single cluster the time dispersion is limited, so that the various samples are space-time correlated.

## PURPOSES OF THE INVENTION

Purpose of the present invention is that to indicate an alternative solution to the problem of under-parameterizing the Space-Time channel estimate. The proposed solution must be able to simplify the known under-parameterization strategies, in particular those based on the rank reduction of the channel matrix. The proposed solution has to further reduce the MSE estimating error and has to be adaptive with the change of the radiofrequency environment.

A well appreciated requirement of the invention should be that to provide a simple criterion for selecting the only significant elements of the full-dimensional channel matrix $\mathbf{H}_{LS}$ and disregarding the ones considered excessively noisy. The criterion shall be usable with cellular systems of UMTS (CDMA) type and GSM (single-user-per-channel) type, in both cases exploiting set of antennas either directive arrays or not bind to a particular geometry.

Other purpose of the invention is that of indicating a solution suitable for Rayleigh fading model, exponential fading model, or other suitable fading model in accordance with different power attenuation profiles.

Other purpose of the invention is that of indicating solutions for any antenna spacing provided that the delays across the array is a fraction below the temporal resolution of the signal. The indicated solutions should be suitable either for uncorrelated or correlated fading, the last concerning closely spaced antennas ($\lambda/2$ spaced apart) where the fading amplitude is correlated among the various antennas, i.e. in first approximation it differs by a phase shift (fixed delay) between two adjacent antennas depending on the direction of the considered path.

Other purpose of the invention is that of indicating a solution able to exploit the slot-invariance of some characteristics of the space-time channel in time slotted CDMA/GSM systems. For completeness, each time slot corresponds to the length of the transmission burst, and said invariance involves successive frames.

The aforementioned purposes are directed to the indication of a method for under-parameterizing the channel estimate in radiomobile Base Stations exploiting set of antennas, and to a receiver based on the indicated method.

## SUMMARY OF THE INVENTION

To achieve the purposes of the invention the subject of the present invention is a method for under-parameterizing the channel estimate in radiomobile Base Stations exploiting set of antennas, as disclosed in the claim 1.

Further subject of the invention is a radiomobile Base Station receiver including a channel estimator operating in conformity of the claimed method, as disclosed in the receiver claims.

The method of the invention criterion makes use of a classification algorithm for the selection of $L < W$ useful samples. The basic assumption is that in a multipath channel with Rayleigh fading the elements of the channel matrix can be described by simple probability density functions (pdf's). For this aim the LS channel matrix shall be spatially and temporally pre-whitened to make spatially and temporally uncorrelated the estimation noise. The classification algorithm on the basis of the pre-whitened observed samples $|h_i|$ summed up to a noise term $n_i$, supposed Complex Normal (Gaussian), with 0 mean and variance $\sigma_n^2$ [$n_i \sim CN(0,\sigma_n^2)$], is able to decide whether the sample either belongs to the useful or noise subset. The statistical process governing the two subset is described by Rayleigh probability density functions with different variances depending if the samples are estimation noise or useful noisy samples. In general, the samples $|h_i|^2$ or any linear combination is described by Gamma pdf. A threshold $S$ is needed for discriminating between the two subset. Threshold $S$ is calculated in order to minimize the probability of erroneous classification. At the beginning of the classification algorithm all the useful statistical parameters

$$(\text{i.e.: } S, \; p_{useful}, \; \sigma^2_{noise}, \; \sigma^2_{useful})$$

are unknown, so they are to be estimated.

Some useful hints in the direction of iteratively estimating unknown

$$\left(\sigma_0^2, \sigma_1^2, p\right)$$

parameters of a Rayleigh mixture have been disclosed in the article [REF. 3] of Umberto Spagnolini (co-inventor) titled: "Cancellation of Polarized Impulsive Noise Using an Azimuth-Dependent Conditional Mean Estimator", published in IEEE Trans. Signal Processing, Vol.46, No 12, pp.3333-3344, Dec. 1998. Estimates are initialized by adopting a single user-defined starting point consisting, for the case of the invention, on the initial value of the only variable $p_{useful}$. Then said statistical parameters are iteratively recalculated until the dimension $L$ of the reduced set remains unchanged. Only few iterations are needed to set the final value of the threshold $S$ valid for each observed sample $|h_i|$. Although the teaching of this article is useful, some conceptual difficulties arise to the one skilled in radiomobile field in the discover of this article because it is directed to quite a different technical sector involving magnetotelluric methods for subsurface investigation, i.e for earthquake prediction, underground prospecting, etc. As known, these methods are based on measurements of ground electromagnetic fields characterized by low frequencies. The measured signal is only noise of different type, such as the natural noise (< 5 Hz) uniformly distributed on the azimuth, and the man-made electromagnetic interferences (EMI; < 1 kHz) which tend to be polarized in fixed azimuthal directions coinciding for example with power line, electrified railways, and grounding devices. The teaching of the article is focused on the only signal detection for separating the non-Gaussian impulsive noise from the Gaussian natural noise, in order to cancel the first. Channel estimation is not mentioned in this article and suggestions in the direction of generating a particular mask for masking the channel matrix cannot be inferred consequently. From the differences pointed out it can be appreciated that a radiomobile channel affected by microwave multipath fading and intercell interferences represents quite a different scenario with respect to magnetotelluric, although both of them give rise to the need of classifying the observed samples and estimate the involved statistical parameters.

Two classification algorithms (**A** and **B**) are disclosed; the algorithms differ each other by a different polarization of the estimate of said statistical parameters. The ratio $\gamma = \sigma^2_{useful} / \sigma^2_{noise}$ is an useful indicator for tracing the polarization entity of the various parameters involved in the estimation.

The Rayleigh fading model can be modified in order to take into account different power delay profiles. In accordance with the selected profile, the statistical process governing the two subset of classified samples is described from probability density functions of the same type with different variance. The selection criterion needs to be modified accordingly, but substantially the same classification algorithms are implemented being the most relevant modifications charged to the expression of the threshold $S$ which is directly derived from the pdf's. Any suitable pdf can be used in as many variants of the invention still employing a mixture model of the samples of the whitened channel estimates. Depending on the antenna spacing, central and non-central $\chi$-squared can be used; mixture of Gamma pdf is a sub-optimum solution as a generalization of threshold selected by Rayleigh mixture.

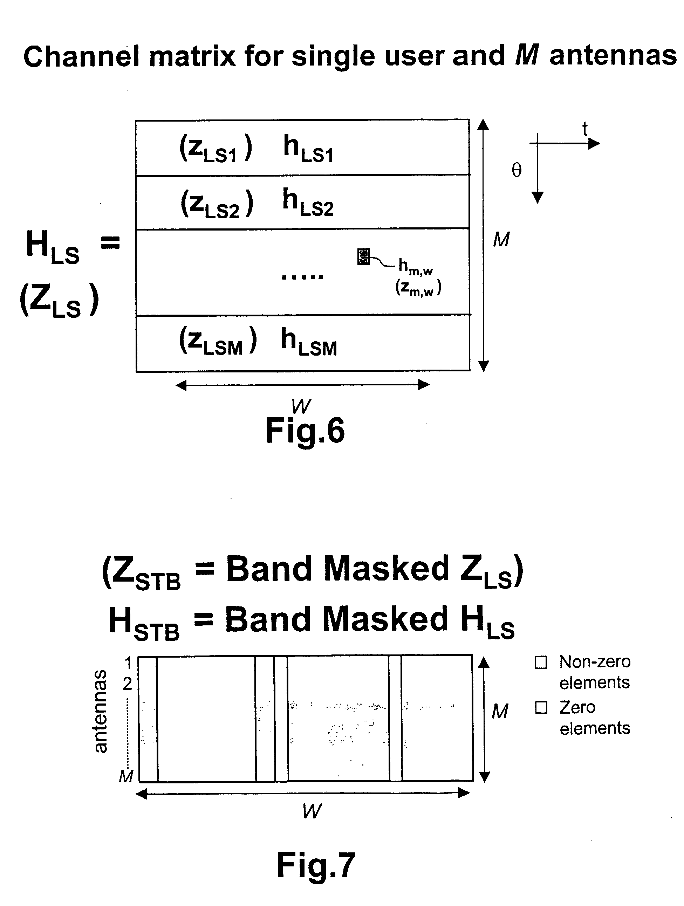

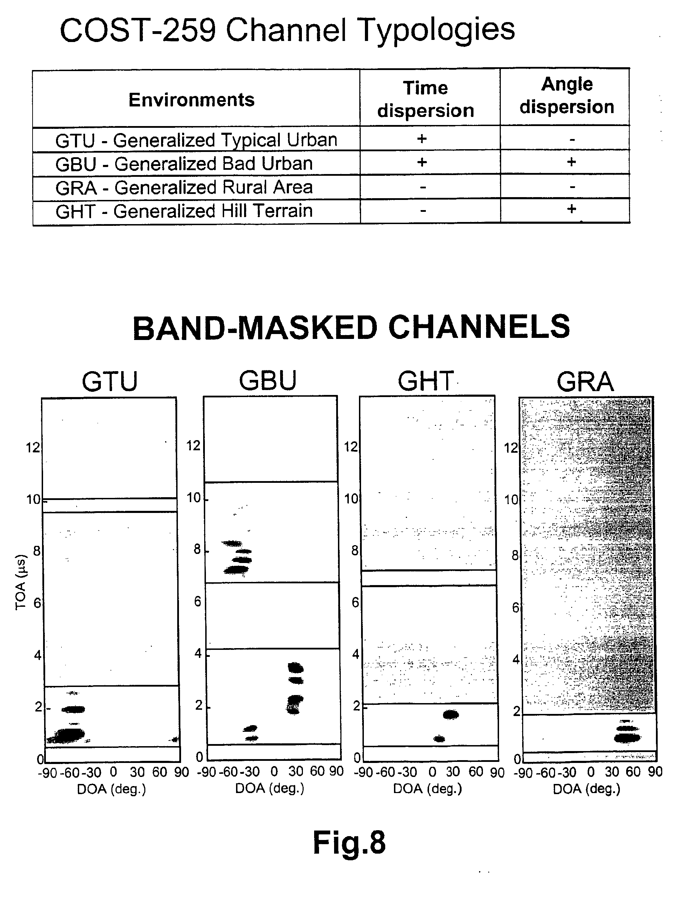

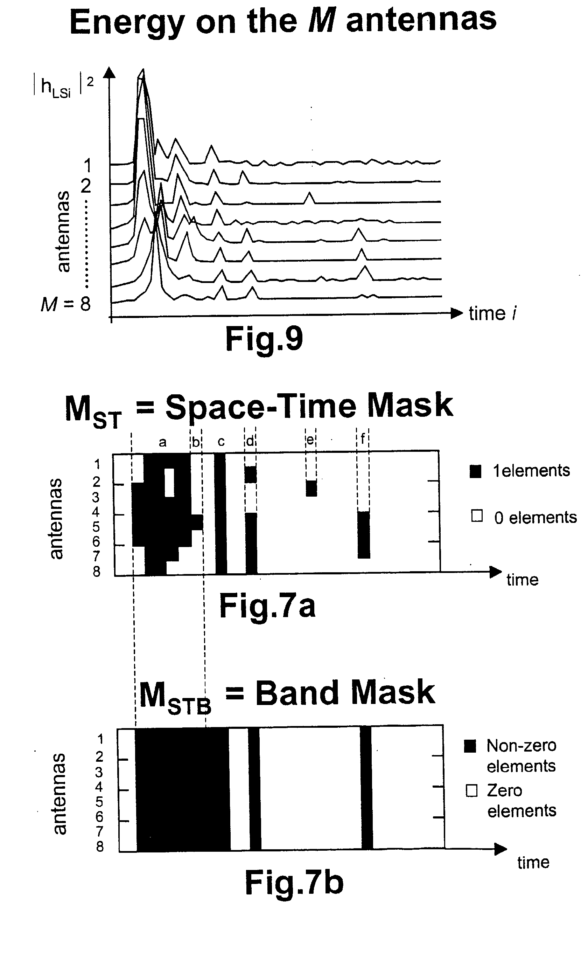

**Fig.6** shows a simplified representation of the channel matrix $\mathbf{H_{LS}}$ valid for the $k^{th}$ user, where each line vectors $\mathbf{h_{LS1}}$, $\mathbf{h_{LS2}}$, $\mathbf{h_{LSm}}$, ..., $\mathbf{h_{LSM}}$ include $W$ estimated samples of the impulse response received on the $m^{th}$ antenna in correspondence of each midamble chip transmitted from the $k^{th}$ user. The opportunity of considering CDMA user each other independent descends from having supposed orthogonal the effective midamble sequences. Line vectors $\mathbf{h_{LSm}}$ of the matrix $\mathbf{H_{LS}}$ are like FIR filters representing the channel at the corresponding $m^{th}$ receiver. From the observation of the PDA diagrams of fig.5 and deducing a resemblance with the channel matrix $\mathbf{H_{LS}}$ of fig.6 (in all effect each PDA representation is comparable to a battery of FIRs placed side by side as the considered DOA stripes), the Inventors thought that, under particular hypotheses, a simpler way to reduce the Space-Time complexity of the $\mathbf{H_{LS}}$ matrix should be a band-mask able to change $\mathbf{H_{LS}}$ into a $\mathbf{H_{STB}}$ matrix like that of the $k^{th}$ user depicted in **Fig.7.** So doing the only zones having relevant energy are really considered, while a great area is disregarded. This assumption is independent from the particular geometrical displacement of the antennas equipped in the BS, the only condition to be verified is that the difference between the TOA of corresponding echoes evaluated for each couple of antennas be lower than temporal resolution of the channel estimate. A strict condition is for TDD-UTRA system with $f_o$ = 2 GHz and B = 3,84 MHz, where the temporal resolution is only 260 ns. The aforementioned condition is surely met by closely spaced antennas, for example an array of $M$ antennas $\lambda/2$ spaced apart (for TDD-UTRA $\lambda/2$ is near 7,5 cm), receiving signals whose band is much lower than the carrier, as in the known cellular systems. In such a case the fading amplitude is correlated and the echoes impinge the *M* antennas with a delay only depending on the distance between two adjacent antennas. As the distance between the antennas departs from $\lambda/2$, still leaving the same delays to the array, the fading amplitude correlation diminishes; nevertheless it is possible neutralize these effects by means of a space merging parameters which decreases as the maximum distance between adjacent antennas increases. This parameter is the percentage of the samples classified as useful at the same time instant on all the *M* antennas. Above a fixed percentage all the remaining column elements of the $\mathbf{H_{LS}}$ channel matrix are taken as useful too, under this percentage even the useful elements are considered as noise. A percentage of 30% has been tested to be suitable for all practical space diversity systems spanning from 10 to 15 $\lambda$ the maximum distance between two adjacent antennas. **Fig.8** shows the energy distribution inside the Band Masked channels GTU, GBU, GHT and GRA, from which it can be appreciates that the mask approximates the effective displacement of the energy among the degrees of freedom of the channel.

The under-parameterization method of above builds the matrix $\mathbf{H_{STB}}$ of Fig.7 in two steps starting from the $\mathbf{H_{LS}}$ matrix. During the first step the classification algorithm selects $L < W$ useful elements of each $\mathbf{h_{LSm}}$ vector using the same statistical criterion for all the *M* antennas. At the completion of the first step the $\mathbf{H_{LS}}$ matrix results space-time masked with a space-time mask matrix $\mathbf{M_{ST}}$ (for the $k^{th}$ user) depicted in **fig.7a.** The second step of the method performs a space-time equalization of the $\mathbf{M_{ST}}$ mask matrix which generates a band mask matrix $\mathbf{M_{STB}}$ like that visible in **fig.7b.** Band mask $\mathbf{M_{STB}}$ is usable for obtaining the band-masked channel matrix $\mathbf{H_{STB}}$ of fig.7. Looking at the $\mathbf{H_{STB}}$ matrix it can be argued that the final selected/unselected elements of the $\mathbf{H_{LS}}$ channel matrix are those referred to the same time instant on all the *M* antennas, so that the method for obtaining it can be named Temporal Masking.The introduced masking concepts appear more immediate in the case of a variant of the invention suitable for closely spaced antennas where the fading amplitude is correlated among the various antennas. **Fig.9** shows the time going of the square module of the channel estimate at the various antennas

$$\left( \left| \hat{h}_{LSi}^{m} \right|^{2}, \quad m = 1, ..., M; \quad i = 1, ..., W \right)$$

for the $k^{th}$ user. Figures 7a and 7b, both aligned below the fig.9, show the evolution of the masking procedure towards the exploitation of all the possible spatial and temporal correlations of the channel.

In a variant of the invention suitable for time slotted CDMA/GSM systems a multi-slot classification is performed. The opportunity of this variant is due to the fact that while the faded amplitudes are changing the temporal locations of the mask are not changing slot-by-slot. In such a variant, firstly, the spatial pre-whitening of the channel matrix $\mathbf{H_{LS}}$ is performed using a spatial filter averaged on a certain number NS of sequential time slots; secondly, all the useful statistical parameters ($S$, $p_{useful}$, $\sigma^2_{noise}$, $\sigma^2_{useful}$) are estimated averaging on an extended set of samples belonging to the same NS number of time slots. Apart from an initial delay of NS $\times$ $T_{burst}$, spatial pre-whitening and classification operations concerning the actual time slot are performed by simply updating with the new $\mathbf{H_{LS}}$ matrix samples both the multi-slot spatial filter and the estimation of statistical parameters.

A further under-parameterization attempt has been carried out executing the above classification on the elements of a channel matrix whose rank has been already reduced by using channel estimators of the prior art, for example the adaptive Reduced Rank channel estimator of the preceding invention [see REF. 2] of the same SIEMENS ICN assignee. In such a case the reduced rank channel matrix had been termed $\mathbf{H_{RRk} = A_k B_k{}^H}$, where: k indicates the $k^{th}$ user; (..)$^H$ is the transposed conjugated or Hermitian operator; **A** indicates a matrix including r beamformers, and **B** a matrix including *r* temporal FIR filters. This should increase the previously defined parameter $\gamma$ because the noise power has been preliminarily reduced and even a spatial complexity reduction already accomplished. In such a variant the temporal and spatial pre-whitening of the $\mathbf{H_{LS}}$ matrix had already been carried out in the aforementioned adaptive-RR disclosure [REF. 2], so that further whitening are unneeded. It's useful nevertheless point out that pre-whitening in the adaptive-RR invention had a quite different purpose in respect of the pre-whitening adopted in the present temporal masking, so that the skilled man faced to temporal masking are not prompted from the preceding pre-whitening. More precisely, while adaptive-RR estimation performs the whitening filtering for making each other orthogonal the whitened beamformers

$$\mathbf{A}'_k = \left[ \mathbf{a}'_{k,1}, \cdots, \mathbf{a}'_{k,r_k} \right]$$

and the whitened temporal FIR filters

$$\mathbf{B}'_k = \left[ \mathbf{b}'_{k,1}, \cdots, \mathbf{b}'_{k,r_k} \right],$$

the Temporal-Masking instead performs the whitening filtering to make uncorrelated the estimation noise so that the elements of the channel matrix $\mathbf{H_{LS}}$ can be described by simple probability density functions (pdf's).

Consequently still subject of the invention is a method for under-parameterizing the channel estimate which combines the technical features of the Rank Reduction of the prior art with those of the Temporal Masking method of the claim 1, as disclosed in a further independent method claim.

## ADVANTAGES OF THE INVENTION

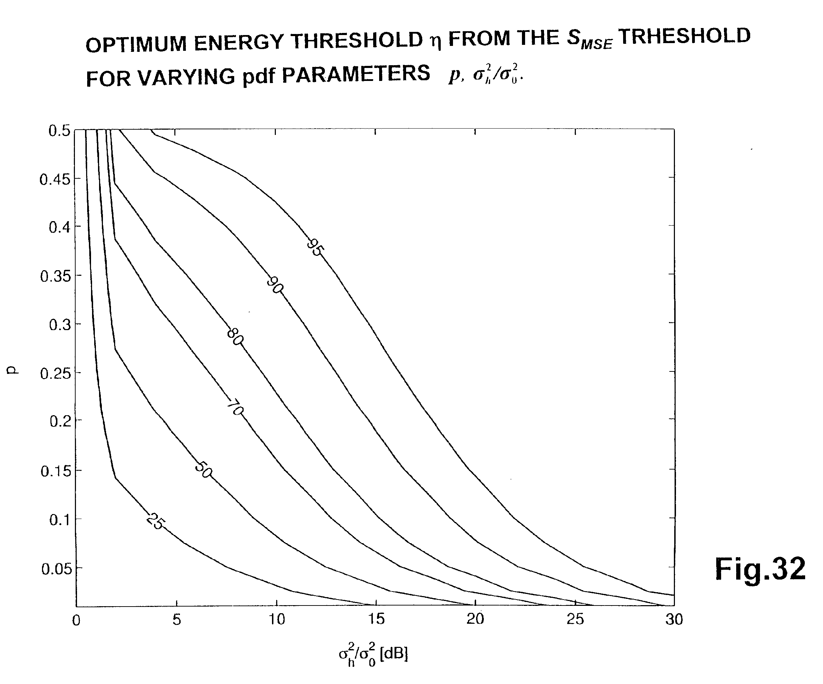

From the mask matrixes $\mathbf{M_{ST}}$ and $\mathbf{M_{STB}}$ visible in fig.7a and 7b and the relative masked channels, it can be appreciated the presence of a large quantity of zeroed samples, so that their noise contributions disappear in the channel estimate and the confidence of the remaining estimated samples increases. The detector that uses those relevant channel matrixes is simpler consequently. Besides, according to the statistically determined threshold $S$, that is close to the optimum threshold as far as the MSE concerns, the masked area is automatically adapted to the variable condition of the channel. In that the proposed method differs from the routinely employed methods making use of a fixed threshold with respect to the channel energy, in order to select the most significant taps only of the channel FIR. Constant energy threshold is reductive because, as it will be proved in the following (fig.32), the energy fraction $\eta$ that minimizes the MSE error of the reduced-dimensional model depends on the statistical distribution of the energy among the channel samples. So that only taking into due account the aforementioned statistical parameters the energy fraction $\eta$ can be related to the optimum threshold.

Among background art method the following article [REF. 4] is worth to be mentioned: "Channel Acquisition for Wideband CDMA Signals", authors Vinayak Tripathi et al., IEEE JOURNAL OF SELECTED AREA IN COMMUNICATION, Vol.18, No. 8, August 2000. The main problem faced in the article is to determine some uplink channel estimation algorithms for a single new user entering a wideband CDMA cellular system. In a second stage the problem of reducing the complexity of the preceding ML estimated channel model is considered. The focus of the proposed ML algorithms is that to estimate correct channel parameters in presence of multipath fading and multi-access interference (MAI), so that joint acquisition scheme is mandatory for estimating the overall interference. Not any hint is done to the opportunity of exploiting set of $M$ antennas. In that the proposed complexity reduction algorithms are forced to be only-temporal, to say, obviously silent on features for reducing the space parameters. Notwithstanding that and willing to consider the only-temporal features, the disclosed optimal approach to reducing the number of taps of FIRs simulating the $K$ channels is based on maximizing a correlation performance metric $\langle h_c, h_r \rangle$ between the ML estimated channel impulse response $h_c$ and the unknown reduced set response $h_r$ ($r < c$). The proposed tap-reduction algorithm is computationally more complex and different from the Temporal Masking of the invention in subject (which is not based on the maximization of said correlation and designed for a set of antennas). Besides the same authors recognize that their algorithm is not optimal hence propose other simpler ad hoc alternative approaches. The topic of these approaches (Max-$L_r$ approach) is to simply pick the $L_r$ most significant taps of the $L_c$ taps in the ML estimated channel impulse response $h_c$. As far as it results from the Section titled "Numerical Results" referred to the various simulations, the reduced number of taps $L_r$ is taken arbitrarily without any considerations on the pdf's of the relative amplitude and the probability of surpassing a quasi-optimal energy threshold statistically determined. In that the method of Tripathi et al. should be included into the aforementioned routinely employed ones without interfering with the present invention.

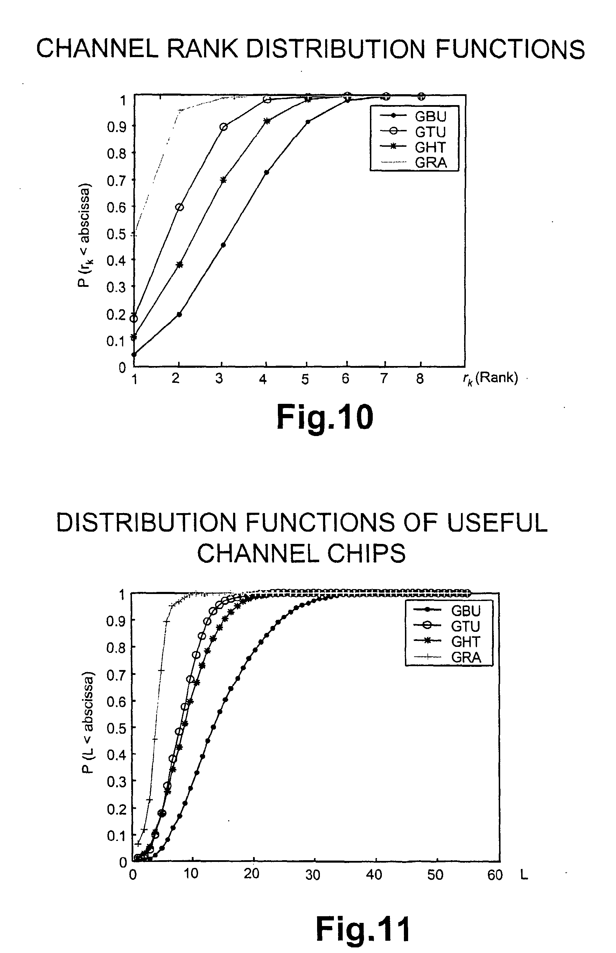

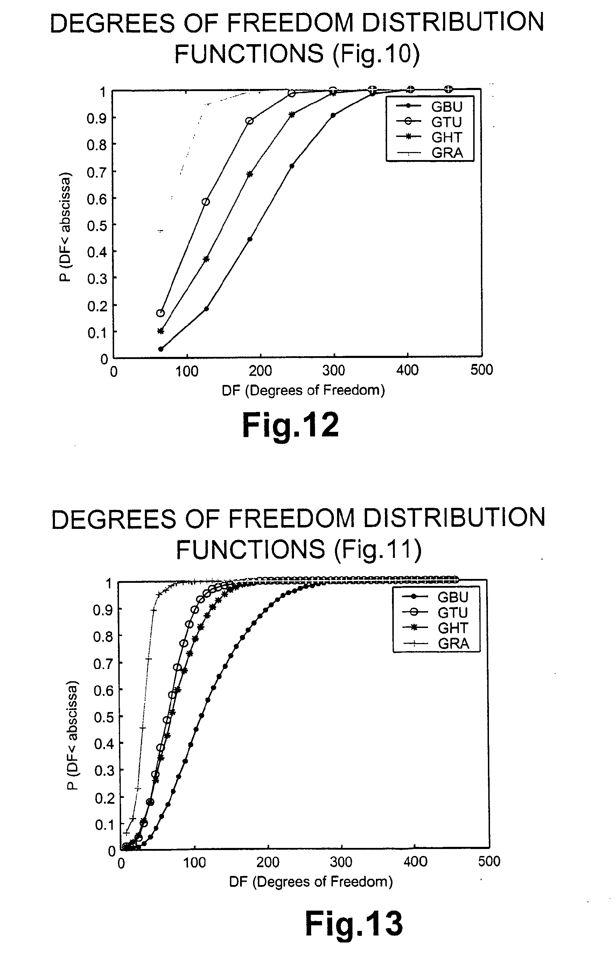

At this point a comparison between the two under-parameterization strategies, namely the Temporal Masking of the present invention and the preceding Adaptive Reduced Rank, is needed in order to confirm the initial intuitions of the inventors concerning the computationally efficiency of the TM method. A further comparison of said strategies with the combined RR-TM and the LS estimator is also needed. Relevant terms of comparison are the statistical distributions of the number of parameters effectively used in the estimation of the GTU, GBU, GHT and GRA channels of fig.5. Other relevant terms of comparison are the graphics of the MSE estimation error versus SNR. A common estimating quality threshold Q_TRH is needed to halt the considered reduction-complexity processes immediately before the threshold is crossed down. The reciprocal of the expression indicated in fig.1 for the MSE error is taken as Q_TRH, and a 20 dB value seems as a good choice. The various under-parameterization strategies are faced to a statistical relevant number of independent samples for COST-259 channel simulations and the results are collected for obtaining the distribution functions visible in **Figures 10 and 11. Fig.10** shows a family of curves representing the rank distributions for GTU, GBU, GHT and GRA channels in case the receiver uses an 8-elements array for receiving in the UMTS band. **Fig.11** shows a family of curves representing distributions of the useful channel chips L for the same channels of the preceding fig.10. Unfortunately Figures 10 and 11 are not each other immediately comparable.

**Figures 12 and 13** reproduce the curves of Figures 10 and 11 using a common independent variable on the abscissa referred to the Degrees of Freedom (DF). From the comparison it can be noticed that the Temporal Masking offers better opportunities than adaptive-RR to estimate the same channel model with a reduced set of parameters. The following comparative table reports the obtained DF values for a 90% probability P.

|  | GRA | GTU | GHT | GBU |
|---|---|---|---|---|
| Adaptive-RR | 126 | 186 | 244 | 300 |
| Temporal Mask | 48 | 104 | 128 | 200 |

In comparison with the full-complexity LS channel model of the conventional approach, where the estimated Degrees of Freedom relative to the single user is *MW*, the two reduced-complexity models have the following DF:

$$r_k(M + W) - r_k^2, \text{ usually } \ll MW$$

for the adaptive-RR model;

$$LM < r_k(M + W) - r_k^2$$

for the Temporal Masking model.

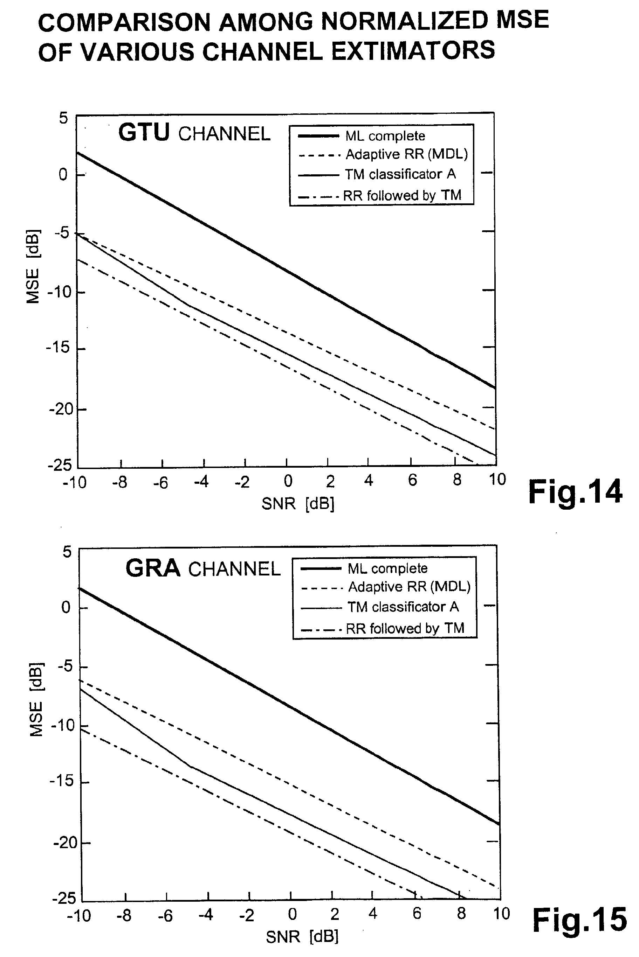

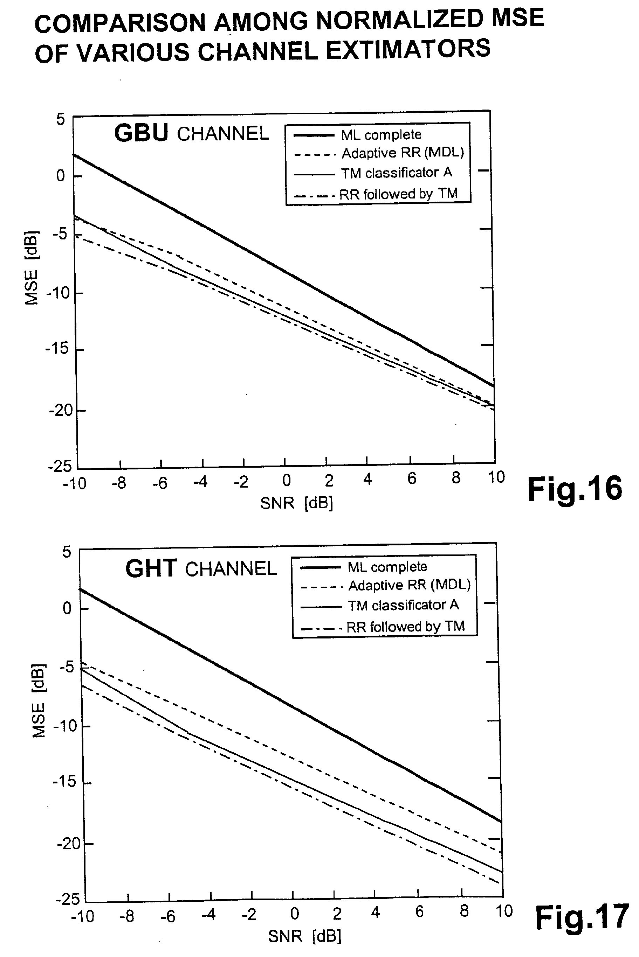

**Figures 14** to **17** are referred to respective COST-259 channel types in a simulation context like the one of Fig.10 and 11, with the only classifier **A**. Each Figure shows four normalized-MSE comparative diagrams of the channel estimate versus SNR, as in the framed Legenda. The reduction-complexity techniques allow an improvement on the estimate valued from 6 to 12 dB in terms of SNR. The Temporal Masking alone outperforms the preceding adaptive RR for all the considered channels. Figures 14 to 17 in conjunction with fig.12 and 13 further allow the following conclusions:

- GRA channel thanks to its intrinsic lower complexity is that which more benefits from the use of the proposed under-parameterization methods.
- GBU channel is highly complex, this limits the skill of the various estimating algorithms in the MSE reduction. In fact, for high SNR all the estimations converge towards the full-complexity solution.
- For low SNR the Temporal Masking classifier get worse than for higher SNR (but still better than the adaptive RR).
- The value of the parameter $\gamma$ improves if a preliminary rank reduction is performed. This is shown in the Figures where the MSE of the RR+TM estimate doesn't show the sharp worsen for the lowest SNR.
- The combined action of the preceding adaptive RR and the present TM estimate has not an improvement (in respect of the ML estimate) equal to the summation of the singular gains. This highlight the fact that the RR estimate has already partially operated on the time dimension.
- The incremental improvement of the RR+TM estimate is limited in respect of the TM only. So the relative advantages are presently not apparently enough to justify the additional computational cost, especially needed in channel spatially complex like the GHT and GBU ones. This conclusion should be reversed in the future thanks to the continuous technological progress of the devices.

**BRIEF DESCRIPTION OF THE DRAWINGS**

Further objects and advantages of the present invention will be made clear by the following detailed description of an embodiment thereof and the annexed drawings given for purely non-limiting explanatory purposes and wherein:

**fig.1** shows a graphical representation of a principle which inspires the method for under-parameterizing the channel estimate of the present invention;
**Figures 2 to 4** show useful representation of the channel model COST-259;
**fig.5** shows PDA diagrams of the channel model COST-259;
**fig.6** shows a single-user representation of the *M*-antennas channel matrix $\mathbf{H_{LS}}$ (Least Square);
**fig.7** shows a matrix $\mathbf{H_{STB}}$ obtained from band-masking the channel matrix $\mathbf{H_{LS}}$ of fig.6;
**fig.7a** shows a Space-Time mask matrix $\mathbf{M_{ST}}$;
**fig.7b** shows a Space-Time mask matrix $\mathbf{M_{STB}}$;
**fig.8** shows the band masked channels relative to the PDA diagrams of fig.5;

**fig.9** shows *M* time diagrams of as many impulse responses estimated from the signals received on the *M*-antennas of fig.6;

**fig.10** depicts a family of curves representing as many rank distribution functions of the channel matrix obtained with an adaptive reduced-rank method of the prior art;

**fig.11** depicts a family of curves representing as many distribution functions referred to the method of the present invention;

**Figures 12 and 13** depict the preceding families of curves referred to a common independent variable on abscissa;

**Figures 14, 15, 16 and 17** show for each COST-259 channel type some normalized-MSE diagrams versus SNR comparatively referred to various channel estimators;

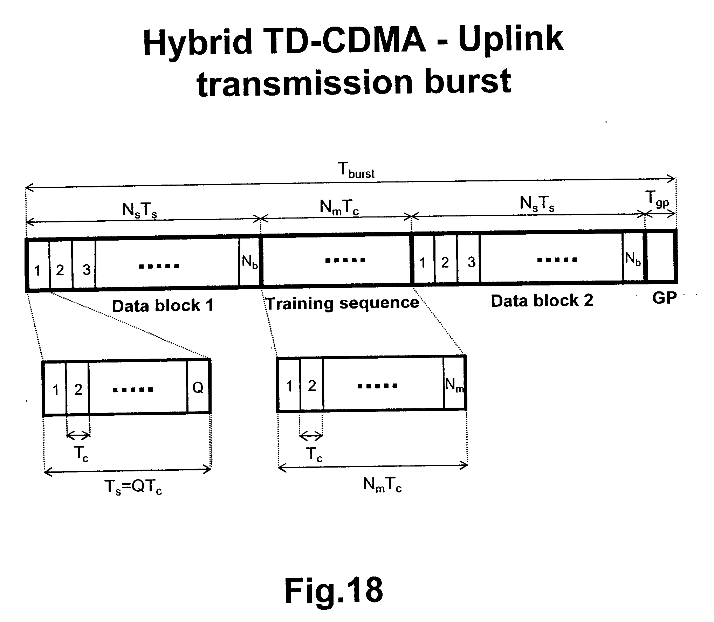

**fig.18** shows a typical transmission burst of a TD/TDMA-CDMA UMTS radiomobile system;

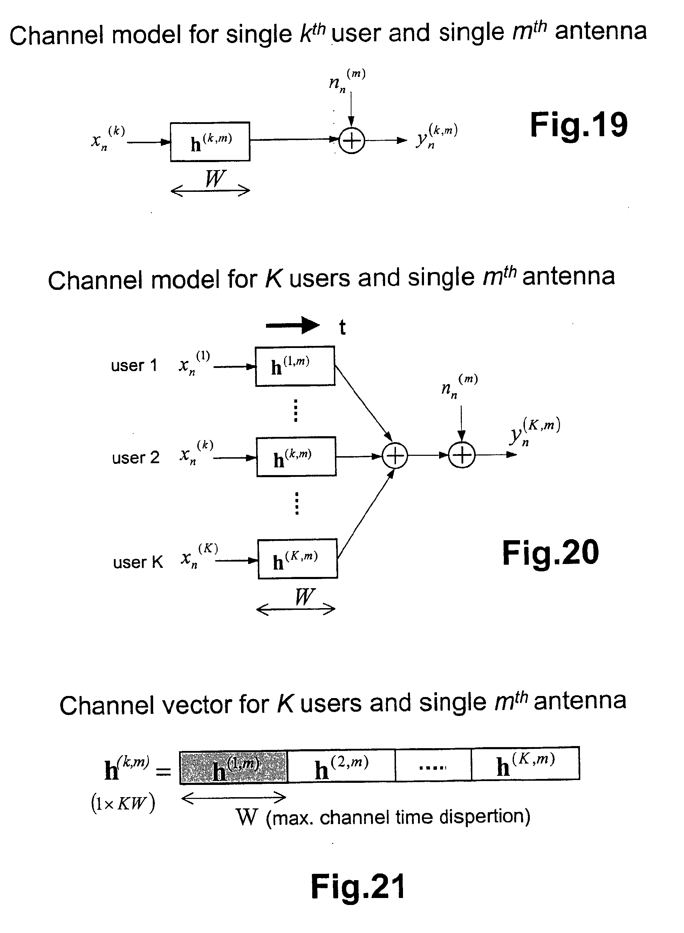

**fig.19** shows a channel model representation for single user and single antenna;

**fig.20** shows a channel model representation for *K* users and single antenna;

**fig.21** shows a channel vector for *K* users and single antenna;

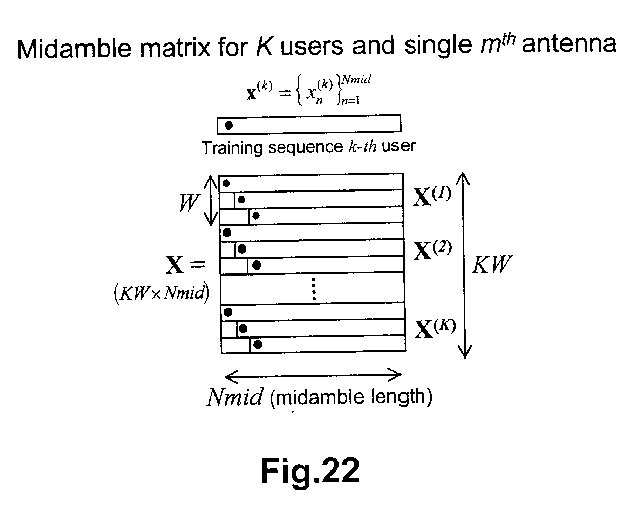

**fig.22** shows a midamble channel matrix for *K* users and single antenna;

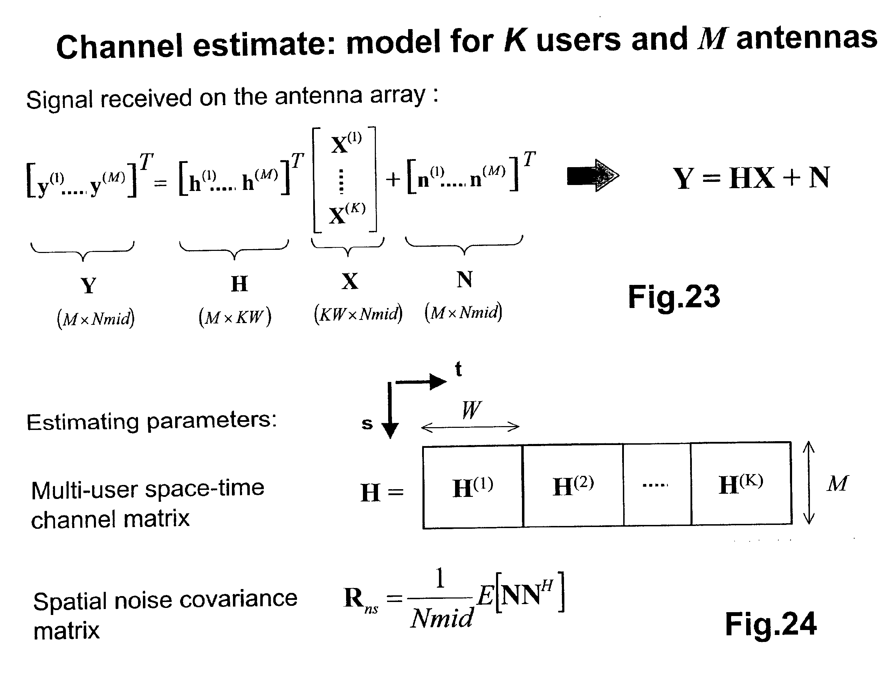

**Figures 23 and 24** show some matrix expressions for obtaining the received signal and the channel matrix for *K* users and *M* antennas;

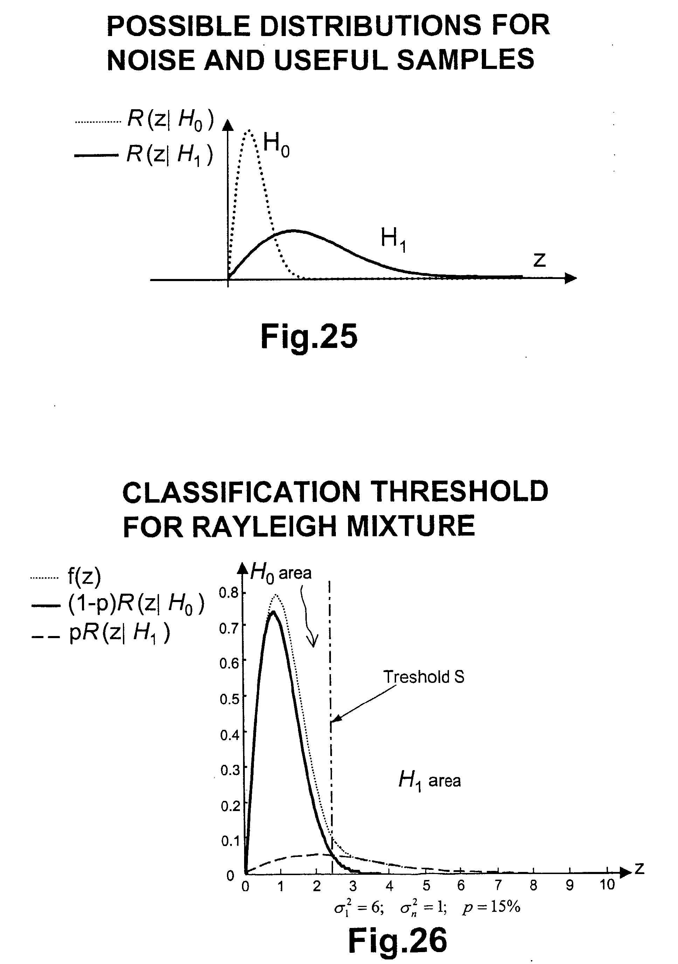

**Figures 25 and 26** depict probability density functions (pdf) of selected and unselected estimated samples effected by a classifier used in the method of the present invention;

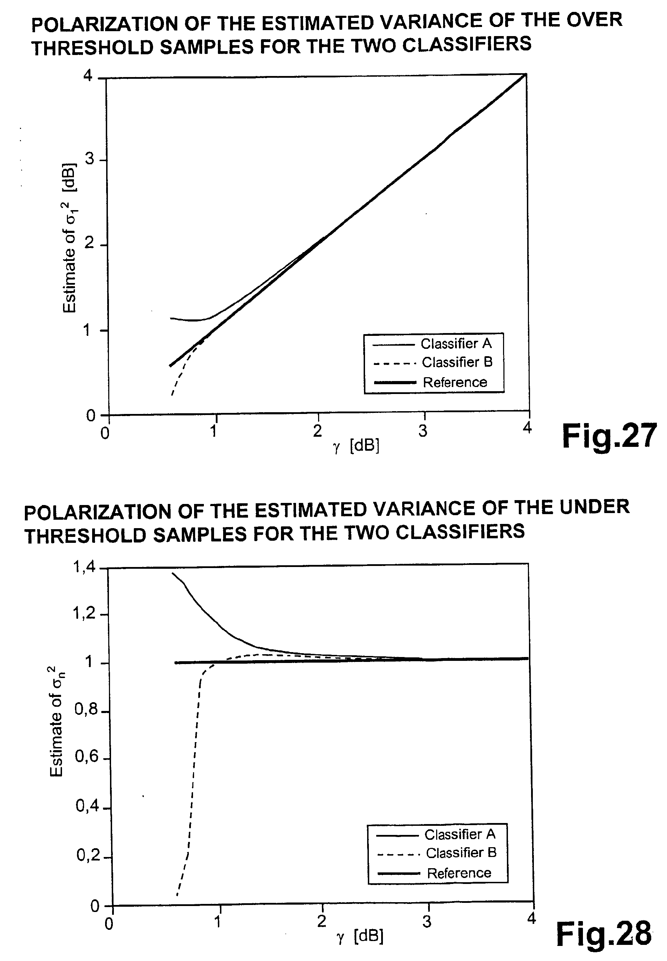

**Figures 27, 28, 29 and 30** show comparative diagrams of as many parameters estimated by two different classifiers available for the method of the present invention;

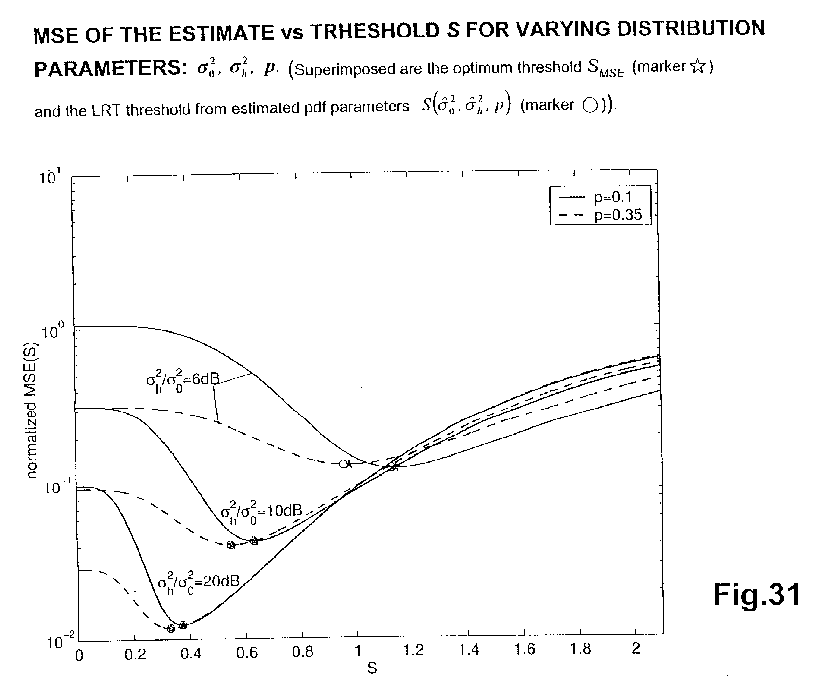

**Figures 31 and 32** show diagrams concerning the optimality of a classification threshold;

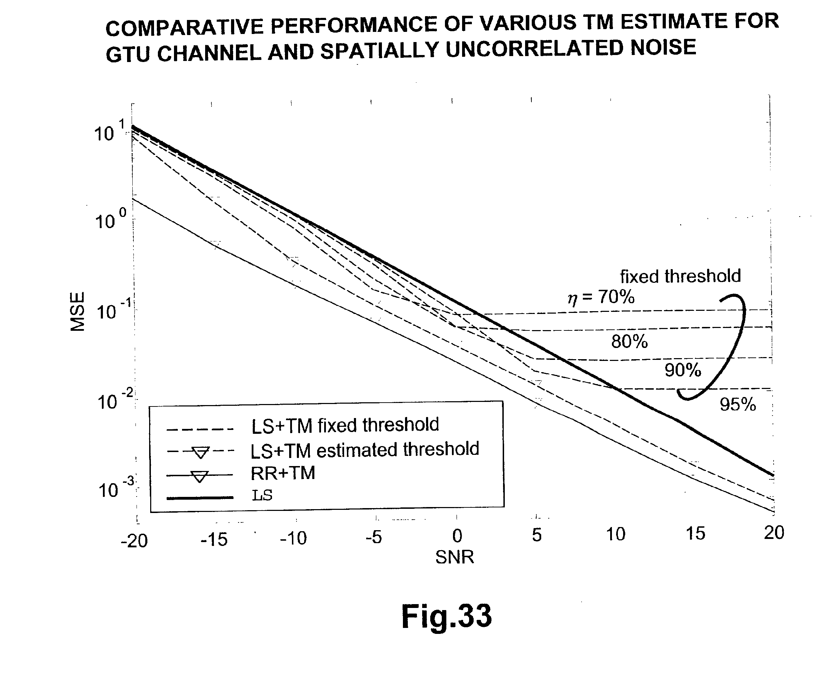

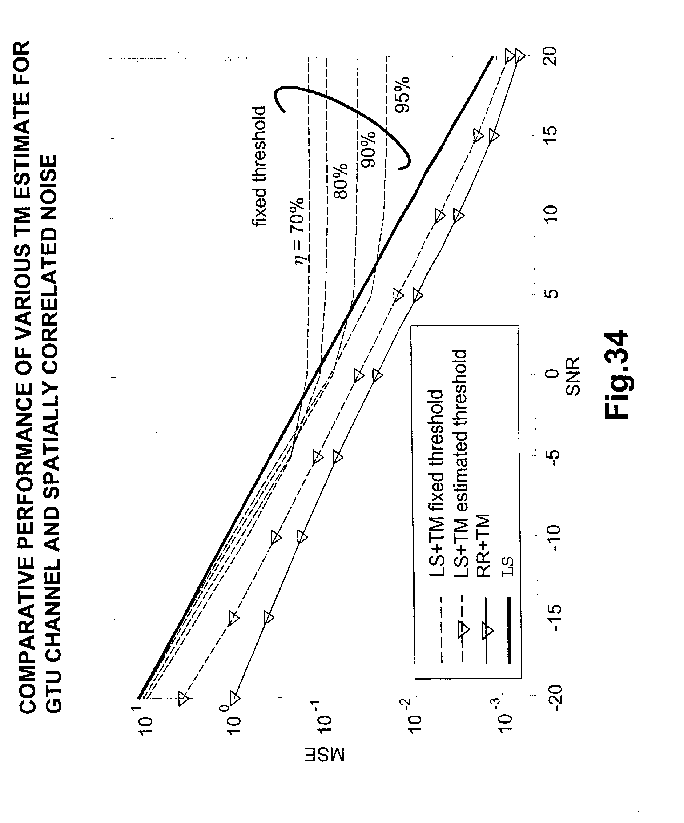

**Figures 33 and 34** show diagrams of comparative estimation performance in presence of spatially uncorrelated and correlated noise respectively;

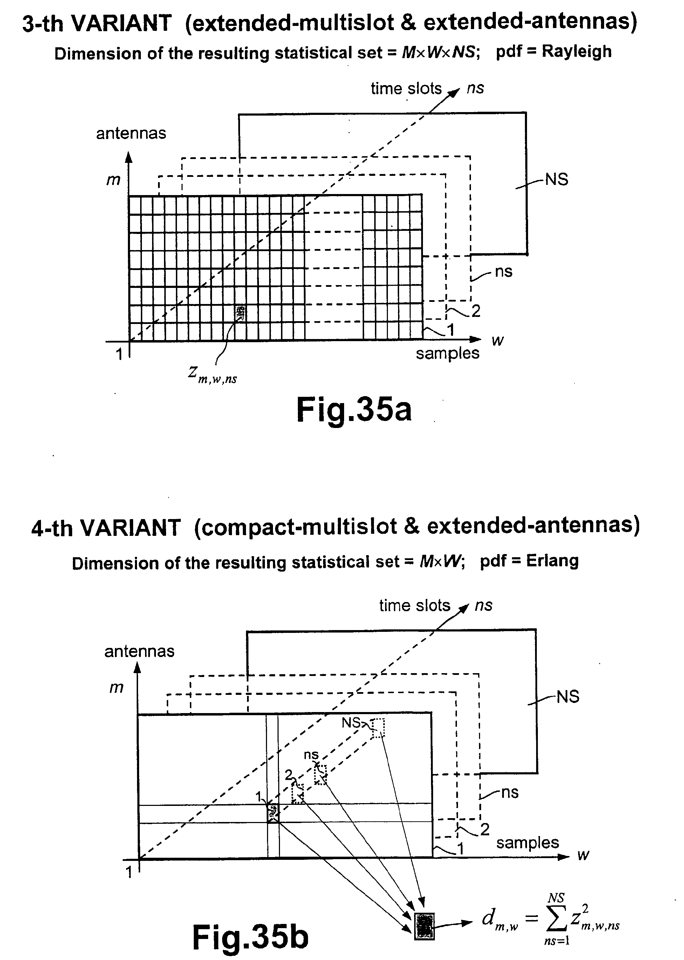

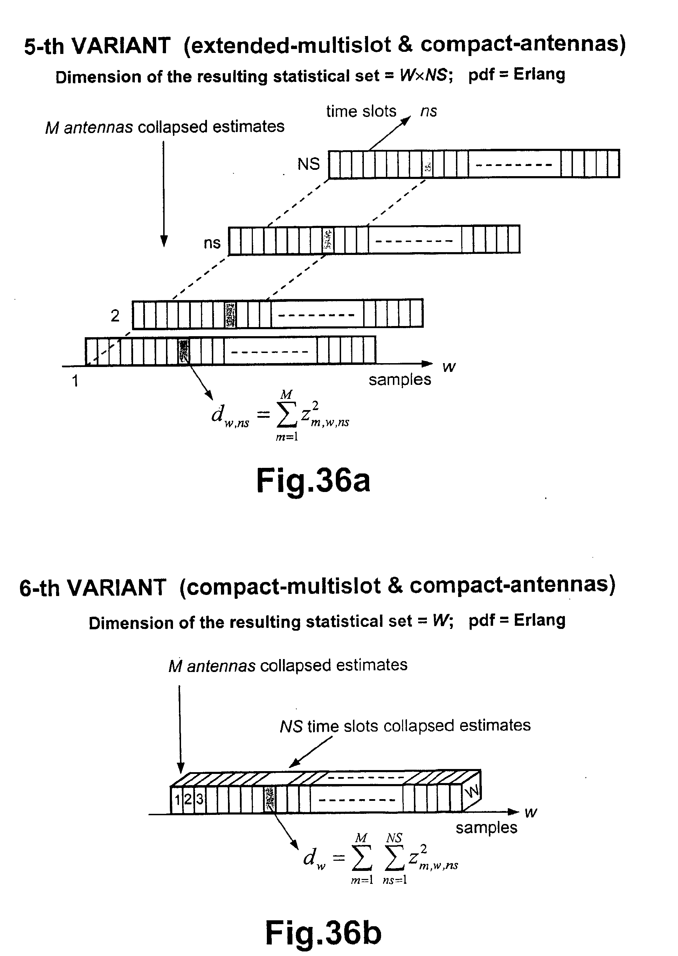

**Figures 35a, 35b, 36a and 36c** show different statistical set suitable for classification in as many multislot variants of the invention;

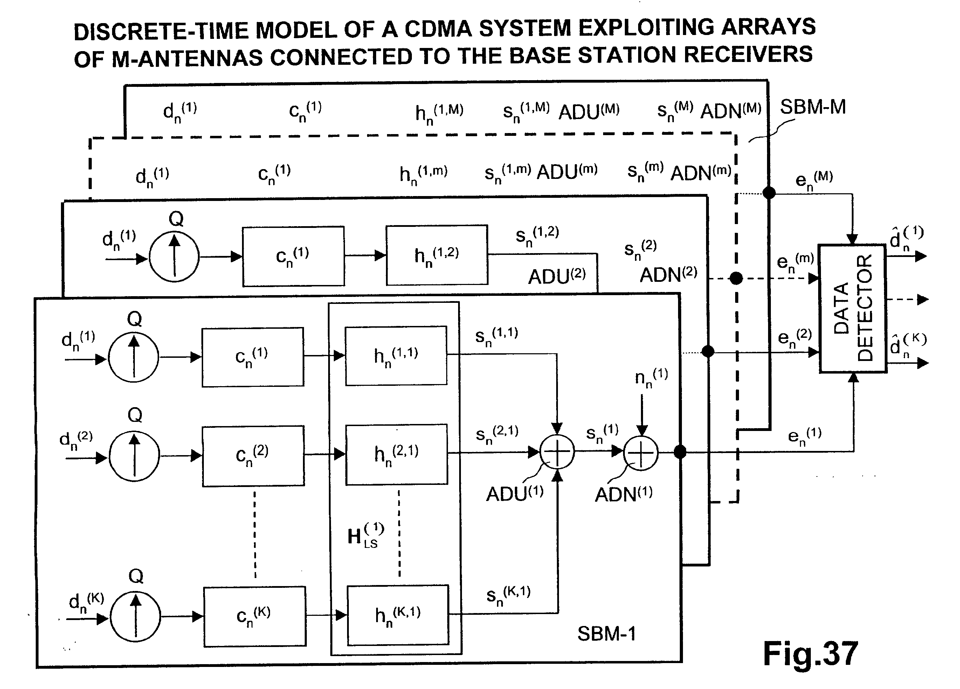

**fig.37** shows a discrete time model of a CDMA system from the transmitted data to the received sequences;

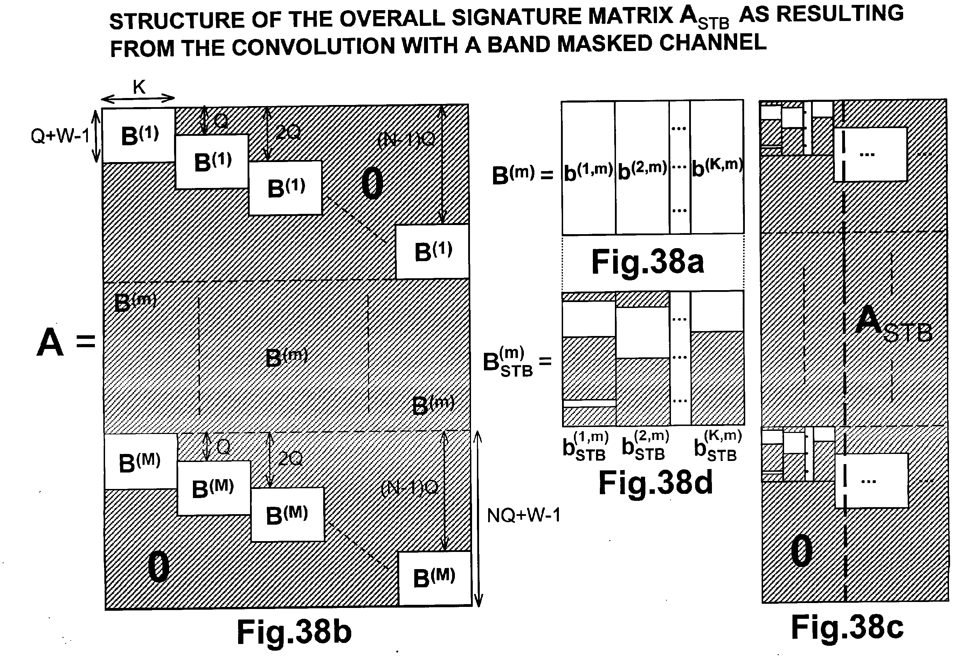

**Figures 38a, 38b, 38c and 38d** show the structure of some matrixes suitable for Data Detection comparatively referred to the prior art and to the method of the present invention, respectively;

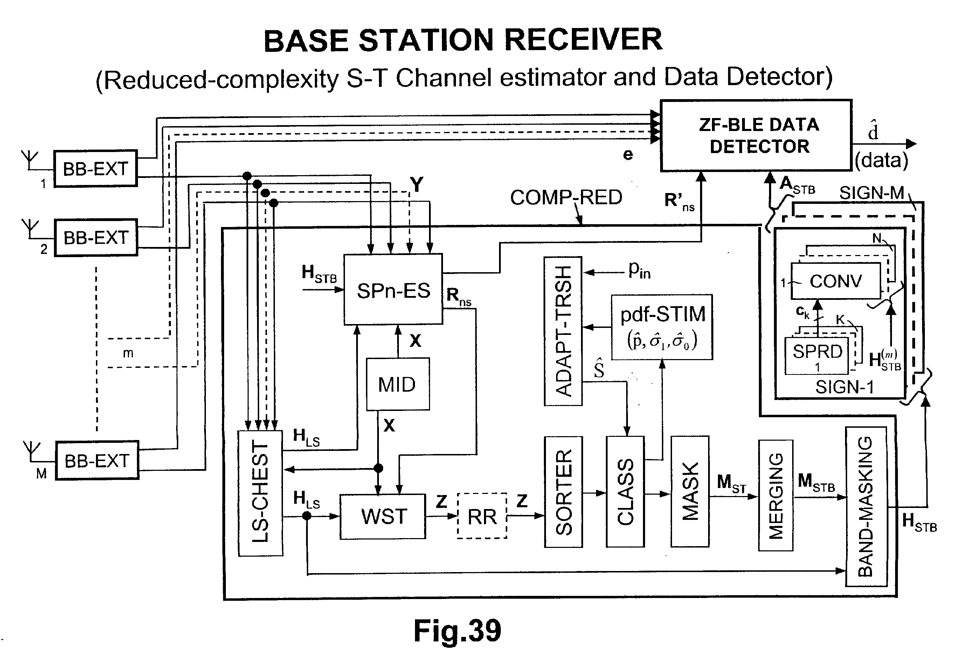

**fig.39** shows the structure of a radiomobile Base Station Receiver operating in conformity with the method of the present invention;

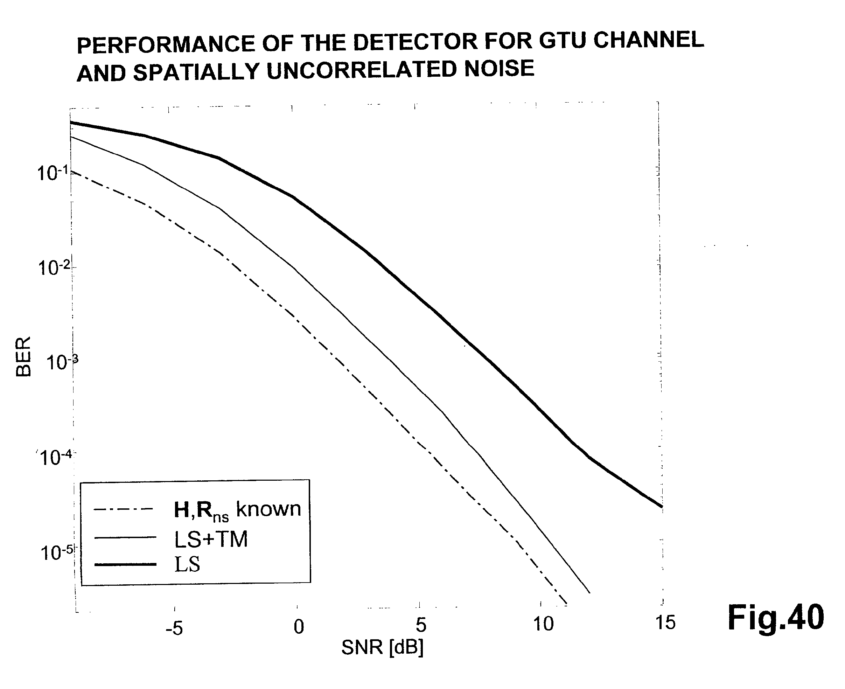

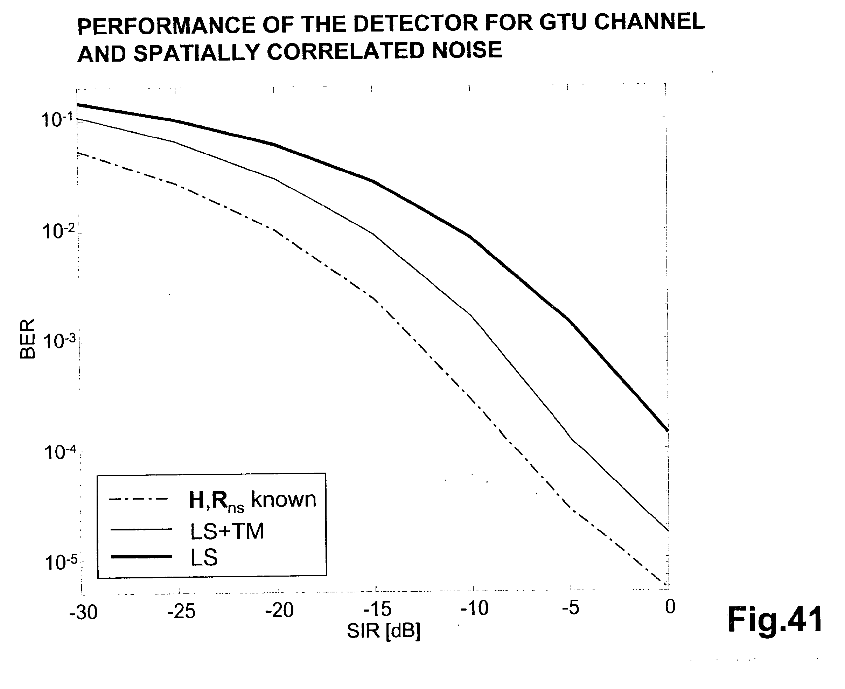

**Figures 40 and 41** show performance diagrams of a detector based on a channel model obtained by the method of the invention in presence of spatially uncorrelated and correlated noise respectively;

## DETAILED DESCRIPTION OF A FIRST EMBODIMENTS OF THE INVENTION

With reference to **fig.18** an uplink CDMA transmission burst is depicted in which a Training sequence in midamble position is visible between two Data blocks 1 and 2, the last being followed by a Guard Period GP to avoid interference with the successive bursts. The discrete time model is obtained by sampling at the chip rate $1/T_c$ the signals received from the antennas after the chip matched filter. Within the same cell, in the same frequency band and in the same time slot, *K* users are assumed to be simultaneously active. Each mobile station (MS) is equipped with a single transmitter antenna, while at the base station (BS/BTS) an antenna set of *M* elements is employed. The users transmit in bursts each consisting of the two data blocks and the user specific training sequence (midamble) for channel estimation. Each data block contains $N_s$ modulated symbols of duration $T_s = QT_c$ spread by a user-specific signature $c_k$ of Q chips for the $k^{th}$ user. The midamble consists of $N_m = N+W-1$ chips, W is the dispersive length of the channel. For example, in a first case referred to the specification concerning the TDD-UTRA, $N = K \times W = 456\ chips$ ($K = 8$ and $W = 57$) while in a second case referred to a CWTS standard, $N = 128$ chips ($K = 8$ and $W = 16$). At the BTS side the received signals are separated into two subset of samples, the first one depending on the training sequences in midamble position and the second one depending on the two data blocks. The conventional approach for the estimation of the S-T channels from the samples of midamble is based on the Least Square (LS) estimate of the coefficients of the FIR filters summarizing the channel model. Then a S-T multi-user detection is carried out on the two data blocks received before and after the midamble, in order to estimate the $2N_cK$ chips belonging to the two data blocks. Detection needs the preceding knowledge of the channel estimates and the spreading code sequences $c_k$, for k=1,...,K. The multi-user detection for space-time channels is known, for example, from the article of X. Wang, H. V. Poor, "Space-time multi-user detection in multiple CDMA channels", published in the review IEEE Trans. Signal Processing, Vol. 47, pp. 2356-2374, September 1999 [REF. 5]. This type of detection is useful to contrast with the Multiple Access Interference (MAI). During the channel estimate correlative sequences {$s_k$} between the midamble of the $k^{th}$ user and the relevant channel samples are effected. Due to Inter-Symbol Interference (ISI) introduced by the channel the first W-1 chips of each correlative sequence {$s_k$} are interfered from the signature tail of Data block 1, while the last W-1 chips of the same sequence $\{s_k\}$ superimpose as many first chips of the signature concerning Data block 2. The way to cancel this type of interference before channel estimation and data detection is well known in the art and the argument is not further considered hereinafter.

**Figures 19 to 24** show various model for channel estimation and the involved vectors and matrices at different level of complexity. **Fig.19** shows a simplified channel model for the single user and the single antenna. With reference to the figure: $x_n^{(k,m)}$ represents the $n^{th}$ midamble chip of the $k^{th}$ user received on the $m^{th}$ antenna; $\mathbf{h}^{(k,m)}$ is the discrete time channel impulse response of length $W$ for the link between the $k^{th}$ user and the $m^{th}$ antenna; $n_n^{(m)}$ is a noise assumed to be Gaussian in the amplitude, with zero mean, temporally uncorrelated but spatially correlated; finally $y_n^{(k,m)}$ represents the signal received by the $m^{th}$ antenna. For the sake of simplicity $\mathbf{h}^{(k,m)}$ is a FIR filter whose coefficients include the convolution with the transmission and the reception filters having raised cosine frequency responses with 22% roll-off for the standard considered here.

The model of fig.19 is the simplest one and can be used to built the successive more structured models, such as that of **fig.20** referred to $K$ users simultaneously transmitting. In such a case the contribute of the various channel are summed up at the receiving antenna. **Fig.21** shows the resulting channel vector $\mathbf{h}^{(K,m)}$ for the $K$ users on the $m^{th}$ antenna, and **fig.22** shows the structure of the relative midamble matrix $X$ for the $K$ users obtained by arranging the $N_{mid}$ midamble chips into this matrix $KW \times N_{mid}$ dimensioned. Figures 23 and 24 show the structure of the various matrices obtained by the generalization of the model of fig.19 to the case of $M$ antennas and $K$ users simultaneously active on the same cell.

The signal received at the time $T_c$ by the set of $M$ antennas is:

$$\mathbf{y}_{n,m} = \sum_{k=1}^{K} \mathbf{H}^{(k)} \mathbf{x}_n^{(k)} + \mathbf{n}_n \qquad \text{Eq. 2}$$

(here $1 \le k \le K$ and $1 \le m \le M$). Matrix

$$\mathbf{H}^{(k)} = \left[ \mathbf{h}^{(k,1)}, \cdots, \mathbf{h}^{(k,M)} \right]^T$$

(where $(...)^T$ is the transposition operator) represents the S-T channel matrix for the $k^{th}$ user; it consists of M vectors each representing the discrete time channel impulse response $\mathbf{h}^{(k,m)}$ of length $W$ visible in the preceding Figures; $\mathbf{x}_n^k$ is a vector generated from the $k^{th}$ midamble; $\mathbf{n}_n$ is the noise still assumed to be Gaussian, with zero mean, temporally uncorrelated but spatially correlated. Under these hypotheses the noise expectation value is

$$E\left[ \mathbf{n}_n \mathbf{n}_l^H \right] = \mathbf{R}_{ns} \delta_{l-n} ,$$

where $\mathbf{R}_{ns}$ is the space-covariance matrix normalized such that

$$\left[ \mathbf{R}_{ns} \right]_{n,n} = \sigma^2$$

that takes into account for the multi-access interference, and $\delta$ is the Kronecker delta ($\delta_k = 1$ if k = 0, $\delta_k = 0$ for every k ≠ 0). Recall that M ≥ 1; being M = 1 a special case of S-T channel when the spatial diversity degenerates; this case is not extensively discussed but it can be derived from the general discussion herein. As previously said the estimation of $\mathbf{H}^{(k)}$ is based on the transmission of $K$ different training sequences

$$\left\{ \mathbf{x}^{(k)} \right\}_{k=1}^{K}$$

known to the receiver. Let $N_{mid} = N,$ by arranging $N$ time samples of the matrix

$$\mathbf{Y} = \left[\mathbf{y}_1, \cdots, \mathbf{y}_N\right],$$

the multi-user model for channel estimation can be written using the standard notation:

$$\mathbf{Y} = \sum_{k=1}^{K} \mathbf{H}^{(k)}\mathbf{X}^{(k)} + \mathbf{N} \;\; = \;\; \mathbf{H}\mathbf{X} + \mathbf{N}, \qquad\qquad \text{Eq. 3}$$

where

$$\mathbf{X}^{(k)} = \left[\mathbf{x}_1^{(k)}, \cdots, \mathbf{x}_N^{(k)}\right]$$

denotes the $W \times N$ convolution Toeplitz matrix for the midamble of the $k^{th}$ user,

$$\mathbf{H} = \left[\mathbf{H}^{(1)}, \cdots, \mathbf{H}^{(K)}\right]$$

and

$$\mathbf{X} = \left[\mathbf{X}^{(1)T}, \cdots, \mathbf{X}^{(K)T}\right]^T$$

are multi-user matrices respectively obtained by concatenating the K channels and the K training sequences. Matrix

$$\mathbf{N} = \left[\mathbf{n}_1, \cdots, \mathbf{n}_N\right]$$

models both the overall additive ambient noise and the inter-cell interference.

The Least Squares estimates of the S-T channel matrix **H** and the consequent estimate of the space covariance matrix $\mathbf{R}_{ns}$ respectively are:

$$\hat{H} = \hat{R}_{yx}\hat{R}_{xx}^{-1}, \qquad\qquad \text{Eq. 4}$$

$$\hat{R}_{ns} = \hat{R}_{yy} - \hat{R}_{yx}\hat{R}_{xx}^{-1}\hat{R}_{yy} - \hat{H}\hat{R}_{xy} \qquad\qquad \text{Eq. 5}$$

where:

- $\hat{R}_{yx} = \mathbf{Y}\mathbf{X}^H/N$ is the overall (intended as multi-user and multi-channel) cross-correlation between **Y** and **X** matrices, being $N$ the considered chips;
- $\hat{R}_{xx} = \mathbf{X}\mathbf{X}^H/N$ is the overall autocorrelation matrix of the midambles;
- $\hat{R}_{yy} = \mathbf{Y}\mathbf{Y}^H/N$ is the overall autocorrelation matrix of the samples of the received signals.

In Eq. 5 the space covariance matrix $\hat{R}_{ns}$ is estimated from the residual of the channel estimation.

According to the block structure of the matrix **H** the channel estimate $\mathbf{H}^{(k)}$ for the $k^{th}$ user is obtained by selecting the $k^{th}$ block of **H**. The estimate of **H** can be advantageously performed in known way, even different from the direct solution of Eq. 4, for example by means of the Fast Fourier Transform (FFT) and its Inverse.

Let $\delta\mathbf{H} = \hat{\mathbf{H}} - \mathbf{H}$ be the error of the LS estimate, the covariance matrix of the estimation error $\mathbf{R}_H$ can be evaluated by stacking the columns of the matrix $\delta\mathbf{H}$ into a vector $\delta\mathbf{h} = vec\{\delta\mathbf{H}\}$; from the article of [REF. 2] it follows:

$$\mathbf{R}_H = E\left[\delta\mathbf{H}\delta\mathbf{H}^H\right] = \hat{\mathbf{R}}_{xx}^{-1} \otimes \hat{\mathbf{R}}_{ns} \qquad \text{Eq. 6}$$

where $\otimes$ is the Kronecker matrix product whose properties are disclosed by A. Graham, in the volume titled: "Kronecker products and matrix calculus", edited by Wiley, 1981. Eq. 6 recalls that asymptotically $(N \to \infty)$ $\mathbf{R}_{ns} \to \mathbf{R}_{ns}$. For (spatially) uncorrelated noise $\mathbf{R}_{ns} = \sigma^2 \mathbf{I}_M$ training sequences with

$$\left| x_n^{(k)} \right| = 1$$

and ideal correlation matrix $\hat{\mathbf{R}}_{xx} = \mathbf{I}_{KW}$, being $\mathbf{I}_M$ and $\mathbf{I}_{KW}$ two identity matrices. The MSE error of the LS estimate is

$$E\left[\left\|\hat{\mathbf{H}} - \mathbf{H}\right\|^2\right] = \sigma^2 MKW/N \,,$$

or equivalently the estimation error

$$\left[\delta\mathbf{H}\right]_{m,w} \sim N\left(0, \sigma_0^2\right)$$

where $\sigma_0^2 = \sigma^2/N$. For each channel the MSE error depends on the ratio between the total number of unknowns in the channel estimates $MW$ and the training sequences length $N$. As $N$ is limited and fixed, the MSE error can be reduced by reducing the unknowns to be estimated only to those "really necessary".

The reduction of complexity gives rise to a minimum problem. Let $\mathbf{h}(\theta)$ be the re-parameterization of the channel matrix for the $k^{th}$ user in term of a vector of new parameters $\theta$, the re-estimation is carried out on the LS estimate

$$\hat{\mathbf{h}}^{(k)} = vec\left\{\hat{\mathbf{H}}^{(k)}\right\}$$

as the non-linear regression:

$$\hat{\theta} = \underset{\vartheta}{arg\ min}\left\{\left(\mathbf{h}(\theta) - \hat{\mathbf{h}}^{(k)}\right)^H \mathbf{R}_H^{(k)-1}\left(\mathbf{h}(\theta) - \hat{\mathbf{h}}^{(k)}\right)\right\}, \qquad \text{Eq. 7}$$

where $\mathbf{R}_H^{(k)}$ is the $k^{th}$ block of $\mathbf{R}_H$

$$\left(\text{i.e.}\ \mathbf{R}_H^{(k)} = \mathbf{R}_{xx}^{(k)-1} \otimes \mathbf{R}_{ns}\right).$$

Optimization of the Eq. 7 implies that the re-estimation has to be carried out after temporal

$$\left(\mathbf{R}_{xx}^{(k)\,1/2}\right)$$

and spatial

$$\left( \mathbf{R}_{ns}^{-1/2} \right)$$

pre-whitening of the LS estimate.

The method of the invention in subject reduces the complexity of the S-T channel estimate by setting to zero those values of the LS estimate that are below a specific amplitude threshold $S$ obtained from the statistical analysis of the pre-whitened LS estimate. The re-parameterized channel for the $k^{th}$ user becomes $\mathbf{h}(\theta) = \mathbf{J}^{(k)}\mathbf{h}^{(k)}$ where the "mask" is obtained by a diagonal matrix $\mathbf{J}^{(k)}$, entries of $\mathbf{J}^{(k)}$ are 0 or 1 depending on the value of the samples of the channel estimate. The mask generates following estimation error:

$$\mathbf{h}^{(k)} - \mathbf{J}^{(k)}\hat{\mathbf{h}}^{(k)} = \left( \mathbf{I}_{MW} - \mathbf{J}^{(k)} \right)\hat{\mathbf{h}}^{(k)} - \mathbf{J}^{(k)}\delta\mathbf{h}^{(k)} \qquad \text{Eq. 8}$$

whose square value is:

$$MSE^{(k)} = \underbrace{tr\left\{ \mathbf{h}^{(k)}\mathbf{h}^{(k)H}\left( \mathbf{J}^{(k)} - \mathbf{I}_{MW} \right) \right\}}_{MSE_{\mathbf{H}}} + \underbrace{tr\left\{ \mathbf{R}_{H}^{(k)}\mathbf{J}^{(k)} \right\}}_{MSE_{\delta\mathbf{H}}} , \qquad \text{Eq. 9}$$

where $tr$ is the trace operator which sums up the elements of the main diagonal of the matrix inside braces. The two contributions in Eq. 9 are the MSE obtained by masking the channel samples ($MSE_{\mathbf{H}}$) and by unmasking the noisy LS estimates ($MSE_{\delta\mathbf{H}}$). The trade-off is obtained by determining the mask $\mathbf{J}^{(k)}$ that minimizes the Eq. 9, since over-masking increases $MSE_{\mathbf{H}}$ and under-masking increases $MSE_{\delta\mathbf{H}}$. Recall that the following bounds holds true:

$$MSE_{\mathbf{H}} \le \left\| \mathbf{h}^{(k)} \right\|^2 \text{ and } MSE_{\delta\mathbf{H}} \le tr\left\{ \mathbf{R}_{H}^{(k)} \right\}.$$

The starting point to set the mask $\mathbf{J}^{(k)}$ for the $k^{th}$ user is the spatial-temporal pre-whitening of the LS estimated Space-Time channel matrix $\mathbf{H}$. Let

$$Z^{(k)} = \hat{R}_{ns}^{-H/2}\hat{H}^{(k)}\hat{R}_{xx}^{(k)H/2} \qquad \text{Eq. 10}$$

be the $M \times W$ block for the $k^{th}$ user after spatial-temporal pre-whitening and let $L$ the effective samples of the channel be smaller than $MW$. The $\mathbf{Z}^{(k)}$ matrix corresponds to the $\mathbf{Z}_{LS}$ one visible in **fig.6**. Advantageously both the spatial $\mathbf{R}_{ns}^{-H/2}$ and temporal $\mathbf{R}_{xx}^{(k)H/2}$ filters can be replaced with the respective Cholesky factor, well known in the art. For the sake of simplicity in the following the midambles are considered quasi-ideal so that $\mathbf{R}_{xx} \cong \mathbf{I}_{KW}$, and the temporal pre-whitening is unnecessary, the previous Eq. 10 becomes:

$$Z^{(k)} = \hat{R}_{ns}^{-H/2}\hat{H}^{(k)}. \qquad \text{Eq. 10'}$$

Each complex valued sample

$$z_{m,w} = \left[ \mathbf{Z}^{(k)} \right]_{m,w}$$

(see fig.6) is the sum of a channel sample $h$ and a noise term $\delta h$ supposed complex Gaussian with variance $\sigma_n^2$ (also indicated $\sigma_0^2$ in the following):

$$z_{m,w} = h + \delta h, \qquad E\left[\left|\delta h\right|^2\right] = \sigma_0^2, \qquad \left|\delta h\right| \sim CN\left(0, \sigma_0^2\right),$$

so that $z_{m,w}$ is a random variable. As concerns the chip-spaced samples $h$ they are identically Rayleigh distributed (under a Rayleigh fading) with variance

$$E\left[\left|h\right|^2\right] = \sigma_h^2.$$

Let $V$ be the set of the $L$ held useful samples, the temporal complexity reduction hypothesis can be so schematized:

$$z_{m,w} = 0 \qquad \forall m, w \notin V \qquad\qquad \text{Eq. 11}$$

$$z_{m,w} = z_{m,w} \qquad \forall m, w \in V \qquad\qquad \text{Eq. 11a}$$

and $z_{m,w}$ belongs either the one or the other the two disjoint classes, or hypotheses:

- hypothesis $H_0$     $m,w \notin V$     hence $z_{m,w} = \delta H$
- hypothesis $H_1$     $m,w \in V$     hence $z_{m,w} = h + \delta H$

The classification method (or classifier) that will be described distinguishes between these two hypotheses on the basis of the observed $z_{m,w}$. In order to simplifying the notation, let

$$\left|Z_{m,w}\right| = z,$$

and $p$ the probability that $z$ belongs the hypothesis $H_1$. The unconditional pdf of the random variable $z$ is given by the mixture model:

$$f(z) = pf\left(z|H_1\right) + (1-p)f\left(z|H_0\right) \qquad\qquad \text{Eq. 12}$$

In case the hypothesis $H_0$ is effective, $z = |\delta h|$, and because $|\delta h|$ is supposed $CN$, $z$ has a Rayleigh ($R$) distribution whose pdf(z) is:

$$f\left(z|H_0\right) = R\left(z|H_0\right) = \frac{z}{\sigma_0^2} e^{-\frac{z^2}{2\sigma_0^2}} \quad \text{for } z > 0 \qquad\qquad \text{Eq. 13}$$

In case the hypothesis $H_1$ is effective for Rayleigh fading, $z = |h + \delta h|$ has still a Rayleigh distribution whose pdf(z) is:

$$f\left(z|H_1\right) = R\left(z|H_1\right) = \frac{z}{\sigma_1^2} e^{-\frac{z^2}{2\sigma_1^2}} \quad \text{for } z > 0 \qquad\qquad \text{Eq. 14}$$

where $\sigma_1^2 = \sigma_0^2 + \sigma_h^2$. In case of Rayleigh fading Eq.12 is:

$$f(z) = pR\left(z|H_1\right) + (1-p)R\left(z|H_0\right) = \qquad \text{Eq. 15}$$

$$= p\frac{z}{\sigma_1^2}e^{-\frac{z^2}{2\sigma_1^2}} + (1-p)\frac{z}{\sigma_0^2}e^{-\frac{z^2}{2\sigma_0^2}}. \qquad \text{Eq. 16}$$

also known as Rayleigh mixture. **Fig.25** shows two possible curves

$$R\left(z|H_0\right)$$

and

$$R\left(z|H_1\right).$$

In accordance with the criterion of Eq. 11 the binary hypothesis test based on the Bayes criterion disclosed in the volume "DETECTION OF SIGNAL IN NOISE", author A. D. Whale, Edited by Academic Press, 1971, [REF. 6] can be used in the selection. Bayes criterion yields to the following Likelihood Ratio Test (LRT):

$$L\left(z;\sigma_0^2,\sigma_1^2\right) = \frac{R\left(z;\sigma_1^2\right)}{R\left(z;\sigma_0^2\right)} \mathop{\gtrless}_{H_0}^{H_1} \frac{1-p}{p} \qquad \text{Eq. 17}$$

that discriminates each of the sample $z$ either belongs to the noisy channel estimate ($H_1$) or noise ($H_0$). The LRT test can be reduced to the following amplitude threshold test:

$$z \mathop{\gtrless}_{H_0}^{H_1} S\left(\sigma_0^2,\sigma_1^2,p\right), \qquad \text{Eq. 18}$$

the over-crossing of threshold $S$ classifies the sample $z$ to the set $V$ of the $L$ useful samples, while the sample $z \le S$ is zeroed. The classification algorithm used in the present invention calculates the threshold $S$ by minimizing the probability of uncorrect classification:

$$p_U = p\int_0^S f\left(z|H_1\right) + (1-p)\int_S^\infty f\left(z|H_0\right) \qquad \text{Eq. 19}$$

The threshold value $z = S$ that minimizes the Eq. 19 is obtained from:

$$\frac{dp_U}{dS} = 0;$$

$$\frac{dp_U}{dS} = pf\left(S|H_1\right) - \left(1-p\right)f\left(S|H_0\right) = 0 \qquad \text{Eq. 20}$$

for the Rayleigh mixture the preceding Eq. 20 becomes:

$$2pSe^{-\frac{S^2}{2\sigma_1^2}} - 2(1-p)Se^{-\frac{S^2}{2\sigma_0^2}} = 0 \qquad \text{Eq. 21}$$

which gives for the threshold $S$ the expression:

$$S\left(\sigma_0^2, \sigma_1^2, p\right) = \left[2\left(\frac{1}{\sigma_0^2} - \frac{1}{\sigma_1^2}\right)^{-1} ln\left(\frac{\sigma_1^2}{\sigma_0^2} \cdot \frac{1-p}{p}\right)\right]^{1/2} \qquad \text{Eq. 22}$$

which can be easily implemented once the pdf parameters

$$\left(\sigma_0^2, \sigma_1^2, p\right)$$

are known. Fig.26 shows a threshold $S \cong 2,44$ for the Rayleigh mixture $f(z)$ whose pdf components are those of fig.25, supposing the following values

$$\left(\sigma_0^2 = 1; \ \sigma_1^2 = 6; \ p = 15\%\right)$$

known.

Two classification algorithms, respectively named **A** and **B,** are proposed for classifying the samples of the set {$z$} as belonging to the two mutually exclusive hypotheses $H_1$ or $H_0$. Both algorithms estimate iteratively the parameters

$$\left(\sigma_0^2, \sigma_1^2, p\right)$$

of Eq. 22 and use them to calculate the classification threshold $S$, starting from an initial arbitrary probability $p$ used for roughly classify the samples of set {$z$}. The two algorithms are distinguished by a different polarization of the estimate. Classification algorithm **A** includes the following steps indicated by an iteration index $i$:

a) sort by decreasing values the set

$$\left\{z_{m,w}\right\},$$

($w$=1,...,$W$; $m$=1,...,$M$)
b) assign an arbitrary probability $p = p_{in}$;
c) calculate the dimension $L = p_{in}MW$ of the useful set that for now includes the first $L$ elements of the sorted set;
d) estimate:

$$\hat{\sigma}_1^2 = \frac{1}{L} \sum_{m,w \in V} z_{m,w}^2 ; \qquad\qquad \text{Eq. 23}$$

e) estimate

$$\hat{\sigma}_0^2 = \frac{1}{(MW - L)} \sum_{m,w \notin V} z_{m,w}^2 ; \qquad\qquad \text{Eq. 24}$$

f) estimate a threshold

$$\hat{S}^{(i)}\left(p^{(i)}, \hat{\sigma}_1^2, \hat{\sigma}_0^2\right)$$

at the iteration ($i$) from Eq. 22;
g) classify the *MW* samples of the sorted set

$$\left\{z_{m,w}\right\}$$

by enforcing the criterion:

$$z_{m,w} > S \Rightarrow m, w \in V \; z_{m,w}^{STM} = z_{m,w} \qquad\qquad \text{Eq. 25}$$

$$z_{m,w} \le \hat{S} \Rightarrow m,w \in V \Rightarrow z_{m,w}^{STM} = 0; \qquad\qquad \text{Eq. 25'}$$

where $z_{m,w}^{STM}$ is the unmasked/masked sample. The criterion of above is equivalent to the following one operating on the $\mathbf{M}_{ST}$ mask matrix visible in fig.7a:

$$m,w \in V \Rightarrow M_{ST(m,w)} = 1$$

$$m,w \in V \Rightarrow M_{ST(m,w)} = 0$$

h) calculate $L^{(i+1)}$ as the new dimension of the set $V$;
i) compare $L^{(i+1)}$ with the preceding $L^{(i)}$ and stopping the classification if $L^{(i+1)} = L^{(i)}$ otherwise estimate:

$$\hat{p}^{(i+1)} = L^{(i+1)}/MW \qquad\qquad \text{Eq. 28}$$

and repeat the previous steps from d) to i) cyclically until the stopping condition is met. An equivalent way to stop the iterations is by checking the condition $S^{(i+1)} = S^{(i)}$ at the step f). Trivial condition needs to be checked separately such as $L \ge 1$.

The experimented number of iterations is less than ten. The last value of $L$ determines the first $L$ elements of the sorted set

$$\left\{z_{m,w}\right\}$$

to be considered as useful at the end of classification and hence the content of the $\mathbf{M}_{ST}$ mask matrix.

The estimated pdf parameters $\hat{p}$, $\hat{\sigma}_1^2$, $\hat{\sigma}_0^2$, $\hat{S}$ are biased. As far as the polarization concerns the classifier $\mathbf{A}$ tends to over-polarize the variance $\hat{\sigma}_1^2$ performed with Eq. 24. In fact it can be proved that for ratio $\gamma = \sigma_1 / \sigma_0$ sufficiently large said estimate can be approximated with:

$$\hat{\sigma}_1^2 \approx S^2 + \sigma_1^2 \qquad\qquad \text{Eq. 27}$$

where $\sigma_1^2$ is the true variance and $S$ is the optimal threshold. Now if $L$ is the number of samples of the set

$$\left\{ z_{m,w} \right\}$$

classified as $H_1$ on the basis of $S$, the ratio $L/MW$ should be a polarized estimation of the probability $p$.

The classification algorithm $\mathbf{B}$, first variant of the invention, differs from the algorithm $\mathbf{A}$ in that it tries to remove the outlined polarization from $\sigma_1^2$ and $p$ by identifying and subtracting the contribution over/under threshold not counted in both the expressions Eq. 24 and Eq. 26.

In the case of classifier $\mathbf{B}$ the variance $\hat{\sigma}_1^2$ is now estimated with the following expression:

$$\hat{\sigma}_1^2 = \frac{1}{L} \sum_{m,w \in V} z_{m,w}^2 - \hat{S}^{(i)2} \qquad\qquad \text{Eq. 28}$$

and the probability $p$ becomes:

$$p = \frac{L/MW - e^{-\frac{S^2}{2\sigma_0^2}}}{e^{-\frac{S^2}{2\sigma_1^2}} - e^{-\frac{S^2}{2\sigma_0^2}}} \qquad\qquad \text{Eq. 29}$$

the remaining expressions and the various steps are unchanged.

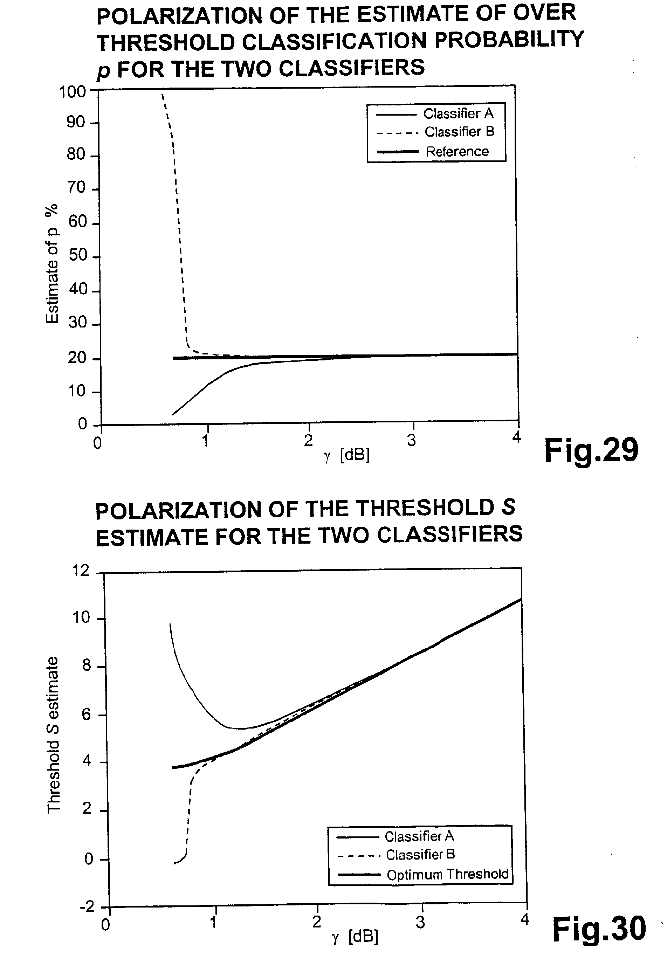

**Figures 27 to 30** show as many comparative simulations of the estimated set $\hat{p}$, $\hat{\sigma}_1^2$, $\hat{\sigma}_0^2$, $\hat{S}$ by the two classification algorithms, and an ideal reference, in function of the parameter $\gamma$. **Fig. 27** clearly shows the tendency of the classifier $\mathbf{A}$ to over-estimating the parameter $\sigma_1^2$, while classifier B tends to under-estimating it, being however able to keep the polarization low for the lowest values of the parameter $\gamma$. The most relevant quality indicator of a classification method is the polarization of the estimated threshold $S$; that because even if the estimated parameters $p$, $\hat{\sigma}_1^2$, $\hat{\sigma}_0^2$ were erroneous but they would bring towards the ideal threshold $S$, the classification would be correct in any case. **Fig. 30** shows that the optimum threshold is achieved by classifier $\mathbf{B}$ for values of parameter $\gamma$ lower than those allowed from the classifier $\mathbf{A}$. In spite of that a comparison of the MSE of the estimation versus SNR between the two classifiers gives the classifier $\mathbf{A}$ better than $\mathbf{B}$ for all the COST-259 channels.

Either selecting the classification algorithm $\mathbf{A}$ or $\mathbf{B}$ at the end of the classification the space-time mask matrix $\mathbf{M}_{ST}$ of fig.7a is obtained. The mask matrix $\mathbf{M}_{ST}$ is the result of a classification that doesn't take care of the suggestions of the PDA diagrams of fig.5. For taking said diagrams into account and obtaining, firstly, the band mask $\mathbf{M}_{STB}$ of fig. 7b and then the final matrix $\mathbf{H}_{STB}$ of fig.7 the following empirical steps have been sequentially introduced:

j) **Spatial merging:** if a predetermined percentage of elements

$$m \left\{ M_{ST(1,\cdots,m,\cdots M;w)} \right\}$$

of a column w of the $\mathbf{M}_{ST}$ matrix has been put to 1, then all the elements of the *w-th* column are fixed to 1 too inside the mask $\mathbf{M}_{STB}$, otherwise are all fixed to zero. The corresponding columns 1,...,$W$ of the $\mathbf{H}_{LS}$ matrix are taken as useful or zeroed consequently. In that the masked/unmasked elements of the $\mathbf{H}_{LS}$ matrix are always referred to the same time instant *w* on all the *M* antennas, in accordance with the Temporal Masking definition. The predetermined percentage of useful elements is selected according to the criteria stated in the introduction. Fig.8 shows that spatial unconstraint of the relevant samples having the same delay allows to catch a large amount of the energy associated to this delay. Variations around the threshold of 30% are possible in concordance with preliminary analysis of the channel.

k) **Temporal merging:** for each element

$$\{M_{ST(m,w)}\}$$

of the $\mathbf{M}_{ST}$ matrix fixed at 1, the elements of the previous

$$\{M_{ST(m,w-1)}\}$$

and next

$$\{M_{ST(m,w+1)}\}$$

are both fixed at 1. That because, in case of temporal correlation of the channel, the samples preceding and successive a useful sample are very likely to be useful too. Consequently if columns *w*-1 and *w*+1 of the $\mathbf{M}_{ST}$ matrix were set to 0 in the preceding step j) all the elements of these columns are turned to 1 in the mask $\mathbf{M}_{STB}$, in order to extend of a 2w chip-time amount the two sides of the unmasked bands. The final result is the $\mathbf{Z}_{STB}$ matrix visible in **fig.7.** The usefulness of this step is recognized when recovery of timing is not very accurate. Figures 2, 3, and 5 shows that inside a single cluster the time dispersion is limited, so that inside a single cluster the various samples are time correlated. The extension of the unmasked band reduces the probability to consider as noise some useful samples.

At the end of the two empiric steps j) and k) matrix $\mathbf{Z}_{STB}$ is completed, thanks to the $\mathbf{M}_{STB}$ mask. For brevity, the following arguments are indifferently referred to the $\mathbf{H}_{LS}$ and $\mathbf{H}_{STB}$ matrixes. The aligned Figures 9, 7a, and 7b summarize these two steps for closely spaced antennas. In Fig.7a the black areas are associated to estimated samples $|\mathbf{h}_{LSi}|^2$ of the upper fig.9 classified as useful. With reference to the letters a, ...., f, the comparison between fig.7a and the lower fig.7b indicates the modifications introduced by steps j) and k). More precisely, the aforementioned step j) operates in the zones a̱, ḏ, f̱ while step k) operates in the zones ḇ, c̱.

Operatively, the $\mathbf{H}_{STB}$ matrix can be obtained by masking the $\mathbf{H}_{LS}$ matrix through a complete $\mathbf{M}^{(k)}_{STB}$ ($M \times W \times W$) masking matrix for the $k^{th}$ user. The masking matrix $\mathbf{M}^{(k)}$ ($M \times W \times W$) is decomposable into $M$ diagonal masking matrices $\mathbf{J}^{(k)}_{(m)}$ ($W \times W$), each referred to a respective $m^{th}$ antenna and therefore to a line vector $\mathbf{h}^{(m)}$ of the $\mathbf{H}$ matrix. Each element on the main diagonal of $\mathbf{J}^{(k)}_{(m)}$ ($W \times W$) is **1** if the corresponding element $\mathbf{h}^{(m)}$ is selected and **0** on the contrary, and the remaining elements are all zero. Each masked line vector $\mathbf{h}^{(m)}_{LSB}$ ($1 \times W$) of the $\mathbf{H}_{LSB}$ ($M \times W$) band matrix is obtained as in the following:

$$h_{LSB}^{T(m)} = J_m^{(k)} h^{T(m)}. \qquad \text{Eq. 30}$$

Spatial pre-whitening and all the preceding steps a) to k) shall be repeated for all the *K* active users. At the end an overall mask for all the *K* users is:

$$\mathbf{M}_{\text{TOT}} = \bigcup_{k=1}^{K} \mathbf{M}_{ST}^{(k)} = \left[ \mathbf{M}^{(1)}, \mathbf{M}^{(2)}, \cdots, \mathbf{M}^{(K)} \right] \qquad \text{Eq. 31}$$

which multiplies the overall $\mathbf{H}_{LS}$ ($M \times W \times K$) channel matrix.

Before introducing some useful variants and disclosing the receiver, with reference to the **Figures 31** and **32** a theoretical analysis on the MSE performance of the classification algorithm for Rayleigh mixture is developed. In such a case the loss of optimality of the threshold

$$\hat{S} = S\left(p, \hat{\sigma}_1^2, \hat{\sigma}_0^2\right),$$

iteratively estimated to minimize the probability of incorrect classification, with respect to the threshold that minimizes the MSE, can be evaluated analytically. Let us consider a large sample size so that (asymptotically) the MSE terms in Eq. 9 can be evaluated from the expectations over the single sample:

$$MSE_H = P_m \times E_L \ |h|^2 \ |h + n| < S \rfloor \qquad\qquad \text{Eq. 32}$$

$$MSE_{\delta H} = P_{fa} \times E_L \ |n|^2 |n| < S \rfloor \qquad\qquad \text{Eq. 32a}$$

expectations $E[\cdot]$ are for the conditional pdf's; $P_{fa}$, $P_d$, and $P_m$ denote the probability of a false alarm, detection, and missing, respectively. The error $MSE(S) = MSE_H(S) + MSE\delta_H(S)$ can be evaluated analytically from Eq. 32 and Eq. 32a as function of the threshold $S$. **Fig.31** shows the $MSE(S)$ normalized to the mean channel norm (i.e. $p\sigma_h^2$) versus $S$ for Rayleigh mixture with varying $\sigma_h^2/\sigma_0^2 = \{6, 10, 20\}$ dB and $p = \{0,1, 0,35\}$. The threshold $S_{MSE}$ that minimizes the $MSE(S)$ is indicated on each plot together with the threshold

$$S\left(\hat{p}, \hat{\sigma}_1^2, \hat{\sigma}_0^2\right)$$

obtained by the classification algorithm **A**. It can be noticed that for large $\sigma_h^2/\sigma_0^2$ (or equivalently for large signal to noise ratios, as for uncorrelated noise $\sigma_0^2 = \sigma^2/N$)

$$S_{MSE} \cong S\left(\hat{p}, \hat{\sigma}_1^2, \hat{\sigma}_0^2\right)$$

while for small $\sigma_h^2/\sigma_0^2$ it is

$$S\left(\hat{p}, \hat{\sigma}_1^2, \hat{\sigma}_0^2\right) < S_{MSE}$$

with a slight loss of performance. **Fig.32** shows some plots of the optimum energy fraction $\eta$ that minimizes the MSE for varying distribution parameters

$$\left(p, \ \sigma_h^2 / \sigma_0^2\right).$$

The purpose of fig.32 is to confirm the conclusions drawn in the introduction about he known estimation method based on fixed energy fraction $\eta$, taken as discriminating threshold for selecting a subset of the channel impulse response samples $h$. The energy fraction $\eta$ that minimizes the MSE depends on the statistical distribution of the channel samples and it can be easily related to the optimum threshold $S_{MSE}$. Analysis in Fig.32 shows that the energy fraction $\eta$ that minimizes the MSE cannot be fixed but it should be selected adaptively according to the channel distribution parameters

$$\left(p, \ \sigma_h^2 / \sigma_0^2\right).$$

In the simulation concerning the **Figures 33** and **34** the performances of the Temporal Masking channel estimate of the present invention (LS+TM) are compared with the LS estimate and the fixed energy threshold η. The normalized MSE

$$\left( \left\| \Delta \mathbf{H} \right\|^2 \Big/ \left\| \mathbf{H} \right\|^2 \right)$$

versus the signal-to-noise ratio

$$SNR = E\left[ \left\| \mathbf{h}^{(k,m)} \right\|^2 \right] \Big/ \sigma^2$$

is shown for GTU channel. In **fig.33** the Gaussian noise is spatially uncorrelated, while in **fig.34** is spatially correlated as:

$$\left[ \mathbf{R}_{ns} \right]_{m,l} = \sigma^2 \left\{ 0,9 \, e^{-i\pi \sin \alpha} \right\}^{l-m}$$

and the angle α of arrival of the interference is random within the support [-π/3, π/3]. In both the Figures the adaptive threshold (LS+TM) outperforms the LS estimate of approximately 5 dB in SNR and it is uniformly better than fixed energy threshold η. The simulations here show that the energy threshold η should be increased with the SNR, similarly to fig.32.

**DESCRIPTION OF ALTERNATIVE EMBODIMENTS OF THE CHANNEL ESTIMATION**

In addition to the first variant of the invention, referred to the use of the classification algorithm **B**, the following further variants are disclosed referred (for the sake of brevity) to the only classification algorithm **A**, although they can be easily adjusted to include the classification algorithm **B**:

**2-th variant -** Embodiment for closely spaced antennas (directive arrays).
**3-th variant -** Embodiment for time slotted CDMA/GSM systems exploiting a multislot algorithm. This variant is referred as: "extended-multislot and extended-antennas".
**4-th variant -** Embodiment for time slotted CDMA/GSM systems exploiting multislot algorithm. This variant is referred as: "compact-multislot and extended-antennas".
**5-th variant -** Embodiment for time slotted CDMA/GSM systems exploiting multislot algorithm. This variant is referred as: "extended-multislot and compact-antennas".
**6-th variant -** Embodiment for time slotted CDMA/GSM systems exploiting multislot algorithm. This variant is referred as: "compact-multislot and compact-antennas".
**7-th variant -** Embodiment for adaptive-Reduced-Rank followed by Temporal Masking.

With reference to the **2-th variant**, when the antennas are closely spaced the channel taps are spatially correlated. In a multipath model where each path is chip-spaced with one direction of arrival, the S-T channel values differs only by a linearly increasing phase shift:

$$H_{m,w}^{(k)} \cong H_{1,w}^{(k)} e^{j\phi_w^{(k)}(m-1)}. \qquad \text{Eq. 33}$$

The selection variable z can be modified neglecting this phase shift by summing up on all the antennas the power of the actual z elements:

$$d_w = \sum_{m=1}^{M} \left| z_{m,w} \right|^2. \qquad \text{Eq. 34}$$

The conditional pdf of power variable $d_w$ is a non-central chi-squared ($\chi^2$) with $2M$ degrees of freedom depending on the hypothesis $H_0$ or $H_1$ holds; the non-central parameter is $M\left|H_{l,w}^{(k)}\right|^2$. Eq. 22 for determining threshold $S$ shall be modified consequently. The under-parameterization method already described for the first embodiment of the invention is modified accordingly using the same steps of the previous variant. In particular the two variances are:

$$\hat{\sigma}_1^2 = \frac{1}{ML}\sum_{w \in V} d_w \quad \text{and} \quad \hat{\sigma}_0^2 = \frac{1}{M(W-L)}\sum_{w \notin V} d_w . \text{The criterion for classifying}$$

the $W$ elements of the sorted set $\{d_w\}$ *is:*

$$d_w > \hat{S} \Rightarrow w \in V \Rightarrow z_{1,...,M;w}^{STM} = z_{1,...,M;w}^{STM}$$

$$d_w \leq \hat{S} \Rightarrow w \notin V \Rightarrow z_{1,...,M;w}^{STM} = 0;$$

where $z_{1,...,M;w}^{STM}$ is the unmasked/masked column. The criterion of above is equivalent to the following operating on the $\mathbf{M}_{ST}$ mask matrix visible in fig.7a:

$$m,w \in V \Rightarrow M_{ST(1,...,M;w)} = 1$$

$$m,w \notin V \Rightarrow M_{ST(1,...,M;w)} = 0.$$

Similar to previous variant, the experimented number of iterations is less than ten. The last value of $L$ determines the first $L$ elements of the sorted set $\{d_w\}$ to be considered as useful at the end of classification and hence the content of the $\mathbf{M}_{ST}$ mask matrix. At this point of the procedure the space merging of the preceding step j) is unnecessary because intrinsic in the definition of variable $d_w$(Eq. 34). Preceding step k) is performed for extending, if necessary, a chip time $w$ the two sides of the unmasked bands.

**Figures 35a, 35b, 36a, and 36b** are referred to respectively **3-th, 4-th, 5-th, and 6-th** multislot variants, whose aim is that to improve the performance of the proposed classification algorithms thanks to the use of a wider statistical sample for estimating the involved statistical parameters ($\sigma_1^2$ $\sigma_0^2$, $p$). In that the convergence of the classification algorithms is sped up and a possible influence on the final results from the arbitrary choice of the initial probability $p$ is eliminated. Popular examples of slotted cellular systems are the GSM/GPRS and the various proposed UMTS/ CDMA like TDD-UTRA or CWTS. GSM exploits sequential frames 4,615 ms long, each frame includes 8-timeslots assigned to the users one to one. TDD-UTRA frames are 10 ms long and include 15 timeslots freely assignable in uplink or downlink, with the restriction to have at least one timeslot for each direction. The premise of all the multislot variants is that some channel characteristics influencing the estimate remain substantially unchanged during a time window spanning a reasonably number of frames. Relevant invariable characteristics are channel delay and attenuation profile (not fading which can be variable). The number of permissible slots mainly depends on the mobile speed. The length of the time window is selected in order to prevent one chip sliding of the channel delays due to the mobile speed. From the Doppler theory about cellular system has been found that with a speed of 300 km/h and tolerating a time slip of half-chip duration (Tc = 260 ns for TDD-UTRA), the correlative windows reaches 360 ms, to say 36 frames. As far as the most suitable statistical distributions concerns (and the homonym pdf-s) a Rayleigh pdf is used if the uncorrelated elements are not summed up along space-time coordinates, instead, when they are summed up the chi-squared is needed. Difficulties to estimate the threshold S in closed form are circumvented from the use of an Erlang distribution in conjunction with an exponential decreasing power profile for the channel samples. A most general approach makes use of a gamma distribution from which chi-squared and Erlang distribution both descend. Theory of these distribution functions are given in the volume "Probability, Random Variables and Stochastic Processes", author A. Populis, Mc-Graw-Hill International Editions, Electrical & Engineering Series 1991 [Ref 7].

**Fig.35a** shows the **3-th variant** suitable for "extended-multislot and extended-antennas" which operates on an extended set $M \times W \times NS$ dimensioned, being $NS$ the number of time slots involved in the procedure. With reference to the fig.35a, let $NS$ be the number of time slots involved in the procedure, a spatial pre-whitening of the channel matrix $\mathbf{H}$ is performed as in the following:

$$\hat{\mathbf{R}}_{ns-average}^{-H/2} = \sum_{\xi=0}^{(NS-1)} \frac{\hat{\mathbf{R}}_{ns(\xi)}^{-H/2}}{NS} \; ; \qquad \text{Eq. 35}$$

$$Z^{(k)} = \hat{R}_{ns-average}^{-H/2} \hat{H}^{(k)} \qquad \text{Eq. 10''}$$

the number *NS* is off-line determined from the observation of the stationariness of the channel and the maximum permissible mobile speed. A memory table is provided to store *NS* consecutive $\mathbf{Z}^{(k)}$ matrices pre-whitened as in the Eq. 10'' constituting the input of the classification algorithm. The memory table could be, for example, a line vector $\mathbf{G}^{(k)}$ (1, $M{\times}W{\times}NS$ dimensioned) including *NS* serialized $\mathbf{Z}^{(k)}$ matrices. After which the method for under-parameterizing the channel estimate already described for the first embodiment of the invention is modified for the 3-th variant as in the following (steps **a**) to **i**) are equally labeled):

a) sorting the vector $\mathbf{G}$(k) by decreasing values of the samples $z_{m,w,ns}$ ($w$ = 1,..., $W$; $m$ =1,...,$M$; $ns$ = 1,..., $NS$). In order to simplify the next steps two vectors named $(\mathbf{O}^{(k)})^2$ and $\mathbf{I}^{(k)}$ (1, $M{\times}W{\times}NS$ dimensioned) are introduced. Vector

$$\left(\mathbf{O}^{(k)}\right)^2 = sort\left\{z^2_{m,w,ns}\right\},$$

vector $\mathbf{I}^{(k)}$ includes the indexes of the elements stored in $(\mathbf{O}^{(k)})^2$. Finally a multiple mask matrix $\mathbf{M}^{(k)}{}_{\text{ST-multislot}}$ ($M$, $W{\times}NS$ dimensioned) that corresponds to NS successive $\mathbf{M}^{(k)}_{\text{ST}(ns)}$ matrices like the one visible in fig.7a. More precisely:

$$\mathbf{M}^{(k)}_{\text{ST}-\text{multislot}} = \bigcup_{ns=Tburst}^{(1-NS)Tburst} \mathbf{M}^{(k)}_{\text{ST}(ns)} \qquad \text{Eq. 36}$$

is a matrix of all zeroes except for some 1s in the ($m$, $w$, $ns$) locations corresponding to the locations stored in the first *L* elements of the vector $\mathbf{I}^{(k)}$.

b) assigning an arbitrary probability $p = p_{in}$;

c) calculating the dimension $L = p_{in} \times M \times W \times NS$ of the useful set that for now includes the first *L* elements of the vector

$$\left(\mathbf{O}^{(k)}\right)^2 ;$$

d) estimating:

$$\hat{\sigma}_1^2 = \frac{1}{L}\sum_{m,w,ns\,\in\,\mathrm{V}} z^2_{m,w,ns} \; ,$$

which is equivalent to

$$\hat{\sigma}_1^2 = \frac{1}{L}\sum_{j=1}^{L} o_j^2$$

referred to the vector $\mathbf{O}^2$;
e) estimating:

$$\hat{\sigma}_0^2 = \frac{1}{(M \times W \times NS - L)} \sum_{m,w,ns \notin V} z_{m,w,ns}^2,$$

which is equivalent to

$$\hat{\sigma}_0^2 = \frac{1}{(M \times W \times NS - L)} \sum_{j=L+1}^{M \times W \times NS} o_j^2$$

referred to the vector $\mathbf{O}^2$;
f) estimating a threshold

$$\hat{S}^{(i)}\left(p^{(i)}, \hat{\sigma}_1^2, \hat{\sigma}_0^2\right)$$

at the iteration ($i$) from Eq. 22;
g) classifying the $M \times W \times NS$ samples of the sorted set

$$\left\{z_{m,w,ns}\right\}$$

belonging to the respective vectors

$$\left(\mathbf{O}^{(k)}\right)^2,$$

$\mathbf{I}^{(k)}$ by enforcing the criterion:

$$z_{m,w,ns} > \hat{S} \Rightarrow m,w,ns \in V \Rightarrow z_{m,w,ns}^{STM} = z_{m,w,ns}$$

$$z_{m,w,ns} \leq \hat{S} \Rightarrow m,w,ns \notin V \Rightarrow z_{m,w,ns}^{STM} = 0;$$

where $z_{m,w,ns}^{STM}$ is the unmasked/masked sample. The criterion of above is equivalent to the following operating on the $\mathbf{M}^{(k)}_{ST\text{-multislot}}$ mask matrix (omitting index $k$ for brevity):

$$m,w,ns \in V \Rightarrow M_{ST\text{-multislot}(m,w,ns)} = 1$$

$$m,w,ns \notin V \Rightarrow M_{ST\text{-multislot}(m,w,ns)} = 0$$

The elements of the mask to be put at **1** are the ones addressed by the first $L$ elements of the $\mathbf{I}^{(k)}$ vector;
h) calculating $L^{(i+1)}$ as the new dimension of the set $V$;
i) comparing $L^{(i+1)}$ with the preceding $L^{(i)}$ and stopping the classification if $L^{(i+1)} = L^{(i)}$ otherwise estimating:

$$\hat{p}^{(i+1)} = L^{(i+1)}/M \times W \times NS$$

and repeating the previous steps from d) to i) cyclically until the end condition is met. An equivalent way to stop the iterations is that to check the condition $S^{(i+1)} = S^{(i)}$ at the step f). The experimented number of iterations is lesser than ten. At the end of the classification the set $V$ includes the first $L$ elements of the vector

$$\left(\mathbf{O}^{(k)}\right)^2,$$

while the set $V$ includes the remaining ($M \times W \times NS - L$) elements. The content of the $\mathbf{M}_{ST}$ mask matrix is consequently determined.

j) **Deep Temporal merging:** this step of the multislot procedure exploits a further opportunity in respect of the single-slot embodiment consisting of a deep temporal merging of the NS masks composing the $\mathbf{M}_{ST\text{-multislot}}$ matrix. The purpose of this step is that to collapse the $\mathbf{M}_{ST\text{-multislot}}$ matrix into a most reliable $\mathbf{M}_{ST}$ mask valid for the actual masking period, to be submitted to the successive steps of the procedure. Operatively a mask $\mathbf{M}_{SUM}$ (for the $k^{th}$ user) ($M \times W$ dimensioned) is calculated at first summing up all the corresponding NS elements ($m$, $w$, $ns$) of the NS $\mathbf{M}_{ST}$ masks composing the $\mathbf{M}_{ST\text{-multislot}}$ matrix as:

$$\mathbf{M}_{SUM} = \left\{ \mathrm{m}_{sum}\left(m, w\right) \right\}$$
$$\mathbf{M}_{ST-multislot} = \left\{ \mathrm{m}_{ST\text{-multislot}}\left(m, j\right) \right\}$$
$$\left\{ \mathrm{m}_{sum}\left(m, w\right) \right\} = \sum_{ns=0}^{NS-1} \mathrm{m}_{ST\text{-multislot}}\left(m, j\right), \qquad \text{Eq. 37}$$

where: j = w + ns $\times$ W.
Secondly, the actual $\mathbf{M}_{ST}$ mask matrix

$$\left\{ \mathrm{m}_{ST}\left(m, w\right) \right\}$$

is obtained introducing a discretional probability $p_{deep}$, for example: $p_{deep}$ at least 0,25 $\times$ NS, such as if:

$$\left\{ \mathrm{m}_{SUM}\left(m, w\right) \right\} \geq p_{deep} \times NS \quad \Rightarrow \quad \left\{ \mathrm{m}_{ST}\left(m, w\right) \right\} = 1 \qquad \text{Eq. 38}$$

whose explanation is that in any case communication takes place.

k) **Spatial merging:** merging is performed on the actual $\mathbf{M}_{SUM}$ mask matrix as the equivalent step j) of the first embodiment of the invention performs on the $\mathbf{M}_{ST}$ mask matrix (fig.7a).

Temporal merging at step k) of the first embodiment of the invention is proved to be unnecessary for all the multislot procedures.

All the considerations about the final masking operations for obtaining the $\mathbf{H}_{STB}$ channel band matrix for all the $K$ users are still valid. Masking cadence can be selected either slot-by-slot or block-by-block. The multislot procedure after an initial delay of $NS \times T_{burst}$ reaches the steady state; the delay allows a best approximation of the space-time distribution of the energy by means of the actual masking. When slot-by-slot cadence is selected the $\mathbf{H}_{STB}$ matrix valid for the actual burst has built exploiting the preceding ($NS$-1)$T_{burst}$, while if block-by-block cadence is selected the $\mathbf{H}_{STB}$ matrix completed at the end of the preceding block is valid for the whole duration of the actual block. It can also be appreciate that the singe-slot procedure disclosed for the first embodiment of the invention can be obtained as a particular case of the multislot procedure for $NS = 1$.

**Fig.35b** shows the **4-th variant** for "compact-multislot and extended-antennas" which operates on a compact set $M \times W$ dimensioned. With reference to the fig.35b, this variant is derived introducing the following modifications in the preceding 3-th variant:
a new classification variable

$$d_{m,w} = \sum_{ns=1}^{NS} z_{m,w,ns}^2$$

is determined at first from the variable $z$ which follows a Rayleigh distribution

$$z \sim R\left(z, \sigma_1^2\right).$$

In its turn $z^2$ is reasonably assumed to have an exponential decreasing power profile

$$z^2 \sim exp\left(\frac{1}{\sigma_1^2}\right).$$

The sum $d_{m,w}$ of $NS$ random variables $z^2$ each with exponential pdf is an Erlang distribution:

$$d_{m,w} \sim Erl\left(NS, \frac{1}{\sigma_1^2}\right),$$

the pdf of the random variable $d$ is:

$$f(d) = \frac{d^{NS-1}}{(NS-1)!}\left(\frac{1}{\sigma_1^2}\right)^{NS} e^{-\frac{d}{\sigma_1^2}}, \qquad \text{Eq. 39}$$

- vector

$$\left(\mathbf{O}^{(k)}\right)^2 = sort\left\{d_{m,w}\right\}$$

and corresponding $\mathbf{I}^{(k)}$ are obtained consequently;
- the dimension of the useful set is now $L = p \times M \times W$ and that of the noise set ($M \times W - L$) and the two variances are estimated from vector $((\mathbf{O}^{(k)})^2$ consequently;
- multiple mask matrix of Eq. 36 is unnecessary and the $\mathbf{M}_{SUM}^{(k)}$ mask of Eq. 37 is directly determined;
- threshold

$$\hat{S}^{(i)}\left(p^{(i)}, \hat{\sigma}_1^2, \hat{\sigma}_0^2\right)$$

is estimated from the following expression:

$$S\left(\sigma_0^2, \sigma_1^2, p\right) = \left(\frac{1}{\sigma_0^2} - \frac{1}{\sigma_1^2}\right)^{-1} ln\left(\left(\frac{\sigma_1^2}{\sigma_0^2}\right)^{NS} \cdot \frac{1-p}{p}\right) \qquad \text{Eq. 22a}$$

obtained minimizing the probability of uncorrect classification for Erlang pdf-s;

• deep temporal merging at step j) is unnecessary, but spatial merging at step k) is performed on the $\mathbf{M}_{\text{SUM}}^{(k)}$ mask for obtaining the $\mathbf{M}_{\text{STB}}^{(k)}$ band mask.

**Fig.36a** shows the **5-th variant** for "extended-multislot and compact-antennas" which operates on a compact set $W \times NS$ dimensioned. With reference to the fig.36a, this variant is derived introducing the following modifications inside the 3-th variant:

• a new classification variable

$$d_{w,ns} = \sum_{m=1}^{M} z_{m,w,ns}^2$$

is determined at first;

• vector

$$\left(\mathbf{O}^{(k)}\right)^2 = sort\left\{d_{w,ns}\right\}$$

and corresponding $\mathbf{I}^{(k)}$ are determined;

• the dimension of the useful set is now $L = p \times W \times NS$ and that of the noise set ($W \times NS$-$L$), the two variances are estimated from vector $(\mathbf{O}^{(k)})^2$ consequently;

• multiple mask matrix (Eq. 36) is now a multiple mask vector;

• threshold

$$\hat{S}^{(i)}\left(p^{(i)}, \hat{\sigma}_1^2, \hat{\sigma}_0^2\right)$$

is estimated from the following expression:

$$S\left(\sigma_0^2, \sigma_1^2, p\right) = \left(\frac{1}{\sigma_0^2} - \frac{1}{\sigma_1^2}\right)^{-1} ln\left(\left(\frac{\sigma_1^2}{\sigma_0^2}\right)^M \cdot \frac{1-p}{p}\right) \qquad \text{Eq. 22b}$$

still obtained minimizing the probability of uncorrect classification for the Erlang distribution

$$d_{w,ns} \sim Erl\left(M, \frac{1}{\sigma_1^2}\right);$$

• deep temporal merging of step j) is performed on the multiple mask vector for obtaining a cumulative mask vector similarly to Eq. 37;

• spatial merging step k) is unnecessary and the cumulative mask vector is mapped into the $\mathbf{M}_{\text{STB}}^{(k)}$ band mask.

**Fig.36b** shows the **6-th variant** for "compact-multislot and compact-antennas" which operates on a super-compact set $W$ elements long. With reference to the fig.36b, this variant is derived introducing the following modifications inside the 3-th variant:

• a new classification variable

$$d_w = \sum_{m=1}^{M} \sum_{ns=1}^{NS} z_{m,w,ns}^2$$

is determined at first;

- vector

$$\left(\mathbf{O}^{(k)}\right)^2 \ = \ sort\left\{d_{w,ns}\right\}$$

and corresponding $\mathbf{I}^{(k)}$ are determined;
- multiple mask matrix of Eq. 36 is unnecessary and the and the $\mathbf{M}_{SUM}^{(k)}$ mask of Eq. 37 is now a cumulative mask vector;
- the dimension of the useful set is now $L = p \times W$ and that of the noise set $(W - L)$, the two variances are estimated from vector $(\mathbf{O}^{(k)})^2$ consequently;
- threshold

$$\hat{S}^{(i)}\left(p^{(i)}, \hat{\sigma}_1^2, \hat{\sigma}_0^2\right)$$

is estimated from the following expression:

$$S\left(\sigma_0^2, \sigma_1^2, p\right) = \left(\frac{1}{\sigma_0^2} - \frac{1}{\sigma_1^2}\right)^{-1} ln\left(\left(\frac{\sigma_1^2}{\sigma_0^2}\right)^{(M \times NS)} \cdot \frac{1-p}{p}\right) \qquad \text{Eq. 22c}$$

still obtained minimizing the probability of uncorrect classification for the Erlang distribution

$$d_w \sim Erl\left(M \times NS, \frac{1}{\sigma_I^2}\right);$$

- deep temporal merging j) and spatial merging k) are both unnecessary and the cumulative mask vector is mapped onto the $\mathbf{M}_{STB}^{(k)}$ band mask..

The **7-th variant,** adds up the teaching of the preceding adaptive-RR patent application [REF. 2] and that of the first embodiment of the present invention, but it can be immediately extended to all the preceding variants. The already introduced arguments on the adaptive-RR method further integrated with the following ones meet the sufficient description requirements for the relevant part of the combination. More precisely:

- Estimation of the $\mathbf{H}_{LS}$ channel matrix is well known in the art.
- Since the user can be considered as decoupled, the $\mathbf{H}_{LS}$ channel matrix is spatial and temporal pre-whitened for all the $K$ users separately, similarly to Eq. 10 (or Eq. 10').
- Matrix $\mathbf{Z}^{(k)}$ is approximated by the low-dimensional channel $\mathbf{A}'_k \mathbf{B}'^H_k$, where

$$\mathbf{A}'_k = \left[\mathbf{a}'_{k,1}, \cdots, \mathbf{a}'_{k,r_k}\right] = \hat{\mathbf{R}}_{ns}^{-H/2} \mathbf{A}_k$$

are $r_k$ orthonormal whitened beamformers and

$$\mathbf{B}'_k = \left[\mathbf{b}'_{k,1}, \cdots, \mathbf{b}'_{k,r_k}\right] = \left(\mathbf{X}_k \mathbf{X}_k^H\right)^{1/2}$$

$\mathbf{B}_k$ are $r_k$ orthogonal whitened FIR filters, so that

$$Z^{(k)} \approx A'_k B'^H_k \text{ holds.} \qquad \text{Eq. 40}$$

- The $r_k$-dimensional spatio-temporal components (Reduced Rank) is obtained by minimizing the error of the approximation:

$$\mathbf{A}'_k, \mathbf{B}'_k = \arg \min_{\mathbf{A}'_k, \mathbf{B}'_k} \left\|\mathbf{Z}_k - \mathbf{A}'_k \mathbf{B}'^H_k\right\|_F \qquad \text{Eq. 41}$$

in the Frobenius norm. The optimization is known to be given starting from defining the following matrixes:

$$V_k = Z_k Z_k^H, \text{ for } n = 1, \cdots r_k \qquad \text{Eq. 42}$$

$$\hat{\mathbf{U}}_k = \mathrm{eigv}_{rk}\left\{\hat{\mathbf{V}}_k\right\} \qquad \text{Eq. 43}$$

where eigv$_{\mathrm{rk}}$ where denotes the $M \times r_k$ matrix of the $r_k$ leading eigenvectors of the matrix $\hat{\mathbf{V}}_k$. Whitened estimated $\mathbf{A}'_k$, $\mathbf{B}'_k$ are given by:

$$A'_k = \hat{U}_k \qquad \text{Eq. 44}$$

$$B'_k = (X_k X_k^H)^{1/2} Z^H \hat{R}_{kns}^{-1/2} \hat{U}_k \qquad \text{Eq. 45}$$

- The optimum criterion stated in Eq. 41 cannot be carried out in practice, therefore $r_k$ is obtained according to the information theory criterion based on the Kullback-Leibler information measure for the estimation of the number of independent sources impinging on a uniform linear array, as proposed in the article [REF. 8] of M. Wax, I. Ziskind, "Detection of the number of coherent signals by the MDL principle", IEEE Trans. Acoustic Speech and Signal Processing, Vol. 37, pp.1190-1196, August 1989, which is incorporated by reference. The information theory criterion is based on the Minimum Description Length (MDL), applied in the present case for the description of the temporal covariance matrix of the full-rank channel matrix $\mathbf{Z}_k$ relative to the $k^{th}$ user. The MDL algorithm for the selection of the optimum $r_k$ avails of the following steps:

    1. define a vector $\mathbf{L}$ ($M \times 1$ dimensioned) of null elements;
    2. compute a matrix $\mathbf{T} = \mathbf{Z}_k \mathbf{Z}_k^H$ and its eigenvalues $\lambda_i = (1=1,...,M)$;
    3. execute for $p=0,...,M$-1
    4.

$$\mathbf{L}(p+1) = -W(m-p)\log\left(\frac{\left(\prod_{i=p+1}^{M}\lambda_i\right)^{\frac{1}{M-p}}}{\frac{1}{M-p}\sum_{i=p+1}^{M}\lambda_i}\right) + \frac{1}{2}p(2M-p+1)\log W$$

Eq. 46

5. minimum of the vector $\mathbf{L} \rightarrow$ (*pos, val*) (position inside the vector, minimum value);

6. if (*pos*-1=0) then $r_k = pos$-1; $r_k$ is the output of the MDL algorithm (repeated for each user).

- The matrix $\mathbf{Z}_k$ (Eq. 40) obtained as above is then submitted to the first embodiment of the invention, or its variants 1 to 4, to benefit of the further complexity reduction. At the end the band channel matrix $\mathbf{H}_{STB}$ of fig.7 is obtained.

Now, with reference to the remaining **Figures 37** to **41,** a Base Station receiver suitable for radiomobile Base Stations exploiting a set of *M* antennas is disclosed. The receiver depicted in **fig.39** includes a channel estimator based on the Temporal Masking under-parameterization method already disclosed and a Data Detector able to exploit the resulting reduced-complexity channel matrix. The Base Station receiver of fig.39 is valid for CDMA systems but can be easily arranged for the GSM.

**Fig.37** shows a discrete time model of a *M*-antennas CDMA system of the prior art modeling from the transmitted data to the received sequences. The arguments developed for illustrating the model of fig.37 allow to define a matrix **A** visible in **fig.38b** and known in the art. The aim matrix **A** is that of supporting data detection. For the case of the present invention a new Matrix $\mathbf{A}_{STB}$, partially visible in **fig.38c,** assumes the same structure as the matrix **A** but with a modified content which results from the use of a Temporally Masked channel matrix $\mathbf{H}_{STB}$. The new matrix $\mathbf{A}_{STB}$ supports the operation of the Data Detector belonging to the radiomobile Base Station receiver of fig.39.

With reference to the **fig.37** the overall CDMA system is composed of *M* identical sub-models SBM-1, ..., SBM-M each relevant to the links between all the *K* users and a $m^{th}$ antenna, so that all the possible $M \times K$ links between the *K* users and the *M* antennas are considered by the model. Each sub-model SBM -1, ..., SBM -M includes *K* cascades of:

- an 1:Q oversampler of the datum $d^{(k)}_n$ transmitted from the $k^{th}$ user;
- a block $c^{(k)}$ including the $OVSF_k$ (Orthogonal Variable Spreading Factor) code sequence for the $k^{th}$ user;
- a block $h^{(k,m)}_n$ including the relevant channel impulse response previously estimated.

Each cascade outputs a respective sequence $S^{(k,m)}_n$ directed to an input of a digital adder $ADU^{(m)}$ which generates a summation sequence $S^{(m)}_n$ for the transmission from the K transmitters to the $m^{th}$ antenna. A second adder $ADN^{(m)}$ adds a Gaussian noise $n^{(m)}_n$ to the sequence $s^{(m)}_n$ obtaining a more realistic reception sequence $e^{(m)}_n$ for the aforementioned links. All the *M* reception sequences $e^{(1)}_n$, ... $e^{(M)}_n$ reach a DATA DETECTOR block that jointly detects the original data $d^{(1)}_n, \cdots, d^{(K)}_n$.

Thanks to its modular structure a detailed description of the only SBM-1 sub-model can be easily extended to the whole system. With reference to the SBM-1 block, $d^{(1)}_n, d^{(2)}_n, \cdots, d^{(k)}_n, \cdots, d^{(K)}_n$ represent data transmitted at symbol time $T_s$ from as many *K* users in one semi-burst Data block 1(2) of fig.18. Each user transmits a sequence of data:

$$\mathrm{d}^{(k)} = [d^{(k)}_1, d^{(k)}_2, \cdots, d^{(k)}_N]^T \quad k=1,\cdots,K \qquad \text{Eq. 47}$$

constituted by *N* symbols; each of them is expanded by a Q-chips code:

$$\mathrm{c}^{(k)} = [c_1{}^{(k)}, c_2{}^{(k)}, \cdots, c_Q{}^{(k)}]^T \qquad k = 1, \cdots, K \qquad \text{Eq. 48}$$

different from each user. Expansion is obtained by firstly oversampling of a *Q* factor each symbol $d^{(k)}_n$ and then DS-CDMA (Direct Sequences CDMA) modulating the oversampled symbol with the respective OVSF (Orthogonal Variable Spreading Factor) code sequence $\mathbf{c}^{(k)}$. The expansion can also be seen as the cascade of a 1:Q oversampler and a FIR filter whose impulse response is just the sequence $\mathbf{c}^{(k)}$. The propagation towards the antenna 1 of the BTS is schematized with the impulse response:

$$h^{(k,1)} = [h_1{}^{(k,1)}, h_2{}^{(k,1)}, \cdots, h_W{}^{(k,1)}]^T \qquad k = 1, \cdots, K \qquad \text{Eq. 49}$$

constituted of $W$ samples at chip time $T_c$ including the combination of the transmission and reception filters (radix of raised cosine frequency responses) and the channel $h(t)^{(k,1)}$. Eq. 49, extended to consider all the M antennas, gives rise to a partition of the $\mathbf{H}_{LS}$ channel matrix into $M$ sub-matrixes $\mathbf{H}_{LS}^{(m)}$ like the $\mathbf{H}_{LS}^{(l)}$ one (fig.37).

OVSF code and channel combination takes to the definition of a linear system at chip time $T_c$ having the following time response:

$$b^{(k,1)} = [b_1^{(k,1)}, b_2^{(k,1)}, \cdots, b_{Q+W-1}^{(k,1)}]^T = c^{(k)} * h^{(k,1)} \quad k = 1, \cdots, K \qquad \text{Eq. 50}$$

where * is the convolution operator. The received sequence:

$$e^{(1)} = [e_1^{(1)}, e_2^{(1)}, \cdots, e_{N.Q+W-1}^{(1)}]^T \qquad \text{Eq. 51}$$

results as the summation of $K$ synchronous sequences $\mathbf{s}^{k,(1)}$ each $\Lambda = N \times Q + W - 1$ long, perturbed by an additive AWGN noise:

$$n^{(1)} = [n_1^{(1)}, n_2^{(1)}, \cdots, n_{N.Q+W-1}^{(1)}]^T \qquad \text{Eq. 52}$$

with covariance matrix:

$$\mathbf{R}_t^{(1)} = E\left[\mathbf{n}^{(1)}\mathbf{n}^{(1H)}\right] = \sigma^2 \mathbf{I}_\Lambda . \qquad \text{Eq. 53}$$

The signal

$$\mathbf{e}^{,(1)} = \sum_{k=1}^{K} \mathbf{s}^{k,(1)} + \mathbf{n}^{(1)}$$

received at chip time on the antenna 1 relatively to all the $K$ users can be written as :

$$e^{,(1)} = A^{(1)} \cdot d + n^{(1)} \qquad \text{Eq. 54}$$

having indicated with $\mathbf{d}$ the reorganization of the overall data vector for the K users into $N$ blocks of $K$ symbols each (sorted by symbol 1,....,$N$) as in the following:

$$d = [d_1^{(1)}, d_1^{(2)}, \cdots d_1^{(K)}, \ d_2^{(1)}, d_2^{(2)}, \cdots, d_2^{(K)}, \cdots, \ d_N^{(1)}, d_N^{(2)}, \cdots, d_N^{(K)}]^T \qquad \text{Eq. 55}$$

and with

$$\mathbf{A}^{(1)} = \left[a_{i,j}^{(1)}\right]$$

the signature matrix that includes, for all the N chips, the convolution obtained by vectors $\mathbf{b}^{(k,1)}$ in the following way:

$$a^{(1)}_{Q(n-1)+1,K\cdot(n-1)+k} = b^{k(1)}_l \qquad \text{Eq. 56}$$

per $k = 1,\cdots,K$; $n = 1,\cdots,N$; $l = 1\cdots Q+W$-1 and null elsewhere.

The discrete channel model for the link between the $k^{th}$ user and all the $M$ antennas can be represented by a channel vectors $\mathbf{H}^{(k)}$ including the $M$ channel vectors:

$$H^{(k)} = [h^{(k,1)}, h^{(k,2)},\cdots, h^{(k,m)},\cdots m\; h^{(k,M)}]^T \qquad k = 1,\cdots,K$$

$$h^{(k,m)}=[h^{(k,m)}_1,h^{(k,m)}_2,\cdots,h^{(k,m)}_W]^T \qquad k = 1,\cdots,K \qquad e \qquad m = 1,..,M. \qquad \text{Eq. 57}$$

The combination between the spreading code $\mathbf{c}^{(k)}$ and the channel $\mathbf{h}^{(k,m)}$ results:

$$B^{(k)} = [b^{(k,1)}, b^{(k,2)},\cdots, b^{(k,m)},\cdots,b^{(k,M)}]^T \qquad k = 1,\cdots,K$$

$$b^{(k,m)} = [b^{(k,m)}_1, b^{(k,m)}_2,\cdots,b^{(k,m)}_{Q+W\text{-}1}]^T = c^{(k)} * h^{(k,m)} \qquad k = 1,\cdots,K; \; m = 1,\cdots,M \qquad \text{Eq. 58}$$

The sequences received at chip time on all the $M$ antennas relatively to all the $K$ users are:

$$E = [e^{(1)},e^{(2)},\cdots,e^{(m)},\cdots,e^{(M)}]^T$$

$$e^{(m)} = [e^{(m)}_1, b^{(m)}_2,\cdots, b^{(m)}_{N\cdot Q+W\text{-}1}]^T \qquad \text{Eq. 59}$$

and they result as the summation of $K$ sequences each $\Lambda = NxQ + W$-1 long, perturbed by an additive AWGN noise:

$$N=[n^{(1)}, n^{(2)},\cdots;n^{(m)}\; n^{(M)}]^T \qquad k=1,\cdots,K$$

$$n^{(m)} = [n^{(m)}_1,n^{(m)}_2,\cdots,n^{(m)}_{N\cdot Q+W\text{-}1}]^T; \qquad \text{Eq. 60}$$

each sequence $\mathbf{n}^{(m)}$ has a space covariance matrix:

$$\mathbf{R}_{ns} = \left[r_{i,j}\right]; \qquad r_{i,j} = E\left[n^{(i)}_x \cdot n^{(j)*}_x\right] \qquad \text{Eq. 61}$$

The received signal $\mathbf{e}^{(m)}$ can be generalized from the Eq. 54 valid for signal $\mathbf{e}^{(1)}$ as:

$$e^{\prime(m)} = A^{(m)}\cdot d + n^{(m)} \qquad \text{Eq. 62}$$

where $\mathbf{A}^{(m)}$ is the generalization to the $m^{th}$ antenna of the signature matrix $\mathbf{A}^{(1)}$ defined in Eq. 56:

$$a^{(m)}_{Q(n-1)+l,K\cdot(n-1)+k} = b^{(k,m)}_l \qquad \text{Eq. 63}$$

in such a case Eq. 58 is modified to express the combination between the spreading codes $\mathbf{c}^{(k)}$ of all the $K$ users and

the channel $\mathbf{h}^{(k,m)}$ as:

$$B^{(m)}=[b^{(1,m)},b^{(2,m)},\cdots,b^{(k,m)},\cdots,b^{(k,m)}]^{T} \qquad k=1,\cdots,K \qquad \text{Eq. 64}$$

where $\mathbf{b}^{(k,m)}$ is defined as in the Eq.58. Matrix $\mathbf{B}^{(m)}$ of Eq. 64 is visible in **fig.38a.** Introducing the further definitions:

$$e=[e^{(1)T},e^{(2)T},\cdots,e^{(m)T},\cdots e^{(M)T}]T, \qquad \text{Eq. 66}$$

$$A=[A^{(1)T},A^{(2)T},\cdots,A^{(m)T},\cdots,A(M)^{T}]^{T}, \qquad \text{Eq. 66}$$

$$n=[n^{(1)T},n^{(2)T},\cdots,n^{(m)T},\cdots,n^{(M)T}]^{T}, \qquad \text{Eq. 67}$$

the following overall system for the link between all the K users and all the M antennas can be written:

$$e=A \cdot d+n, \qquad \text{Eq. 68}$$

for the so reorganized sequences the space noise covariance matrix $\mathbf{R}_n$ is:

$$\mathbf{R}_{n} = E\left[\mathbf{n} \cdot \mathbf{n}^{H}\right] = \mathbf{R}_{ns} \otimes \mathbf{I}_{\Lambda} . \qquad \text{Eq. 69}$$

The structure of the overall signature Matrix **A** of Eq. 66 is visible in **fig.38b.**

The $N \times Q \times M$ sub-matrixes $\mathbf{B}^{(m)}$ of **fig.38a** of the prior art are unmasked (so as the overall signature matrix **A**) and the complexity of the detection is not reduced consequently. On the contrary, for data detection in presence of the band masked channel matrix $\mathbf{H}_{STB}$ of the present invention a masked signature matrix $\mathbf{A}_{STB}$ is provided, as shown in fig.38c. Matrix $\mathbf{A}_{STB}$ is modular like matrix **A**, each module includes $N \times Q$ $\mathbf{B}^{(m)}_{STB}$ masked sub-matrixes like those visible in **fig.38d**. An $m^{th}$ $\mathbf{B}^{(m)}_{STB}$ sub-matrix is defined as in Eq. 64:

$$B^{(m)}_{STB}= [b^{(1,m)}_{STB},b^{(2,m)}_{STB},\cdots,b^{(k,m)}_{STB},\cdots b^{(K,m)}_{STB}]^{T} \qquad k = 1,\cdots,K ;$$

and can be obtained from a sub-matrix $\mathbf{H}^{(m)}_{STB}$ like the $\mathbf{H}^{(1)}_{LS}$ of fig.37. The $\mathbf{b}^{(k,m)}_{STB}$ vector is forced to assume a time masking like that of the $m^{th}$ line of the $\mathbf{H}^{k}_{STB}$ matrix relevant for the $k^{th}$ user. For example, $\mathbf{b}^{(k,m)}_{STB}$ reflects the shape of the band matrix visible in fig.7. Furthermore, because of the preceding band masking, the $\mathbf{b}^{(k,m)}_{STB}$ vector ($m = 1,...,M$) relevant to a $k^{th}$ user has the same time structure for all the M antennas, so as all the $\mathbf{b}^{(k,m)}_{STB}$ vector drawn up in colums in matrix $\mathbf{A}_{STB}$ have the same time structure. This is the final effect on the data detection consequent to have Band Masked the $\mathbf{H}_{LS}$ channel estimate. Matrix $\mathbf{A}_{STB}$ enters an overall system like that of Eq. 68 for the detection of the transmitted data sequences by the receiver; the final system is:

$$e = A_{STB} \cdot d + n. \qquad \text{Eq. 70}$$

in which the overall space noise covariance matrix of noise **n** shall be re-estimated in view of the Space-Time masked channel $\mathbf{H}_{STB}$. Maintaining the same denomination $\mathbf{R}_n$ and indicating with $\mathbf{R}'_{ns}$ the re-estimated $\mathbf{R}_{ns}$, Eq. 69 becomes:

$$\mathbf{R}_{n} = E\left[\mathbf{n} \cdot \mathbf{n}^{H}\right] = \mathbf{R}'_{ns} \otimes \mathbf{I}_{\Lambda} . \qquad \text{Eq. 69'}$$

The radiomobile Base Station Receiver of **fig.39** includes the following main blocks:

- *M* identical BB-EXT blocks;
- a complexity-reduction channel estimator block COMP-RED;
- *M* identically structured signature blocks SIGN-1, ..., SIGN-M;
- a ZF-BLE DATA DETECTOR block.

Generally speaking the names of the blocks indicate their functions. The *M* identical BB-EXT blocks are interposed between as many antennas 1, 2, ..., *M* composing the set and both the COMP-RED and ZF-BLE DATA DETECTOR blocks. The channel estimator COMP-RED includes the following blocks: LS-CHEST, SPn-ES, MID, WST, RR (dashed), SORTER, CLASS, MASK, pdf-STIM, ADAPT-TRSH, MERGING, and BAND-MASKING. Block MID stores the *K* training sequences **X** transmitted in midamble position of the burst of fig. 18. The output of the channel estimator COMP-RED is the channel matrix $\mathbf{H}_{STB}$ sent to the input of all the *M* signature blocks SIGN. Each block SIGN-1, ....., SIGN-M includes a group of *K* memory blocks SPRD-1, ....., SPRD-K for storing as many $OVSF_k$ code $c^{(k)}$, and a group of *N* convolutional blocks CONV1, ....., CONV-N (the K oversampler Q of fig.37 are omitted for brevity). Each signature block SIGN-1, ....., SIGN-M receives a respective $\mathbf{H}^{(m)}_{STB}$ sub-matrix of the $\mathbf{H}_{STB}$ matrix channel relevant to the *m*th antenna; the $\mathbf{H}^{(m)}_{STB}$ sub-matrix is forwarded to the group of *N* blocks CONV1, ....., CONV-N, each of them performing a replica of the convolution between the K codes $c^{(k)}$ and the $\mathbf{H}^{(m)}_{STB}$ sub-matrix obtaining an *m*th partition of the overall signature matrix $\mathbf{A}_{STB}$ (Figures 38c and 38d) coming to the block ZF-BLE DATA DETECTOR. In case the receiver of fig.39 has to be arranged for a GSM (or GSM-derived) system the *M* blocks SIGN don't include the SPRD and CONV groups but the structure of the new $\mathbf{A}_{STB}$ matrix is immediately referable to the preceding one.

As far as the operation of the channel estimator block COMP-RED concerns, each block BB-EXT provides to:

- correctly receive the RF signals transmitted from all the K users;
- RF filtering and down converting the overall received signal;
- Q-PSK demodulating, sampling and A/D converting the base band signal;
- base band filtering with a digital filter matched to the chip obtaining the base band digital samples **Y, e** corresponding to the *K* transmitted bursts of fig.18 received on all the *M* antennas, in correspondence of the Training sequence and the two Data blocks, respectively.

Elements of **Y** and e matrix are stored in the relevant blocks BB-EXTs to be processed by the successive blocks COMP-RED and ZF-BLE DATA DETECTOR, respectively. Both matrix **Y** and the corresponding stored midamble matrix **X** reach the input of LS-CHEST block for estimating the full-complexity channel matrix $\mathbf{H}_{LS}$ with Eq. 4 directly, or using some alternative known method. Matrices **Y, X** and $\mathbf{H}_{LS}$ also reach the inputs of SPn-ES block which estimates the space noise $\mathbf{R}_{ns}$ matrix by means of Eq. 5. Matrices **X**, $\mathbf{H}_{LS}$ and $\mathbf{R}_{ns}$ are inputted to the WST block for spatially (and in case also temporally) pre-whitening the LS channel matrix $\mathbf{H}_{LS}$, as in Eq. 10' (or in Eq. 10), obtaining the whitened channel matrix **Z** to be complexity reduced. Downstream dashed block RR only concerns the **7-th variant** and takes care of the adaptive rank reduction of the Z channel matrix. The remaining blocks of COMP-RED perform the classification algorithm of the first embodiment of the method invention and its variants. More precisely:

- block SORTER sorts by decreasing values the elements *z* of the **Z** matrix and provides them to the cascaded block CLASS;

- block CLASS receives a threshold $\hat{S}$ from block ADAPT-TRSH and classifies the sorted elements z in order to fill the set $V$ and $\bar{V}$ under the hypotheses $H_1$ and $H_0$, respectively;

- block pdf-STIM receives the classified elements z in order to estimate the pdf parameters $\hat{p}, \hat{\sigma}^2_1, \hat{\sigma}^2_0$ sent to the block ADAPT-TRSH, together with an initial probability $p_{in}$, in order to estimate the threshold $S$;

- block MASK receives from the upstream block CLASS the final classified elements *z* for generating the space-time mask matrix $\mathbf{M}_{ST}$ of fig.7a;

- block MERGING receives the matrix $\mathbf{M}_{ST}$ from the preceding block MASK and performs the spatial and temporal merging in order to obtain the band mask matrix $\mathbf{M}_{STB}$ of fig.7b;

- block BAND-MASKING receives both the $\mathbf{M}_{STB}$ mask matrix from the preceding block MERGING and the channel matrix $\mathbf{H}_{LS}$ from the LS-CHEST block, in order to band masking the matrix $\mathbf{H}_{LS}$ and obtaining the output matrix $\mathbf{H}_{STB}$ sent to the block SIGN and the SPn-ES block. This last re-estimates a new space noise covariance matrix $\mathbf{R}'_{ns}$ using the $\mathbf{H}_{STB}$ matrix in as in the following:

$$\hat{R}'_{ns} = \hat{R}_{yy} - H_{STB}\,\hat{R}_{xy} \qquad\qquad \text{Eq. 5'}$$

Block ZF-BLE DATA DETECTOR is a so-called "Zero-Forcing Block Linear Equalizer" which is a data decorrelator known in the art (except for the particular structure of the $\mathbf{A}_{STB}$ matrix). In case of CDMA systems the data detector block operates on the expression e = $\mathbf{A}_{STB} \cdot$ **d** + **n** (Eq. 70) minimizing the quadratic form:

$$\left(\mathbf{e} - \mathbf{A}_{STB} \cdot \hat{\mathbf{d}}\right)^{H} \mathbf{R}'^{-1}_{ns} \left(\mathbf{e} - \mathbf{A}_{STB} \cdot \hat{\mathbf{d}}\right) \qquad\qquad \text{Eq. 71}$$

whose aim is that of eliminating both ISI (InterSymbol Interference) and MAI interference without considering the noise level. The solution of Eq. 71 is:

$$d = (A^{H}_{STB} R^{-1}_{n} A_{STB})^{-1} \cdot A^{H}_{STB} R^{-1}_{n}\, e \qquad\qquad \text{Eq. 72}$$

suitable for noise levels not excessively low. The noise covariance matrix $\mathbf{R}^{-1}_{n}$ is that of Eq. 69'. The particular structure of Eq. 72 indicates the presence of two cascaded blocks, namely a Whitening Matched Filter (WMF) $\mathbf{A}^{H}_{STB}\,\mathbf{R}^{-1}_{n}$ acting on the reception signal **e** for estimating data named $\mathbf{d}_{MF}$ at this stage, and a second block $(A^{H}_{STB} R^{-1}_{n} A_{STB})^{-1}$ for canceling ISI and MAI from the $\mathbf{d}_{MF}$ data.

A valid alternative to the ZF-BLE DATA DETECTOR block is a so called "Minimum Mean Square Error - Block Linear Equalizer" (MMSE-BLE), referred to the result of the expression:

$$(\hat{d}\text{-d})^{H}(\hat{d}\text{-d}) \qquad\qquad \text{Eq. 73}$$

which is the expected MSE value on the data estimation. The solution of the minimization problem leads to:

$$\hat{d} = (A^{H}_{STB} R^{-1}_{n} A_{STB} + R^{-1}_{d})^{-1} \cdot A^{H}_{STB} R^{-1}_{n}\, e \qquad\qquad \text{Eq. 74}$$

with

$$\mathbf{R}_{d} = E\!\left[\mathbf{dd}^{H}\right].$$

The MMSE-BLE equalizer doesn't entirely eliminate ISI and MAI interference except for infinite SNR, nonetheless it is known in the art that BER at the output of this is equalizer is lower than ZF-BLE for all the noise levels and number of users.

Looking at the content of the $\mathbf{A}_{STB}$ matrix it can be appreciate the great deal of null elements which strongly simplify the data detection and improve the performance of the receiver, as shown in the **Figures 40** and **41**. The two Figures are referred to comparative simulations of the receiver of the present invention, complete of channel estimation and S-T multi-user detection, faced to a GTU channel. Performance is evaluated for uncorrelated and correlated noise in a tri-sectorial cellular system. The correlated noise is generated by 3 intercell interferers randomly located within the 120° support. Simulations involve both the statistical parameters of the GTU channel and the operation of the radiomobile Base Station Receiver of **fig.39.** The last is engaged in time slotted CDMA proposed for 3rd generation system (TDD-UTRA) by UMTS standard ETSI: "Physical channels and mapping of transport channels onto physical channels (TDD), TS-125 221, V3.3.0 2000-06; [REF. 9]. Numerical results are for the following scenario: $M$ = 8 antennas; $K$ = 8 active users randomly located within the tri-sectorial cell; channel length up to $W$ = 57 chips; spreading code $Q$ = 16 chips/symbol; chip shaped as squared raised cosine with roll-off 0.22; and chip rate of 3.84 Mchips/s (Traffic Burst 1 of TDD-UTRA). The length of the data block is $N_{b}$ = 61 QPSK modulated symbols, training sequences are chosen according to standard specifications with length $N_{m}$ = 512.

**Fig.40** shows the (average) performance for spatially uncorrelated noise in terms of BER for uncoded bits vs. $SNR = E_{bit}/N_{0}$. **Fig.41** shows the (average) performance for spatially correlated noise in terms of BER vs. SIR for 3 intercell interferers. In the two Figures the BER for perfect channel state information (**H**, **R**$_{ns}$) is shown as reference.

The comparison with respect to the LS estimate of the S-T channel matrix indicates that the gain of the radiomobile Base Station Receiver of fig.39 (LS+TM) is approximately 4 ÷ 6 dB for all the SNR/SIR values considered here.

**Claims**

1. Method for under-parameterizing the channel estimate in a radiomobile Base Station Receiver exploiting set of $M$-antennas for receiving user data bursts transmitted from one or more simultaneously active mobile stations on an assigned carrier, including the steps of:

 a) estimating, in correspondence of a training sequence included in each data burst and known to the receiver, the elements of a full-dimensional space-time channel model settled as a memory matrix table ($\mathbf{H}_{LS}$) including the $W$ most significant samples of the channel impulse response relevant to the $M$ links insisting between the one or each mobile station and the $M$-antennas;
 b) estimating a spatial noise covariance matrix ($\mathbf{R}_{ns}$) from the residual of the channel estimation, assuming as known the temporal correlation of the noise on the various channels, **characterized in that** includes the further steps of:
 c) filtering said full-dimensional space-time channel matrix ($\mathbf{H}_{LS}$) by means of said spatial noise covariance matrix ($\mathbf{R}_{ns}$) to make spatially uncorrelated, or spatially whitened, the noise on the various channels in order to describe the elements of said full-dimensional space-time channel matrix ($\mathbf{H}_{LS}$) by means of a relevant statistical distribution of the amplitudes;
 d) classifying as useful or noise the elements of the whitened set ($\mathbf{Z}_{LS}$) using a discriminating threshold ($S$) which is dynamically estimated in order to minimize the probability of uncorrect classification;
 e) zeroing the elements of the full-dimensional space-time channel matrix ($\mathbf{H}_{LS}$) corresponding to the elements classified as unuseful.

2. Method for under-parameterizing the channel estimate according to claim 2, **characterized in that** before the classification step d) said full-dimensional space-time channel matrix ($\mathbf{H}_{LS}$) is additionally filtered by means of a correlation matrix of one or more uncorrelated training sequences assigned to one or more users one to one, in order to makes temporally uncorrelated, or temporally whitened, the channel estimation of each user.

3. Method for under-parameterizing the channel estimate according to claim 1 or 2, **characterized in that** between the classification step d) and the zeroing step e) a further intermediate step δ) is introduced for calculating the percentage of the elements classified as useful relatively to the elements relevant to all the $M$ antennas at the same discrete time instant and taking as useful too all the remaining elements of the whitened set ($\mathbf{Z}_{LS}$) relevant to the same discrete time instant if said percentage is greater than a fixed value depending on the maximum distance between adjacent antennas, otherwise zeroing the useful elements contributing to said percentage.

4. Method for under-parameterizing the channel estimate according to claim 3, **characterized in that** said fixed value of the percentage calculated at step δ) is at least 30%.

5. Method for under-parameterizing the channel estimate according to claim 3 or 4, **characterized in that** step δ) is extended for taking as useful too all the elements of the full-dimensional space-time channel matrix ($\mathbf{H}_{LS}$) relevant to discrete time instants immediately preceding and following an useful element, in order to match those channels introducing temporal correlation between adjacent impulses of the channel responses and neutralize possible unsynchronizations.

6. Method for under-parameterizing the channel estimate according to one of the preceding claims, **characterized in that** the zeroing step e) is carried out through a mask matrix ($\mathbf{M}_{ST}$, $\mathbf{M}_{STB}$) with 1 in the position of the elements classified as useful and zero elsewhere.

7. Method for under-parameterizing the channel estimate according to any claim from 3 to 6, **characterized in that** said full-dimensional space-time channel matrix ($\mathbf{H}_{LS}$) includes as many $W$-elements vectors ($\mathbf{h}^{(1)},\cdots,\mathbf{h}^{(M)}$) as the number of the $M$ antennas and by effect of the zeroing step e) the resulting space-time channel matrix assumes a band configuration ($\mathbf{H}_{STB}$) relevant to each simultaneously active user.

8. Method for under-parameterizing the channel estimate according to one of the preceding claims, **characterized in that** the transmission carrier is assigned time division to the active users and under-parameterization is extended on *NS* successive time slots at a time, the length *NS* of the estimation window depending on the stationariness of the channel and/or the mobile speed.

9. Method for under-parameterizing the channel estimate according to the preceding claim, **characterized in that** said spatial noise covariance matrix ($\mathbf{R}_{ns}$) is averaged on said number *NS* of successive time slots and the average spatial noise covariance matrix is used for spatially filtering said full-dimensional space-time channel matrix ($\mathbf{H}_{LS}$) at the filtering step c).

10. Method for under-parameterizing the channel estimate according to the preceding claim when it depends on claim 6, **characterized in that** said mask matrix ($\mathbf{M}_{ST}$, $\mathbf{M}_{STB}$) for each active user is calculated by the following steps of:

$$\mathbf{M}_{\mathrm{SUM}} = \{\mathrm{m}_{\mathrm{sum}}(m,w)\}$$

$$\mathbf{M}_{\mathrm{ST-multislot}} = \{\mathrm{m}_{\mathrm{ST\text{-}multislot}}(m,j)\}$$

• calculating

$$\{\mathrm{m}_{\mathrm{sum}}(m,w)\} = \sum_{ns=0}^{NS-1} \mathrm{m}_{\mathrm{ST\text{-}multislot}}(m,j),$$

$$j = w + ns \times W$$

where $\mathbf{M}_{\mathrm{ST\text{-}multislot}}$ corresponds to the union of *NS* successive mask matrix ($\mathbf{M}_{ST}$, $\mathbf{M}_{STB}$) and $m=1,\cdots,M$; $w=1,\cdots W$; $ns=1,\cdots,NS$;

• introducing a discretional probability $p_{deep}$ such as if:

$$\{\mathrm{m}_{\mathrm{SUM}}(m,w)\} \geq p_{deep} \times NS \quad \Rightarrow \quad \{\mathrm{m}_{\mathrm{ST}}(m,w)\} = 1$$

being

$$\{\mathrm{m}_{\mathrm{ST}}(m,w)\}$$

as many elements of said mask matrix ($\mathbf{M}_{ST}$, $\mathbf{M}_{STB}$) valid for the actual time slot.

11. Method for under-parameterizing the channel estimate according to the preceding claim, **characterized in that** said discretional probability $p_{deep}$ is at least $0{,}25 \times NS$.

12. Method for under-parameterizing the channel estimate according to one of the preceding claims, **characterized in that** further includes the following steps of:

• operating on the elements of the whitened set ($\mathbf{Z}_{LS}$) in order to obtain a classification variable ($z_{m,w}$, $z_{m,w,ns}$, $d_{m,w}$, $d_{w,ns}$, $d_w$) spanning a relevant classification set;
• arbitrarily assigning an initial probability ($p_{in}$) that an element of the classification set belong to the useful subset ($H_1$);
• determining a suitable mathematical expression for estimating said discriminating threshold ($S$) that minimizes the probability of uncorrect classification from the statistical distribution of the classification variable ($z_{m,w}$, $z_{m,w,ns}$, $d_{m,w}$, $d_{w,ns}$, $d_w$);

- recursively executing the classification step d) for estimating the discriminating threshold ($S$) and the statistical parameters of the useful ($H_1$) and noise ($H_0$) subset starting from said initial probability ($p_{in}$) and the suitable mathematical expression of the discriminating threshold ($S$);
- mapping the elements classified as noise into corresponding elements to be zeroed of said full-dimensional space-time channel matrix ($\mathbf{H}_{LS}$).

**13.** Method for under-parameterizing the channel estimate according to the preceding claim, **characterized in that**:

- the classification variable ($z_{m,w}$) coincides with the module of any element of the whitened set ($\mathbf{Z}_{LS}$);
- the dimension of the classification set is $M \times W$;
- said statistical distribution is the Rayleigh distribution;
- said mathematical expression which minimizes the probability of uncorrect classification is the following:

$$S\left(\sigma_0^2, \sigma_1^2, p\right) = \left[ 2\left(\frac{1}{\sigma_0^2} - \frac{1}{\sigma_1^2}\right)^{-1} ln\left(\frac{\sigma_1^2}{\sigma_0^2} \cdot \frac{1-p}{p}\right) \right]^{1/2}$$

where: $S$ is said discriminating threshold, $\sigma_1^2$ is the variance of the useful subset ($H_1$), $\sigma_0^2$ is the variance of the noise subset ($H_0$), and $p$ is the probability that an element of the classification set belong to the useful subset ($H_1$).

**14.** Method for under-parameterizing the channel estimate according to claim 12 when it depends on claim 9, **characterized in that**:

- the classification variable ($z_{m,w,ns}$) coincides with the module of any element of the NS sequential whitened set ($\mathbf{Z}_{LS}$);
- the dimension of the classification set is $M \times W \times NS$.
- said statistical distribution is the Rayleigh distribution;
- said mathematical expression which minimizes the probability of uncorrect classification is the following:

$$S\left(\sigma_0^2, \sigma_1^2, p\right) = \left[ 2\left(\frac{1}{\sigma_0^2} - \frac{1}{\sigma_1^2}\right)^{-1} ln\left(\frac{\sigma_1^2}{\sigma_0^2} \cdot \frac{1-p}{p}\right) \right]^{1/2}$$

where: $S$ is said discriminating threshold, $\sigma_1^2$ is the variance of the useful subset ($H_1$), $\sigma_0^2$ is the variance of the noise subset ($H_0$), and $p$ is the probability that an element of the classification set belong to the useful subset ($H_1$).

**15.** Method for under-parameterizing the channel estimate according to claim 12 when it depends on claim 9, **characterized in that**:

- the classification variable ($d_{m,w}$) is obtained summing up the square module of $NS$ corresponding elements upon the $NS$ sequential whitened set ($\mathbf{Z}_{LS}$);
- the dimension of the classification set is $M \times W$;
- said statistical distribution is the Erlang distribution;
- said mathematical expression which minimizes the probability of uncorrect classification is the following:

$$S\left(\sigma_0^2, \sigma_1^2, p\right) = \left(\frac{1}{\sigma_0^2} - \frac{1}{\sigma_1^2}\right)^{-1} ln\left(\left(\frac{\sigma_1^2}{\sigma_0^2}\right)^{NS} \cdot \frac{1-p}{p}\right)$$

where: $S$ is said discriminating threshold, $\sigma_1^2$ is the variance of the useful subset, $\sigma_0^2$ is the variance of the noise subset, and $p$ is the probability that an element of the classification set belong to the useful subset ($H_1$).

**16.** Method for under-parameterizing the channel estimate according to claim 12 when it depends on claim 9, **characterized in that**:

- the classification variable ($d_{w,ns}$) is obtained summing upon the $NS$ whitened set ($\mathbf{Z}_{LS}$) the square module of elements relevant to the M antennas at the same discrete time instants;
- the dimension of the classification set is $W \times NS$;
- said statistical distribution is the Erlang distribution;
- said mathematical expression which minimizes the probability of uncorrect classification is the following:

$$S\left(\sigma_0^2, \sigma_1^2, p\right) = \left(\frac{1}{\sigma_0^2} - \frac{1}{\sigma_1^2}\right)^{-1} ln\left(\left(\frac{\sigma_1^2}{\sigma_0^2}\right)^M \cdot \frac{1-p}{p}\right)$$

where: $S$ is said discriminating threshold, $\sigma_1^2$ is the variance of the useful subset, $\sigma_0^2$ is the variance of the noise subset, and $p$ is the probability that an element of the classification set belong to the useful subset ($H_1$).

**17.** Method for under-parameterizing the channel estimate according to claim 12 when it depends on claim 9, **characterized in that**:

- the classification variable ($d_w$) is obtained summing up the square module of corresponding elements upon $NS$ sequential whitened set ($\mathbf{Z}_{LS}$), and still summing up the resulting elements relevant to the $M$ antennas at the same discrete time instants;
- the dimension of the classification set is $W$;
- said statistical distribution is the Erlang distribution;
- said mathematical expression which minimizes the probability of uncorrect classification is the following:

$$S\left(\sigma_0^2, \sigma_1^2, p\right) = \left(\frac{1}{\sigma_0^2} - \frac{1}{\sigma_1^2}\right)^{-1} ln\left(\left(\frac{\sigma_1^2}{\sigma_0^2}\right)^{M \times NS} \cdot \frac{1-p}{p}\right)$$

where: $S$ is said discriminating threshold, $\sigma_1^2$ is the variance of the useful subset, $\sigma_0^2$ is the variance of the noise subset, and $p$ is the probability that an element of the classification set belong to the useful subset ($H_1$).

**18.** Method for under-parameterizing the channel estimate according to any claim from 12 to 17, **characterized in that** said recursive estimate at step d) includes the following sub-steps of:

d1) sorting by decreasing absolute values the elements of the classification set, tabled in association with their positional indexes inside the original set;
d2) multiplying said initial probability ($p_{in}$) by the dimension of the classification set obtaining the initial dimension ($L$) of the useful subset ($H_1$) which includes a number of higher sequential elements of the sorted set equal to said initial dimension ($L$);
d3) calculating the initial dimension of the complementary noise subset ($H_0$) including the remaining sequential elements of the sorted set;
d4) estimating the variance ($\sigma_1^2, \sigma_0^2$) of the useful and noise subset ($H_1, H_0$) by the respective dimensions;
d5) calculating said mathematical expression for obtaining a value of said discriminating threshold ($S$);
d6) classifying the elements of the sorted set taking as useful the elements whose squared module is greater than the threshold ($S$) and noise the others;
d7) recalculating the dimensions of the useful and noise sorted set;
d8) comparing the new dimension ($L$) of the useful subset ($H_1$) with the preceding one and stopping the classification if the two values are near the same, otherwise calculating a new probability ($p$) that an element of the sorted set belong to the useful subset ($H_1$) and repeating the sub-steps from d4) to d8) cyclically until the end condition is met;
d9) addressing the elements of the full-dimensional space-time channel matrix ($\mathbf{H}_{LS}$) to be considered as noise by the corresponding tabled positional indexes.

**19.** Method for under-parameterizing the channel estimate according to any claim from 12 to 18, **characterized in that** it further includes the following sub-steps of:

- subtracting from the variance ($\sigma_1^2$) of the useful subset ($H_1$) the squared value of said discriminating threshold $S$;
- calculating the probability $p$ that an element of the sorted set belongs to the useful subset ($H_1$) by the following expression:

$$p = \frac{\dfrac{L}{L_{FD}} \cdot e^{-\frac{S^2}{2\sigma_0^2}}}{e^{-\frac{S^2}{2\sigma_1^2}} - e^{-\frac{S^2}{2\sigma_0^2}}}$$

where: $L$ is the dimension of the useful set ($H_1$); $L_{FD}$ is the dimension of the classification set; $\sigma_1^2$ and $\sigma_0^2$ are the variance respectively of the useful and noise subset ($H_1, H_0$).

**20.** Method for under-parameterizing the channel estimate according to one of the preceding claims, **characterized in that** the rank of the whitened set ($\mathbf{Z}_{LS}$) is reduced before the classification step d).

**21.** Radiomobile Base Station receiver connected to a set of $M$ antennas and carrying out the under-parameterization method of the claim 1, including:

a) channel estimation means (LS-CHEST, MID) for estimating the elements of a full-dimensional space-time channel model settled as a memory matrix table ($\mathbf{H}_{LS}$) including the $W$ most significant samples of the channel impulse response relevant to the M links insisting on an assigned carrier between one or more simultaneously active mobile stations and the $M$-antennas;
b) noise estimation means (SPn-ES) for estimating a spatial noise covariance matrix ($\mathbf{R}_{ns}$) from the residual of the channel estimation, **characterized in that** further includes:
c) filtering means (WST) arranged to use the spatial noise covariance matrix ($\mathbf{R}_{ns}$) for filtering said full-dimensional space-time channel matrix ($\mathbf{H}_{LS}$) making spatially uncorrelated, or spatially whitened, the noise on the various channels, in order to describe the elements of said full-dimensional space-time channel matrix ($\mathbf{H}_{LS}$) by means of a relevant statistical distribution of the amplitudes;
d) classification means (SORTER, CLASS, pdf-STIM, ADAPT-TRSH) for dynamically classifying as useful ($H_1$) or noise ($H_0$) the elements of the whitened set ($\mathbf{Z}$) using a discriminating threshold ($S$) statistically estimated;
e) masking means (MASK, BAND-MASKING) generating a mask matrix ($\mathbf{M}_{ST}$, $\mathbf{M}_{STB}$) for zeroing the non-useful elements of the full-dimensional space-time channel matrix ($\mathbf{H}_{LS}$) corresponding to the elements classified as noise in the whitened set ($\mathbf{Z}$);
f) data detecting means (SIGN-1,....M, ZF-BLE DATA DETECTOR) arranged for using the masked space-time channel matrix ($\mathbf{H}_{STB}$) for estimating the transmitted data.

**22.** Radiomobile Base Station receiver according to claim 21, **characterized in that** said filtering means (WST) is arranged for temporal filtering said full-dimensional space-time channel matrix ($\mathbf{H}_{LS}$) by means of an autocorrelation matrix of one or more uncorrelated training sequences assigned to one or more users one to one.

**23.** Radiomobile Base Station receiver according to claim 21 or 22, **characterized in that** it includes merging means (MERGING) acting on said mask matrix ($\mathbf{M}_{ST}$) for zeroing a column as a whole if the number of corresponding column elements classified as useful is equal or less than a fixed percentage depending on the distance between adjacent antennas, obtaining a band-mask matrix ($\mathbf{M}_{STB}$).

**24.** Radiomobile Base Station receiver according to the preceding claim, **characterized in that** said merging means (MERGING) acts on said mask matrix ($\mathbf{M}_{ST}$) in order to unmask ($\mathbf{M}_{STB}$) all the elements relevant to sample-times immediately preceding and following an element classified as useful, in order to match those channels introducing temporal correlation between adjacent impulses of the channel responses and neutralize possible unsynchronizations.

25. Radiomobile Base Station receiver according to any claim from 21 to 24, **characterized in that** said classification means (SORTER, CLASS, pdf-STIM, ADAPT-TRSH) operates recursively for estimating said discriminating threshold ($S$) and the statistical parameters ($\sigma_1^2$, $\sigma_0^2$, $p$) the elements of whitened set belong to the useful or noise subset, starting from an arbitrarily assigned initial probability ($p_{in}$) that an element of the whitened set ($\mathbf{Z}$) belong to the useful subset ($H_1$).

26. Radiomobile Base Station receiver according to any claim from 21 to 25, **characterized in that** cascaded to said filtering means (WST) it further includes means (RR) for reducing the rank of said whitened set ($\mathbf{Z}$).

27. Radiomobile Base Station receiver according to any claim from 21 to 26, **characterized in that** said noise estimation means (SPn-ES) re-estimates the spatial noise covariance matrix ($\mathbf{R}_{ns}'$) by means of the masked space-time channel matrix ($\mathbf{H}_{STB}$).

28. Radiomobile Base Station receiver according to the preceding claim when it depends on claim 23, **characterized in that** said data detecting means (ZF-BLE DATA DETECTOR) includes $M$ convolutional modules (SIGN-1, ...., SIGN-M) relevant to as many incoming band-masked sub-matrixes ($\mathbf{H}_{STB}^{(m)}$), the $m^{th}$ sub-matrix being associated to the estimates of $K$ users originated from an $m^{th}$ antenna, for generating an overall signature matrix ($\mathbf{A}_{STB}$) having a generalized band structure suitable for joint detecting $K$ data bursts transmitted from $K$ simultaneously active users.

29. Radiomobile Base Station receiver according to the preceding claim, **characterized in that** each convolutional module (SIGN-1, ...., SIGN-M) includes as many replicas of the convolutional means (CONV-1, ..., CONV-N) as the N data chips of the transmission burst.

30. Radiomobile Base Station receiver according to the preceding claim, **characterized in that** that each replica of the convolutional means (CONV-1, ..., CONV-N) performs the convolution between the $W$ estimates of the $k^{th}$ active user stored in said incoming band-masked sub-matrix ($\mathbf{H}_{STB}^{(m)}$) and a $k^{th}$ spreading sequence ($\mathbf{c}_k$) belonging to $K$ orthogonal spreading sequences assigned to the users one-to-one, obtaining a signature vector ($\mathbf{b}^{(1,m)}, \mathbf{b}^{(2,m)}, \cdots, \mathbf{b}^{(K,m)}$) having the same band structure as the masked space-time channel matrix ($\mathbf{H}_{STB}$) relevant to said user.

# Maximum parsimony principle

## Trade-off between under-parameterization distortion and variance of the estimate

$$\left\|\mathbf{H} - \hat{\mathbf{H}}\right\|^2 \Big/ \left\|\mathbf{H}\right\|^2$$

**Fig.1**

EP 1 300 999 A1

# CHANNEL MODEL (COST 259)
## Multipath Fading Channel

**Fig.2**

**Fig.3**

**Fig.4**

# COST-259 Channel Typologies

| Environments | Time dispersion | Angle dispersion |
|---|---|---|
| GTU - Generalized Typical Urban | + | - |
| GBU - Generalized Bad Urban | + | + |
| GRA - Generalized Rural Area | - | - |
| GHT - Generalized Hill Terrain | - | + |

# PDA (Power Delay Angle) Diagrams

## Fig.5

# Channel matrix for single user and *M* antennas

$$H_{LS} = (Z_{LS})$$

| | |
|---|---|
| $(z_{LS1})$ | $h_{LS1}$ |
| $(z_{LS2})$ | $h_{LS2}$ |
| ..... | $h_{m,w}$ $(z_{m,w})$ |
| $(z_{LSM})$ | $h_{LSM}$ |

$M$

$t$

$\theta$

$W$

## Fig.6

$(Z_{STB}$ = Band Masked $Z_{LS})$

$H_{STB}$ = Band Masked $H_{LS}$

antennas

1
2

$M$

$M$

$W$

☐ Non-zero elements

☐ Zero elements

## Fig.7

# COST-259 Channel Typologies

| Environments | Time dispersion | Angle dispersion |
|---|---|---|
| GTU - Generalized Typical Urban | + | - |
| GBU - Generalized Bad Urban | + | + |
| GRA - Generalized Rural Area | - | - |
| GHT - Generalized Hill Terrain | - | + |

# BAND-MASKED CHANNELS

**Fig.8**

# Energy on the *M* antennas

$|h_{LSi}|^2$

antennas

1
2
⋮
$M = 8$

time *i*

## Fig.9

# $M_{ST}$ = Space-Time Mask

a | b | c | d | e | f

antennas

1
2
3
4
5
6
7
8

time

■ 1elements

□ 0 elements

## Fig.7a

# $M_{STB}$ = Band Mask

antennas

1
2
3
4
5
6
7
8

time

■ Non-zero elements

□ Zero elements

## Fig.7b

# CHANNEL RANK DISTRIBUTION FUNCTIONS

## Fig.10

# DISTRIBUTION FUNCTIONS OF USEFUL CHANNEL CHIPS

## Fig.11

## DEGREES OF FREEDOM DISTRIBUTION FUNCTIONS (Fig.10)

**Fig.12**

## DEGREES OF FREEDOM DISTRIBUTION FUNCTIONS (Fig.11)

**Fig.13**

# COMPARISON AMONG NORMALIZED MSE
# OF VARIOUS CHANNEL EXTIMATORS

**Fig.14**

**Fig.15**

# COMPARISON AMONG NORMALIZED MSE
# OF VARIOUS CHANNEL EXTIMATORS

Fig.16

Fig.17

# Hybrid TD-CDMA - Uplink transmission burst

## Fig.18

EP 1 300 999 A1

Channel model for single $k^{th}$ user and single $m^{th}$ antenna

$$n_n^{(m)}$$

$$x_n^{(k)} \longrightarrow \boxed{\mathbf{h}^{(k,m)}} \longrightarrow \oplus \longrightarrow y_n^{(k,m)}$$

$$\overset{W}{\longleftrightarrow}$$

**Fig.19**

Channel model for $K$ users and single $m^{th}$ antenna

$$\longrightarrow \mathbf{t}$$

user 1 $x_n^{(1)} \longrightarrow \boxed{\mathbf{h}^{(1,m)}}$

$\vdots$

$$n_n^{(m)}$$

user 2 $x_n^{(k)} \longrightarrow \boxed{\mathbf{h}^{(k,m)}} \longrightarrow \oplus \longrightarrow \oplus \longrightarrow y_n^{(K,m)}$

$\vdots$

user K $x_n^{(K)} \longrightarrow \boxed{\mathbf{h}^{(K,m)}}$

$$\overset{W}{\longleftrightarrow}$$

**Fig.20**

Channel vector for $K$ users and single $m^{th}$ antenna

$$\mathbf{h}^{(k,m)} = \boxed{\mathbf{h}^{(1,m)} \mid \mathbf{h}^{(2,m)} \mid \dots \mid \mathbf{h}^{(K,m)}}$$

$$(1 \times KW) \quad \overset{\longrightarrow}{\longleftarrow} \quad W \text{ (max. channel time dispertion)}$$

**Fig.21**

# Midamble matrix for *K* users and single *$m^{th}$* antenna

$$\mathbf{x}^{(k)} = \left\{ x_n^{(k)} \right\}_{n=1}^{Nmid}$$

Training sequence *k-th* user

$$\mathbf{X} = \atop (KW \times Nmid)$$

$W$    $\mathbf{X}^{(1)}$

$\mathbf{X}^{(2)}$    $KW$

$\mathbf{X}^{(K)}$

*Nmid* (midamble length)

# Fig.22

# Channel estimate: model for $K$ users and $M$ antennas

Signal received on the antenna array :

$$\left[\mathbf{y}^{(1)} .... \mathbf{y}^{(M)}\right]^{T} = \left[\mathbf{h}^{(1)} .... \mathbf{h}^{(M)}\right]^{T} \begin{bmatrix} \mathbf{X}^{(1)} \\ \vdots \\ \mathbf{X}^{(K)} \end{bmatrix} + \left[\mathbf{n}^{(1)} .... \mathbf{n}^{(M)}\right]^{T} \quad \Longrightarrow \quad \mathbf{Y} = \mathbf{HX} + \mathbf{N}$$

$$\underbrace{\qquad}_{\substack{\mathbf{Y} \\ (M \times Nmid)}} \quad \underbrace{\qquad}_{\substack{\mathbf{H} \\ (M \times KW)}} \quad \underbrace{\qquad}_{\substack{\mathbf{X} \\ (KW \times Nmid)}} \quad \underbrace{\qquad}_{\substack{\mathbf{N} \\ (M \times Nmid)}}$$

**Fig.23**

Estimating parameters:

Multi-user space-time channel matrix

$$\mathbf{H} = \boxed{\begin{array}{c|c|c|c} \mathbf{H}^{(1)} & \mathbf{H}^{(2)} & ..... & \mathbf{H}^{(K)} \end{array}} \updownarrow M$$

Spatial noise covariance matrix

$$\mathbf{R}_{ns} = \frac{1}{Nmid} E\left[\mathbf{NN}^{H}\right]$$

**Fig.24**

EP 1 300 999 A1

## POSSIBLE DISTRIBUTIONS FOR NOISE AND USEFUL SAMPLES

Legend: $R(z|H_0)$, $R(z|H_1)$

**Fig.25**

## CLASSIFICATION THRESHOLD FOR RAYLEIGH MIXTURE

Legend: $f(z)$, $(1-p)R(z|H_0)$, $pR(z|H_1)$

$\sigma_1^2 = 6; \quad \sigma_n^2 = 1; \quad p = 15\%$

**Fig.26**

POLARIZATION OF THE ESTIMATED VARIANCE OF THE OVER
THRESHOLD SAMPLES FOR THE TWO CLASSIFIERS

**Fig.27**

POLARIZATION OF THE ESTIMATED VARIANCE OF THE UNDER
THRESHOLD SAMPLES FOR THE TWO CLASSIFIERS

**Fig.28**

## POLARIZATION OF THE ESTIMATE OF OVER THRESHOLD CLASSIFICATION PROBABILITY p FOR THE TWO CLASSIFIERS

**Fig.29**

## POLARIZATION OF THE THRESHOLD S ESTIMATE FOR THE TWO CLASSIFIERS

**Fig.30**

## MSE OF THE ESTIMATE vs TRHESHOLD $S$ FOR VARYING DISTRIBUTION PARAMETERS: $\sigma_0^2$, $\sigma_h^2$, $p$. (Superimposed are the optimum threshold $S_{MSE}$ (marker ☆) and the LRT threshold from estimated pdf parameters $S(\hat{\sigma}_0^2, \hat{\sigma}_h^2, p)$ (marker ◯)).

Fig.31

OPTIMUM ENERGY THRESHOLD $\eta$ FROM THE $S_{MSE}$ TRHESHOLD FOR VARYING pdf PARAMETERS $p$, $\sigma_h^2/\sigma_0^2$.

Fig.32

EP 1 300 999 A1

COMPARATIVE PERFORMANCE OF VARIOUS TM ESTIMATE FOR GTU CHANNEL AND SPATIALLY UNCORRELATED NOISE

**Fig.33**

EP 1 300 999 A1

COMPARATIVE PERFORMANCE OF VARIOUS TM ESTIMATE FOR
GTU CHANNEL AND SPATIALLY CORRELATED NOISE

fixed threshold

$\eta = 70\%$

80%

90%

95%

LS+TM fixed threshold
LS+TM estimated threshold
RR+TM
LS

MSE

SNR

**Fig.34**

EP 1 300 999 A1

# 3-th VARIANT (extended-multislot & extended-antennas)

## Dimension of the resulting statistical set = $M \times W \times NS$; pdf = Rayleigh

time slots $ns$

antennas

$m$

NS

ns

2

1

$w$

samples

1

$z_{m,w,ns}$

## Fig.35a

# 4-th VARIANT (compact-multislot & extended-antennas)

## Dimension of the resulting statistical set = $M \times W$; pdf = Erlang

time slots $ns$

antennas

$m$

NS

NS

ns

2

1

ns

2

samples

1

$w$

1

## Fig.35b

$$d_{m,w} = \sum_{ns=1}^{NS} z^2_{m,w,ns}$$

## 5-th VARIANT  (extended-multislot & compact-antennas)

### Dimension of the resulting statistical set = $W \times NS$;   pdf = Erlang

$$d_{w,ns} = \sum_{m=1}^{M} z_{m,w,ns}^2$$

# Fig.36a

## 6-th VARIANT  (compact-multislot & compact-antennas)

### Dimension of the resulting statistical set = $W$;   pdf = Erlang

$$d_w = \sum_{m=1}^{M} \sum_{ns=1}^{NS} z_{m,w,ns}^2$$

# Fig.36b

# DISCRETE-TIME MODEL OF A CDMA SYSTEM EXPLOITING ARRAYS OF M-ANTENNAS CONNECTED TO THE BASE STATION RECEIVERS

$d_n^{(1)}$      $c_n^{(1)}$      $h_n^{(1,M)}$      $s_n^{(1,M)}$ ADU$^{(M)}$      $s_n^{(M)}$ ADN$^{(M)}$    SBM-M

$d_n^{(1)}$      $c_n^{(1)}$      $h_n^{(1,m)}$      $s_n^{(1,m)}$ ADU$^{(m)}$      $s_n^{(m)}$ ADN$^{(m)}$     $e_n^{(M)}$

$d_n^{(1)}$   Q     $c_n^{(1)}$      $h_n^{(1,2)}$   $s_n^{(1,2)}$    $s_n^{(2)}$     $e_n^{(m)}$

ADU$^{(2)}$    ADN$^{(2)}$

$d_n^{(1)}$   Q     $c_n^{(1)}$      $h_n^{(1,1)}$    $s_n^{(1,1)}$     $e_n^{(2)}$

DATA DETECTOR    $\hat{d}_n^{(1)}$

$n_n^{(1)}$

$d_n^{(2)}$   Q     $c_n^{(2)}$      $h_n^{(2,1)}$    $s_n^{(2,1)}$    $s_n^{(1)}$     $e_n^{(1)}$

ADU$^{(1)}$    ADN$^{(1)}$

$H_{LS}^{(1)}$

$\hat{d}_n^{(K)}$

$d_n^{(K)}$   Q     $c_n^{(K)}$      $h_n^{(K,1)}$    $s_n^{(K,1)}$

SBM-1

## Fig.37

EP 1 300 999 A1

# STRUCTURE OF THE OVERALL SIGNATURE MATRIX $A_{STB}$ AS RESULTING FROM THE CONVOLUTION WITH A BAND MASKED CHANNEL

**Fig.38b**

**Fig.38a**

$$B^{(m)} = \begin{array}{|c|c|c|c|} \hline b^{(1,m)} & b^{(2,m)} & \cdots & b^{(K,m)} \\ \hline \end{array}$$

**Fig.38d**

$$B^{(m)}_{STB} = \begin{array}{|c|c|c|} \hline b^{(1,m)}_{STB} & b^{(2,m)}_{STB} & b^{(K,m)}_{STB} \\ \hline \end{array}$$

**Fig.38c**

EP 1 300 999 A1

# BASE STATION RECEIVER

## (Reduced-complexity S-T Channel estimator and Data Detector)

**Fig.39**

EP 1 300 999 A1

PERFORMANCE OF THE DETECTOR FOR GTU CHANNEL
AND SPATIALLY UNCORRELATED NOISE

Fig.40

EP 1 300 999 A1

PERFORMANCE OF THE DETECTOR FOR GTU CHANNEL
AND SPATIALLY CORRELATED NOISE

Fig.41

EP 1 300 999 A1

EP 1 300 999 A1

**European Patent Office**

# DECLARATION

Application Number

which under Rule 45 of the European Patent Convention shall be considered, for the purposes of subsequent proceedings, as the European search report

EP 01 83 0632

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| Reason: | H04L25/02 |

A meaningful search is not possible (Rule 45 EPC). The language of the claims is so obscure, and the claims contain so many linguistic errors, that it is impossible to determine the subject matter for which protection is sought. Furthermore, it is not possible, for the same reasons, to dertermine the nature of the purported invention on the basis of the description.

The applicant's attention is drawn to the fact that a search may be carried out during examination following a declaration of no search under Rule 45 EPC, should the problems which led to the declaration being issued be overcome (see EPC Guideline C-VI, 8.5).

--- 

----- 

| Place of search | Date | Examiner |
|---|---|---|
| THE HAGUE | 11 March 2002 | Scriven, P |

EPO FORM 1504 (P04C37)